(19) Europäisches Patentamt
European Patent Office
Office européen des brevets

(11) EP 1 858 971 B1

(12) EUROPEAN PATENT SPECIFICATION

(45) Date of publication and mention of the grant of the patent:
**24.04.2019 Bulletin 2019/17**

(21) Application number: **06748412.1**

(22) Date of filing: **15.03.2006**

(51) Int Cl.:
*C08L 23/00* (2006.01) *C08F 297/08* (2006.01)
*C08F 4/646* (2006.01) *C08F 2/38* (2006.01)
*C08F 210/16* (2006.01) *C08L 23/06* (2006.01)
*C08L 53/00* (2006.01)

(86) International application number:
**PCT/US2006/009559**

(87) International publication number:
**WO 2006/101999 (28.09.2006 Gazette 2006/39)**

# (54) RHEOLOGY MODIFICATION OF INTERPOLYMERS OF ETHYLENE/ALPHA-OLEFINS AND ARTICLES MADE THEREFROM

RHEOLOGIEÄNDERUNG VON INTERPOLYMEREN VON ETHYLEN/ALPHA-OLEFINEN UND DARAUS HERGESTELLTE ARTIKEL

MODIFICATION DE LA RHEOLOGIE D'INTERPOLYMERES D'ETHYLENE/ALPHA-OLEFINES ET PARTICULES PRODUITES A PARTIR DE CEUX-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 PCT/US2005/008917**
**16.09.2005 US 718036 P**

(43) Date of publication of application:
**28.11.2007 Bulletin 2007/48**

(73) Proprietor: **Dow Global Technologies LLC**
**Midland, MI 48674 (US)**

(72) Inventors:
- **CHEUNG, Yunwa Wilson**
**Pittsford, NY 14534 (US)**
- **MARTINEZ, Felipe**
**Houston, Texas 77082 (US)**
- **GUPTA, Pankaj P.**
**Lake Jackson, Texas 77566 (US)**

(74) Representative: **V.O.**
**P.O. Box 87930**
**2508 DH Den Haag (NL)**

(56) References cited:
**EP-A- 1 375 585**
**WO-A-97/12919**
**WO-A-03/040095**
**WO-A-2004/031292**
**WO-A-2005/090425**
**WO-A-2005/090426**
**WO-A-2005/090427**
**US-A- 6 124 400**
**US-A1- 2003 194 575**
**US-B1- 6 187 424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 858 971 B1

## Description

### FIELD OF THE INVENTION

This invention relates to rheology modification of ethylene/a-olefin interpolymers by physical blending and articles comprising such blends. More in particular, the invention relates to a polymer blend, and to a profile, a gasket, a foam and a thermoformed article comprising the blend of the invention.

### BACKGROUND OF THE INVENTION

Polymers and numerous additives are typically compounded into formulations which are then totally cross-linked for enhanced strength properties of the finished article. The starting polymer, prior to cross-linking, must have adequate performance properties such that it may be formulated or compounded with various additives and still maintain processability. For example, in a wire and cable coating operation, the composition must have "green strength", also known as "melt strength", to remain on the wire after coating, and not sag or deform on the wire until the composition is cured. Otherwise the wire will have thin spots and the insulating value of the composition is lost. The composition must also undergo a final cure step and achieve good physical properties, such as tensile strength, elongation, and 100% modulus (stress at 100% strain). Typical curing occurs through use of peroxide or irradiation, and for polyethylene in general, the curing through crosslinking phenomenon is well documented (see, for example, Radiation Effects in Materials, A. Charlesby, editor, Pergamon Press, 1960). Polyethylene, especially heterogeneous linear low density polyethylene (LLDPE), when exposed to peroxide and/or radiation under proper conditions, forms gels as the molecular weight builds.

When using a profile extrusion process, a manufacturer usually desires an elastomer that "shear thins" or decreases in viscosity with applied shear forces. Because pressure drop across an extruder die and amperage required to turn an extruder screw are directly related to elastomer viscosity, a reduction in elastomer viscosity due to shear thinning necessarily leads to a lower pressure drop and a lower amperage requirement. The manufacturer can then increase extruder screw speed until reaching a limit imposed by amperage or pressure drop. The increased screw speed translates to an increase in extruder output. An increase in shear thinning also delays onset of surface melt fracture, a phenomenon that otherwise limits extruder output. Surface melt fracture is usually considered a quality defect and manufacturers typically limit extruder output and suffer a productivity loss to reach a rate of production that substantially eliminates surface melt fracture.

When producing profile extrusions with thin walls and a complex geometry, a manufacturer looks for an elastomer with high melt strength ("MS") and rapid solidification upon cooling in addition to good shear thinning behavior. A combination of a high MS and rapid solidification upon cooling allows a part to be extruded hot and cooled below the elastomer's solidification temperature before gravity and extrusion forces lead to shape distortion. Ultimately, for broad market acceptance, a finished part should also retain its shape despite short term exposure to an elevated temperature during processing, shipping or eventual use.

In spite of the advances made in the art, there is a continuing need for a polyolefin composition that has a relatively high melt strength and also exhibits the requisite shear shinning and processibility for many applications.

### SUMMARY OF INVENTION

The aforementioned needs are met by various aspects of the invention. In some embodiments, provided herein are polymer blends comprising at least one ethylene/a-olefin interpolymer and at least one branched polyolefin with a branching index of less than 1. The ethylene/a-olefin interpolymer used in the polymer blends has one or more of the following characterstics: it

(a) has a Mw/Mn from 1.7 to 3.5, at least one melting point, Tm, in °C (degrees Celsius), and a density, d, in g/cm$^3$ (grams/cubic centimeter), wherein the numerical values of Tm and d correspond to the relationship:

$$T_m > -2002.9 + 4538.5(d) - 2422.2(d)^2,$$

or

(b) has a Mw/Mn from 1.7 to 3.5, and is characterized by a heat of fusion, ΔH in J/g, and a delta quantity, ΔT, in °C (degrees Celsius) defined as the temperature difference between the tallest DSC peak and the tallest CRYSTAF peak, wherein the numerical values of ΔT and ΔH have the following relationships:

$\Delta T > -0.1299(\Delta H) + 62.81$ for $\Delta H$ greater than zero and up to 130 J/g,
$\Delta T \geq 48°C$ for $\Delta H$ greater than 130 J/g , wherein the CRYSTAF peak is determined using at least 5 percent of the cumulative polymer, and if less than 5 percent of the polymer has an identifiable CRYSTAF peak, then the CRYSTAF temperature is 30°C; or

(c) is characterized by an elastic recovery, Re, in percent at 300 percent strain and 1 cycle measured with a compression-molded film of the ethylene/α-olefin interpolymer, and has a density, d, in g/cm$^3$ (grams/cubic centimeter), wherein the numerical values of Re and d satisfy the following relationship when the ethylene/a-olefin interpolymer is substantially free of a cross-linked phase:

$$Re > 1481 - 1629(d);$$

or
(d) has a comonomer content of the TREF fraction which elutes between 40°C and 130°C greater than or equal to the quantity (-0.2013)T+21.07 where T is the numerical value of the peak elution temperature of the TREF fraction measured in °C; or
(e) is characterized by a storage modulus at 25°C, G'(25°C), and a storage modulus at 100°C, G'(100°C), wherein the ratio of G'(25°C) to G'(100°C) is from 1:1 to 10:1.

In one embodiment, the ethylene/a-olefin interpolymer has a Mw/Mn from 1.7 to 3.5, at least one melting point, Tm, in °C (degrees Celsius), and a density, d, in g/cm$^3$ (grams/cubic centimeter), wherein the numerical values of Tm and d correspond to the relationship:

$$Tm \geq 858.91 - 1825.3(d) + 1112.8(d)^2.$$

In another embodiment, the ethylene/a-olefin interpolymer has a Mw/Mn from 1.7 to 3.5 and is characterized by a heat of fusion, ΔH in J/g, and a delta quantity, ΔT, in °C (degrees Celsius) defined as the temperature difference between the tallest DSC peak and the tallest CRYSTAF peak, wherein the numerical values of ΔT and ΔH have the following relationships:

$\Delta T > -0.1299(\Delta H) + 62.81$ for $\Delta H$ greater than zero and up to 130 J/g,
$\Delta T \geq 48°C$ for $\Delta H$ greater than 130 J/g ,

wherein the CRYSTAF peak is determined using at least 5 percent of the cumulative polymer, and if less than 5 percent of the polymer has an identifiable CRYSTAF peak, then the CRYSTAF temperature is 30°C.

In one embodiment, the ethylene/a-olefin interpolymer is characterized by an elastic recovery, Re, in percent at 300 percent strain and 1 cycle measured with a compression-molded film of the ethylene/a-olefin interpolymer, and has a density, d, in g/cm$^3$ (grams/cubic centimeter), wherein the numerical values of Re and d satisfy the following relationship when the ethylene/a-olefin interpolymer is substantially free of a cross-linked phase: Re >1481-1629(d), Re >1491-1629(d), Re >1501-1629(d), or Re >1511-1629(d).

In some embodiments, the polymer blend comprises at least one ethylene/a-olefin interpolymer and at least one branched polyolefin with a branching index of less than 1, wherein the ethylene/a-olefin interpolymer has:

(a) at least one molecular fraction which elutes between 40°C and 130°C when fractionated using TREF, characterized in that the fraction has a block index of at least 0.5 and up to 1 and a molecular weight distribution, Mw/Mn, greater than 1.3 or

(b) an average block index greater than zero and up to 1.0 and a molecular weight distribution, Mw/Mn, greater than 1.3.

In other embodiments, the ethylene/a-olefin interpolymer has a molecular fraction which elutes between 40°C and 130°C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and a melt index, density, and molar comonomer content (based on the whole polymer) within 10 percent of that of the ethylene/a-olefin interpolymer.

In some embodiments, the ethylene/a-olefin interpolymer is characterized by a storage modulus at 25°C,

G'(25°C), and a storage modulus at 100°C, G'(100°C), wherein the ratio of G'(25°C) to G'(100°C) is from 1:1 to 10:1.

In one embodiment, the $\alpha$-olefin is styrene, propylene, 1-butene, 1-hexene, 1-octene, 4-methyl-1-pentene, norbornene, 1-decene, 1,5-hexadiene, or a combination thereof.

In some embodiments, the ethylene/a-olefin interpolymer has a melt index in the range of 0.1 to 2000 g/10 minutes, 1 to 1500 g/10 minutes, 2 to 1000 g/10 minutes, or 5 to 500 g/10 minutes measured according to ASTM D-1238, Condition 190°C/2.16 kg.

In one embodiment, the ethylene/a-olefin interpolymer is present in the range from 5% to 95%, from 50% to 90%, or from 70% to 90% by weight of the total composition.

In some embodiments, the polyolefin in the polymer blends provided herein is a high melt strength polypropylene or an impact modified polypropylene. In one embodiment, the polypropylene has a melt strength of at least 15 cN or at least 25 cN.

In one embodiment, the polyolefin is a polyethylene, such as a low density polyethylene. In another embodiment, The low density polyethyelene ischaracterized by a melt strength, MS, and a melt index, $I_2$, wherein the melt strength and melt index satisfies the following relationship: MS > 24.1 - 18.0*$\log_{10}(I_2)$. In another embodiment, the low density polyethyelene has a melt strength of at least 15 cN or at least 25 cN.

In some embodiments, the polymer blend further comprises at least one additive. The additives for use in the polymer blends include, but are not limited to, a slip agent, an anti-blocking agent, a plasticizer, an antioxidant, a UV stabilizer, a colorant or pigment, a filler, a lubricant, an antifogging agent, a flow aid, a coupling agent, a cross-linking agent, a nucleating agent, a surfactant, a solvent, a flame retardant, an antistatic agent, or a combination thereof.

Also provided are profiles, gaskets, foams, thermoformed articles comprising the polymer blend. The profiles and gaskets provided herein can be prepared by profile extrusion.

Further provided are methods of making an article, comprising blending an ethylene/a-olefin interpolymer with a branched polyolefin. The ethylene/a-olefin interpolymer used in the methods is described above and elsewhere herein.

Additional aspects of the invention and characteristics and properties of various embodiments of the invention become apparent with the following description.

## BRIEF DESCRIPTION OF THE DRAWINGS

Figure 1 shows the melting point/density relationship for the inventive polymers (represented by diamonds) as compared to traditional random copolymers (represented by circles) and Ziegler-Natta copolymers (represented by triangles).

Figure 2 shows plots of delta DSC-CRYSTAF as a function of DSC Melt Enthalpy for various polymers. The diamonds represent random ethylene/octene copolymers; the squares represent polymer examples 1-4; the triangles represent polymer examples 5-9; and the circles represent polymer examples 10-19. The "X" symbols represent polymer examples A*-F*.

Figure 3 shows the effect of density on elastic recovery for unoriented films comprising inventive interpolymers(represented by the squares and circles) and traditional copolymers (represented by the triangles which are various Dow AFFINITY® polymers). The squares represent inventive ethylene/butene copolymers; and the circles represent inventive ethylene/octene copolymers.

Figure 4 is a plot of octene content of TREF fractionated ethylene/ 1-octene copolymer fractions versus TREF elution temperature of the fraction for the polymer of Example 5 (represented by the circles) and Comparative Examples E* and F* (represented by the "X" symbols). The diamonds represent traditional random ethylene/octene copolymers.

Figure 5 is a plot of octene content of TREF fractionated ethylene/ 1-octene copolymer fractions versus TREF elution temperature of the fraction for the polymer of Example 5 (curve 1) and for Comparative Example F* (curve 2). The squares represent Example F*; and the triangles represent Example 5.

Figure 6 is a graph of the log of storage modulus as a function of temperature for comparative ethylene/1-octene copolymer (curve 2) and propylene/ ethylene- copolymer (curve 3) and for two ethylene/1-octene block copolymers of the invention made with differing quantities of chain shuttling agent (curves 1).

Figure 7 shows a plot of TMA (1mm) versus flex modulus for some inventive polymers (represented by the diamonds), as compared to some known polymers. The triangles represent various Dow VERSIFY® polymers; the circles represent various random ethylene/styrene copolymers; and the squares represent various Dow AFFINITY® polymers.

Figure 8 is a plot of melt strength as a function of melt index, $I_2$, for various ethylene polymers before rheology modification. In the figure, the tringles represent polymer of Example 11, the open squares represent polymer of Example 6, the circles represent AFFINITY® VP8770 polymer; and the filled squares represent ENGAGE®8100 polymer made by The Dow Chemicals Company.

Figure 9 shows plots obtained from melt strength measurements for polymer of Example 6, low density polyethylene (LDPE 662i), and blends thereof.
Figure 10 shows plots obtained from melt strength measurements for polymer of Example 6, low density polyethylene (LDPE 620), and blends thereof.
Figure 11 shows plots of crystallization peak temperature (represented by the triangles) and melting peak temperature (represented by the circles) as a function as the weight percent of LDPE 620 in a blend with polymer of Example 6.
Figure 12 shows plots of loss modulus, G", as a function of temperature for polymer of Example 6, LDPE 620, and blends thereof.
Figure 13 shows SEM micrographs for polymer of Example 6, LDPE 620, and blends thereof.
Figure 14 shows plots of viscosity as a function of temperature for polymer of Example 6, LDPE 620, and blends thereof.
Figure 15 shows plots of shear shinning behavior for polymer of Example 6, LDPE 620, and blends thereof.
Figure 16 shows plots of stress-strain behavior for polymer of Example 6, LDPE 620, and blends thereof.
Figure 17 shows plots of shear shinning behavior for polymer of Example 19a, a polypropylene (designed as "PF814"), and blends thereof.
Figure 18 shows plots of crystallization behavior for a polypropylene (designed as "PF814"), and its blends with polymer of Example 19a.
Figure 19 shows plots obtained from melt strength measurements for polymer of Example 19a, a polypropylene (designed as "PF814"), and blends thereof.
Figure 20 shows a plot of melt strength versus melt flow rate ("MFR"), I2, for polymer of Example 19a, a polypropylene (designed as "PF814"), and blends thereof.

In Figures 9-16:

LDPE 662i is represented by "$L^1$",
LDPE 620 is represented by "$L^2$",
A blend of 15% LDPE 622i/85% polymer 6 is represented by "1",
A blend of 30% LDPE 622i/70% polymer 6 is represented by "2",
A blend of 15% LDPE 620/85% polymer 6 is represented by "3",
A blend of 30% LDPE 620/70% polymer of Example 6 is represented by "4",
A blend of 50% LDPE 620/50% polymer of Example 6 represented by "5",
A blend of 70% LDPE 620/30% polymer of Example 6 is represented by "6", and

A blend of 85% LDPE 620/15% polymer of Example 6 is represented by "7".
In Figures 17-20:

PP PF814 is represented by "$P^1$",
A blend of 15% PP PF814 /85% polymer of Example 19a is represented by "8",
A blend of 30% PP PF814 /70% polymer of Example 19a is represented by "9",
A blend of 50% PP PF814 /50% polymer of Example 19a is represented by "10",
A blend of 70% PP PF814 /30% polymer of Example 19a is represented by "11", and
A blend of 85% PP PF814 /15% polymer of Example 19a is represented by "12".

## DETAILED DESCRIPTION OF THE INVENTION

### General Definitions

As used herein, the term "rheology modification" means change in melt rheology reflected as change in shear viscosity of a polymer as determined by dynamic mechanical spectroscopy. Preferably the melt strength and extensional viscosity strain hardening increase while maintaining the high shear viscosity (that is viscosity measured at a shear of 100 rad/sec by DMS) so that a polymer exhibits more resistance to stretching during elongation of molten polymer at low shear conditions (that is viscosity measured at a shear of 0.1 rad/sec by DMS) and does not sacrifice the output at high shear conditions.
"Polymer" means a polymeric compound prepared by polymerizing monomers, whether of the same or a different type. The generic term "polymer" embraces the terms "homopolymer," "copolymer," "terpolymer" as well as "interpolymer."
"Interpolymer" means a polymer prepared by the polymerization of at least two different types of monomers. The generic term "interpolymer" includes the term "copolymer" (which is usually employed to refer to a polymer prepared

from two different monomers) as well as the term "terpolymer" (which is usually employed to refer to a polymer prepared from three different types of monomers). It also encompasses polymers made by polymerizing four or more types of monomers.

The term "ethylene/α-olefin interpolymer" generally refers to polymers comprising ethylene and an α-olefin having 3 or more carbon atoms. Preferably, ethylene comprises the majority mole fraction of the whole polymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an α-olefin having 3 or more carbon atoms. For many ethylene/octene copolymers, the preferred composition comprises an ethylene content greater than 80 mole percent of the whole polymer and an octene content of from 10 to 15, preferably from 15 to 20 mole percent of the whole polymer. In some embodiments, the ethylene/a-olefin interpolymers do not include those produced in low yields or in a minor amount or as a by-product of a chemical process. While the ethylene/a-olefin interpolymers can be blended with one or more polymers, the as-produced ethylene/a-olefin interpolymers are substantially pure and often comprise a major component of the reaction product of a polymerization process.

The ethylene/a-olefin interpolymers comprise ethylene and one or more copolymerizable α-olefin comonomers in polymerized form, characterized by multiple blocks or segments of two or more polymerized monomer units differing in chemical or physical properties. That is, the ethylene/a-olefin interpolymers are block interpolymers, preferably multi-block interpolymers or copolymers. The terms "interpolymer" and copolymer" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than 95 weight percent, and preferably greater than 98 weight percent based on the weight of the polymer. In other words, the comonomer content (content of monomers other than ethylene) in the hard segments is less than 5 weight percent, and preferably less than 2 weight percent based on the weight of the polymer. In some embodiments, the hard segments comprises all or substantially all ethylene. "Soft" segments, on the other hand, refer to blocks of polymerized units in which the comonomer content (content of monomers other than ethylene) is greater than 5 weight percent, preferably greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can often be present in a block interpolymer from 1 weight percent to 99 weight percent of the total weight of the block interpolymer, preferably from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a concurrently filed U.S. Patent Application Serial No. 60/199,930, entitled "Ethylene/α-Olefin Block Interpolymers", filed on March 15, 2006, in the name of Colin L.P. Shan, Lonnie Hazlitt, et. al. and assigned to Dow Global Technologies Inc.

The term "crystalline" if employed, refers to a polymer that possesses a first order transition or crystalline melting

point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, $R^L$ and an upper limit, $R^U$, is disclosed, any number falling within the range is specifically disclosed. In particular, the following numbers within the range are specifically disclosed: $R=R^L+k*(R^U-R^L)$, wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Embodiments of the invention provide rheology modification of a new ethylene/a-olefin interpolymer by blending the interpolymer with at least one branched polyolefin. The melt strength of the interpolymer can be significantly increased by blending at least one branched polyolefin, such as low density polyethylene and high melt strength polypropylene. The polymer blends possess unique physical and mechanical properties that are suitable for making extruded or molded article for a variety of applications. The blends have a good balance among tensile strength, melt strength, and processibility. The blends also have a good combination of flexibility, heat resistance, elastic recovery, compression set and abrasion resistance.

## Ethylene/α-Olefin Interpolymers

The ethylene/α-olefin interpolymers used in embodiments of the invention (also referred to as "inventive interpolymer" or "inventive polymer") comprise ethylene and one or more copolymerizable α-olefin comonomers in polymerized form, characterized by multiple blocks or segments of two or more polymerized monomer units differing in chemical or physical properties (block interpolymer), preferably a multi-block copolymer. The ethylene/ α-olefin interpolymers are characterized by one or more of the aspects described as follows.

In one aspect, the ethylene/a-olefin interpolymers used in embodiments of the invention have a $M_w/M_n$ from 1.7 to 3.5 and at least one melting point, $T_m$, in °C (degrees Celsius) and density, d, in g/cm$^3$ (grams/cubic centimeter), wherein the numerical values of the variables correspond to the relationship:

$$T_m > -2002.9 + 4538.5(d) - 2422.2(d)^2,$$

and preferably

$$T_m \geq -6288.1 + 13141(d) - 6720.3(d)^2,$$

and more preferably

$$T_m \geq 858.91 - 1825.3(d) + 1112.8(d)^2.$$

Such melting point/density relationship is illustrated in Figure 1. Unlike the traditional random copolymers of ethylene/α-olefins whose melting points decrease with decreasing densities, the inventive interpolymers (represented

by diamonds) exhibit melting points substantially independent of the density, particularly when density is between 0.87 $g/cm^3$ (g/cc) to 0.95 $g/cm^3$ (g/cc). For example, the melting point of such polymers are in the range of 110 °C to 130 °C when density ranges from 0.875 $g/cm^3$ (g/cc) to 0.945 $g/cm^3$ (g/cc). In some embodiments, the melting point of such polymers are in the range of 115 °C to 125 °C when density ranges from 0.875 $g/cm^3$ (g/cc) to 0.945 $g/cm^3$ (g/cc).

In another aspect, the ethylene/a-olefin interpolymers comprise, in polymerized form, ethylene and one or more $\alpha$-olefins and are characterized by a $\Delta T$, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, $\Delta H$, and $\Delta T$ and $\Delta H$ satisfy the following relationships:

$$\Delta T > -0.1299(\Delta H) + 62.81,$$

and preferably

$$\Delta T \geq -0.1299(\Delta H) + 64.38,$$

and more preferably

$$\Delta T \geq -0.1299(\Delta H) + 65.95,$$

for $\Delta H$ up to 130 J/g. Moreover, $\Delta T$ is equal to or greater than 48 °C for $\Delta H$ greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30°C, and $\Delta H$ is the numerical value of the heat of fusion in J/g. More preferably, the highest CRYSTAF peak contains at least 10 percent of the cumulative polymer. Figure 2 shows plotted data for inventive polymers as well as comparative examples. Integrated peak areas and peak temperatures are calculated by the computerized drawing program supplied by the instrument maker. The diagonal line shown for the random ethylene octene comparative polymers corresponds to the equation $\Delta T = -0.1299 (\Delta H) + 62.81$.

In yet another aspect, the ethylene/a-olefin interpolymers have a molecular fraction which elutes between 40°C and 130°C when fractionated using Temperature Rising Elution Fractionation ("TREF"), characterized in that said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the ethylene/a-olefin interpolymers are characterized by an elastic recovery, Re, in percent at 300 percent strain and 1 cycle measured on a compression-molded film of an ethylene/a-olefin interpolymer, and has a density, d, in $g/cm^3$ (grams/cubic centimeter), wherein the numerical values of Re and d satisfy the following relationship when ethylene/a-olefin interpolymer is substantially free of a cross-linked phase:

$$Re > 1481-1629(d);$$

and preferably

$$Re \geq 1491-1629(d);$$

and more preferably

$$Re \geq 1501-1629(d);$$

and even more preferably

$$Re \geq 1511-1629(d).$$

Figure 3 shows the effect of density on elastic recovery for unoriented films comprising certain inventive interpolymers and traditional random copolymers. For the same density, the inventive interpolymers have substantially higher elastic recoveries.

In some embodiments, the ethylene/a-olefin interpolymers have a tensile strength above 10 MPa, preferably a tensile strength ≥ 11 MPa, more preferably a tensile strength ≥ 13MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/a-olefin interpolymers have (1) a storage modulus ratio, G'(25°C)/G'(100°C), of from 1 to 50, preferably from 1 to 20, more preferably from 1 to 10; and/or (2) a 70°C compression set of less than 80 percent, preferably less than 70 percent, especially less than 60 percent, less than 50 percent, or less than 40 percent, down to a compression set of 0 percent.

In still other embodiments, the ethylene/a-olefin interpolymers have a 70°C compression set of less than 80 percent, less than 70 percent, less than 60 percent, or less than 50 percent. Preferably, the 70°C compression set of the interpolymers is less than 40 percent, less than 30 percent, less than 20 percent, and may go down to 0 percent.

In some embodiments, the ethylene/a-olefin interpolymers have a heat of fusion of less than 85 J/g and/or a pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/a-olefin interpolymers comprise, in polymerized form, at least 50 mole percent ethylene and have a 70°C compression set of less than 80 percent, preferably less than 70 percent or less than 60 percent, most preferably less than 40 to 50 percent and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks .

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

In another aspect, the inventive polymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer, said block interpolymer having a peak (but not just a molecular fraction) which elutes between 40°C and 130°C (but without collecting and/or isolating individual fractions), characterized in that said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [$CH_3$/$CH_2$] from the ATREF infra-red detector, wherein the tallest (highest) peak is identified from the base line, and then the FWHM area is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/a-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl: methylene area ratio [$CH_3$/$CH_2$] of the TREF peak.

Comonomer content may be measured using any suitable technique, with techniques based on nuclear magnetic resonance (NMR) spectroscopy preferred. Using this technique, said blocked interpolymers has higher molar comonomer

content than a corresponding comparable interpolymer.

Preferably, for interpolymers of ethylene and 1-octene, the block interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene where a plot of the comonomer content versus TREF elution temperature for several comparable ethylene/1-octene interpolymers (random copolymers) are fit to a line representing (- 0.2013) T + 20.07 (solid line). The line for the equation (- 0.2013) T + 21.07 is depicted by a dotted line. Also depicted are the comonomer contents for fractions of several block ethylene/1-octene interpolymers of the invention (multi-block copolymers). All of the block interpolymer fractions have significantly higher 1-octene content than either line at equivalent elution temperatures. This result is characteristic of the inventive interpolymer and is believed to be due to the presence of differentiated blocks within the polymer chains, having both crystalline and amorphous nature.

Figure 5 graphically displays the TREF curve and comonomer contents of polymer fractions for Example 5 and Comparative Example F* to be discussed below. The peak eluting from 40 to 130°C, preferably from 60°C to 95°C for both polymers is fractionated into three parts, each part eluting over a temperature range of less than 10°C. Actual data for Example 5 is represented by triangles. The skilled artisan can appreciate that an appropriate calibration curve may be constructed for interpolymers containing different comonomers and a line used as a comparison fitted to the TREF values obtained from comparative interpolymers of the same monomers, preferably random copolymers made using a metallocene or other homogeneous catalyst composition. Inventive interpolymers are characterized by a molar comonomer content greater than the value determined from the calibration curve at the same TREF elution temperature, preferably at least 5 percent greater, more preferably at least 10 percent greater.

In addition to the above aspects and properties described herein, the inventive polymers can be characterized by one or more additional characteristics. In one aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that said fraction has a molar comonomer content higher, preferably at least 5 percent higher, more preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer(s), and a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer.

Preferably, the above interpolymers are interpolymers of ethylene and at least one $\alpha$-olefin, especially those interpolymers having a whole polymer density from 0.855 to 0.935 g/cm$^3$, and more especially for polymers having more than 1 mole percent comonomer, the blocked interpolymer has a comonomer content of the TREF fraction eluting between 40 and 130°C greater than or equal to the quantity (- 0.1356) T + 13.89, more preferably greater than or equal to the quantity (-0.1356) T+ 14.93, and most preferably greater than or equal to the quantity (-0.2013)T + 21.07, where T is the numerical value of the peak ATREF elution temperature of the TREF fraction being compared, measured in °C.

Preferably, for the above interpolymers of ethylene and at least one alpha-olefin especially those interpolymers having a whole polymer density from 0.855 to 0.935 g/cm$^3$, and more especially for polymers having more than 1 mole percent comonomer, the blocked interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

In still another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction having a comonomer content of at least 6 mole percent, has a melting point greater than 100°C. For those fractions having a comonomer content from 3 mole percent to 6 mole percent, every fraction has a DSC melting point of 110°C or higher. More preferably, said polymer fractions, having at least 1 mol percent comonomer, has a DSC melting point that corresponds to the equation:

$$Tm \geq (-5.5926)(\text{mol percent comonomer in the fraction}) + 135.90.$$

In yet another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction that has an ATREF elution temperature greater than or equal to about 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58,$$

The inventive block interpolymers have a molecular fraction which elutes between 40°C and 130°C, when fractionated using TREF increments, characterized in that every fraction that has an ATREF elution temperature between 40°C and less than about 76°C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infra-red detector available from Polymer Char, Valencia, Spain

(http://www.polymerchar.com/).

The "composition mode" of the detector is equipped with a measurement sensor ($CH_2$) and composition sensor ($CH_3$) that are fixed narrow band infra-red filters in the region of 2800-3000 $cm^{-1}$. The measurement sensor detects the methylene ($CH_2$) carbons on the polymer (which directly relates to the polymer concentration in solution) while the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-olefin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying a the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [$CH_3/CH_2$] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 65, 98-100.; and Deslauriers, P.J.; Rohlfing, D.C.; Shieh, E.T.; "Quantifying short chain branching microstructures in ethylene-1-olefin copolymers using size exclusion chromatography and Fourier transform infrared spectroscopy (SEC-FTIR)", Polymer (2002), 43, 59-170.

In other embodiments, the inventive ethylene/a-olefin interpolymer is characterized by an average block index, ABI, which is greater than zero and up to 1.0 and a molecular weight distribution, $M_w/M_n$, greater than 1.3. The average block index, ABI, is the weight average of the block index ("BI") for each of the polymer fractions obtained in preparative TREF from 20°C and 110°C, with an increment of 5°C :

$$ABI = \sum (w_i BI_i)$$

where $BI_i$ is the block index for the ith fraction of the inventive ethylene/a-olefin interpolymer obtained in preparative

TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_X$ is the preparative ATREF elution temperature for the ith fraction (preferably expressed in Kelvin), $P_X$ is the ethylene mole fraction for the ith fraction, which can be measured by NMR or IR as described above. $P_{AB}$ is the ethylene mole fraction of the whole ethylene/a-olefin interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As a first order approximation, the $T_A$ and $P_A$ values are set to those for high density polyethylene homopolymer, if the actual values for the "hard segments" are not available. For calculations performed herein, $T_A$ is 372°K, $P_A$ is 1.

$T_{AB}$ is the ATREF temperature for a random copolymer of the same composition and having an ethylene mole fraction of $P_{AB}$. $T_{AB}$ can be calculated from the following equation:

$$\text{Ln } P_{AB} = \alpha/T_{AB} + \beta$$

where $\alpha$ and $\beta$ are two constants which can be determined by calibration using a number of known random ethylene copolymers. It should be noted that $\alpha$ and $\beta$ may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\text{Ln } P = -237.83/T_{ATREF} + 0.639$$

$T_{XO}$ is the ATREF temperature for a random copolymer of the same composition and having an ethylene mole fraction of $P_X$. $T_{XO}$ can be calculated from $LnP_X = \alpha/T_{XO} + \beta$. Conversely, $P_{XO}$ is the ethylene mole fraction for a random copolymer of the same composition and having an ATREF temperature of $T_X$, which can be calculated from $\text{Ln } P_{XO} = \alpha/T_X + \beta$.

Once the block index (BI) for each preparative TREF fraction is obtained, the weight average block index, ABI, for the whole polymer can be calculated. In some embodiments, ABI is greater than zero but less than 0.3 or from 0.1 to 0.3. In other embodiments, ABI is greater than 0.3 and up to 1.0. Preferably, ABI should be in the range of from 0.4 to 0.7, from 0.5 to 0.7, or from 0.6 to 0.9. In some embodiments, ABI is in the range of from 0.3 to 0.9, from 0.3 to 0.8, or from 0.3 to 0.7, from 0.3 to 0.6, from 0.3 to 0.5, or from 0.3 to 0.4. In other embodiments, ABI is in the range of from 0.4 to 1.0, from 0.5 to 1.0, or from 0.6 to 1.0, from 0.7 to 1.0, from 0.8 to 1.0, or from 0.9 to 1.0.

Another characteristic of the inventive ethylene/a-olefin interpolymer is that the inventive ethylene/a-olefin interpolymer comprises at least one polymer fraction which can be obtained by preparative TREF, wherein the fraction has a block index greater than 0.1 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0. In other embodiments, the polymer fraction has a block index greater than 0.1 and up to 1.0, greater than 0.2 and up to 1.0, greater than 0.3 and up to 1.0, greater than 0.4 and up to 1.0, or greater than 0.4 and up to 1.0. In still other embodiments, the polymer fraction has a block index greater than 0.1 and up to 0.5, greater than 0.2 and up to 0.5, greater than 0.3 and up to 0.5, or greater than 0.4 and up to 0.5. In yet other embodiments, the polymer fraction has a block index greater than 0.2 and up to 0.9, greater than 0.3 and up to 0.8, greater than 0.4 and up to 0.7, or greater than 0.5 and up to 0.6.

For copolymers of ethylene and an $\alpha$-olefin, the inventive polymers preferably possess (1) a PDI of at least 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, $T_g$, of less than -25°C, more preferably less than -30°C, and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0

MPa, at a temperature of 100°C. Moreover, the inventive polymers possess a relatively flat storage modulus as a function of temperature in the range from 0 to 100°C (illustrated in Figure 6) that is characteristic of block copolymers, and heretofore unknown for an olefin copolymer, especially a copolymer of ethylene and one or more $C_{3-8}$ aliphatic $\alpha$-olefins. (By the term "relatively flat" in this context is meant that log G' (in Pascals) decreases by less than one order of magnitude between 50 and 100°C, preferably between 0 and 100°C).

The inventive interpolymers may be further characterized by a thermomechanical analysis penetration depth of 1 mm at a temperature of at least 90°C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the inventive polymers, as compared to other known polymers. The inventive polymers have significantly better flexibility-heat resistance balance than the other polymers.

Additionally, the ethylene/ $\alpha$-olefin interpolymers can have a melt index, $I_2$, from 0.01 to 2000 g/10 minutes, preferably from 0.01 to 1000 g/10 minutes, more preferably from 0.01 to 500 g/10 minutes, and especially from 0.01 to 100 g/10 minutes. In certain embodiments, the ethylene/$\alpha$-olefin interpolymers have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the ethylene/a-olefin polymers is 1g/10 minutes, 3 g/10 minutes or 5 g/10 minutes.

The polymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 g/$cm^3$ and preferably for ethylene containing polymers from 0.85 g/$cm^3$ to 0.97 g/$cm^3$. In certain embodiments, the density of the ethylene/a-olefin polymers ranges from 0.860 to 0.925 g/$cm^3$ or 0.867 to 0.910 g/$cm^3$.

The process of making the polymers has been disclosed in the following patent applications: PCT Application No. PCT/US2005/008916, filed March 17, 2005; PCT Application No. PCT/US2005/008915, filed March 17, 2005; and PCT Application No. PCT/US2005/008917, filed March 17, 2005. For example, one such method comprises contacting ethylene and optionally one or more addition polymerizable monomers other than ethylene under addition polymerization conditions with a catalyst composition comprising:

the admixture or reaction product resulting from combining:

(A) a first olefin polymerization catalyst having a high comonomer incorporation index,
(B) a second olefin polymerization catalyst having a comonomer incorporation index less than 90 percent, preferably less than 50 percent, most preferably less than 5 percent of the comonomer incorporation index of catalyst (A), and
(C) a chain shuttling agent.

Representative catalysts and chain shuttling agent are as follows.

**Catalyst (A1)** is [N-(2,6-di(1-methylethyl)phenyl)amido)(2-isopropylphenyl)($\alpha$-naphthalen-2-diyl(6-pyridin-2-diyl)methane)]hafnium dimethyl, prepared according to the teachings of WO 03/40195, and WO 04/24740.

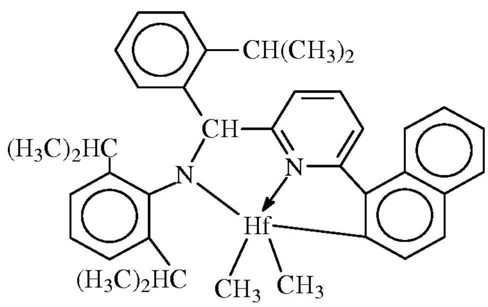

**Catalyst (A2)** is [N-(2,6-di(1-methylethyl)phenyl)amido)(2-methylphenyl)(1,2-phenylene-(6-pyridin-2-diyl)methane)]hafnium dimethyl, prepared according to the teachings of WO 03/40195, and WO 04/24740.

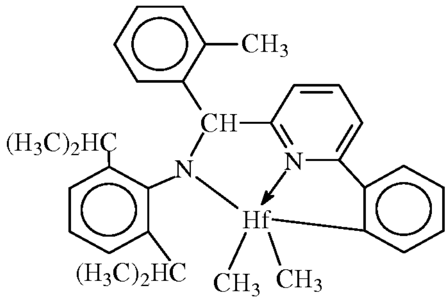

**Catalyst (A3)** is bis[N,N'''-(2,4,6-tri(methylphenyl)amido)ethylenediamine]hafnium dibenzyl.

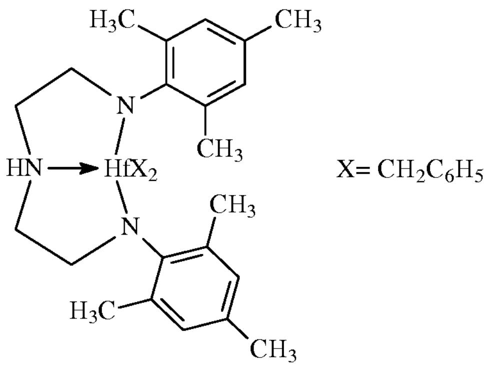

**Catalyst (A4)** is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

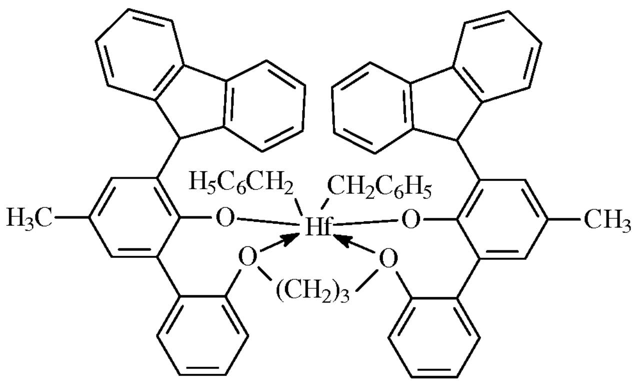

**Catalyst (B1)** is 1,2-bis-(3,5-di-t-butylphenylene)(1-(N-(1-methylethyl)immino)methyl)(2-oxoyl) zirconium dibenzyl

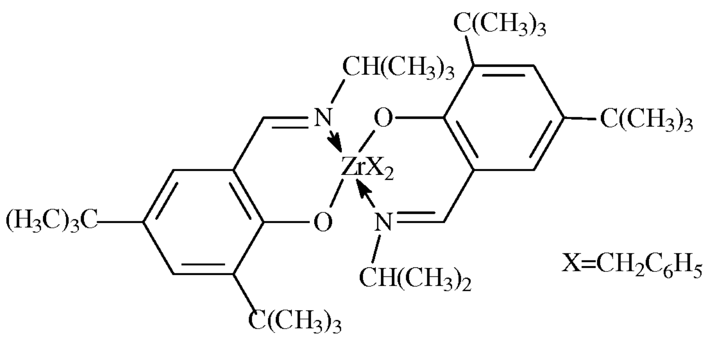

**Catalyst (B2)** is 1,2-bis-(3,5-di-t-butylphenylene)(1-(N-(2-methylcyclohexyl)-immino)methyl)(2-oxoyl) zirconium dibenzyl

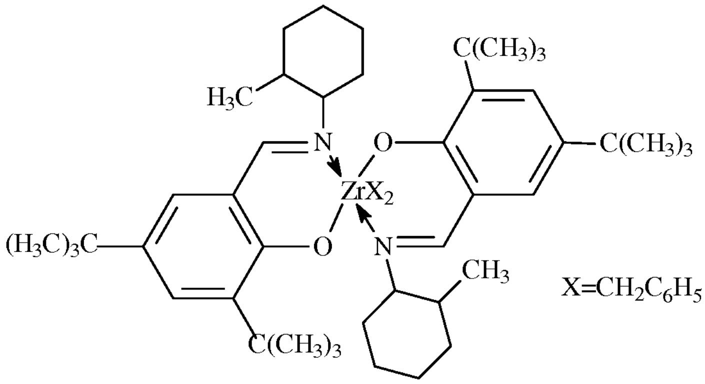

.

**Catalyst (C1)** is (t-butylamido)dimethyl(3-N-pyrrolyl-1,2,3,3a,7a-η-inden-1-yl)silanetitanium dimethyl prepared substantially according to the techniques of USP 6,268,444:

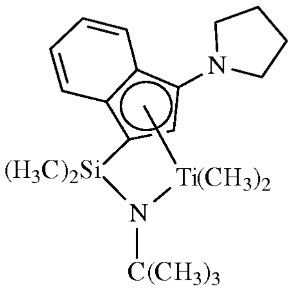

.

**Catalyst (C2)** is (t-butylamido)di(4-methylphenyl)(2-methyl-1,2,3,3a,7a-η-inden-1-yl)silanetitanium dimethyl prepared substantially according to the teachings of US-A-2003/004286:

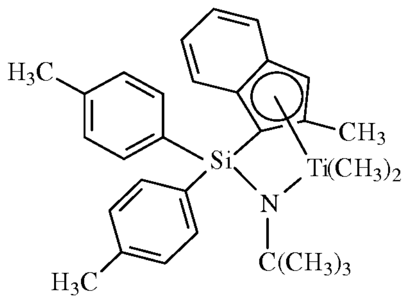

.

**Catalyst (C3)** is (t-butylamido)di(4-methylphenyl)(2-methyl-1,2,3,3a,8a-η-s-indacen-1-yl)silanetitanium dimethyl prepared substantially according to the teachings of US-A-2003/004286:

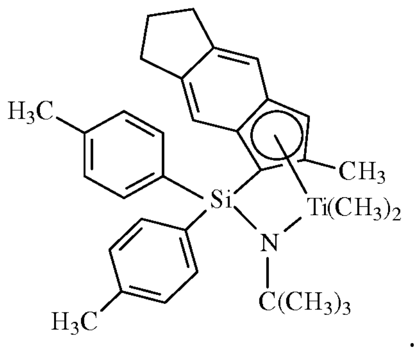

**Catalyst (D1)** is bis(dimethyldisiloxane)(indene-1-yl)zirconium dichloride available from Sigma-Aldrich:

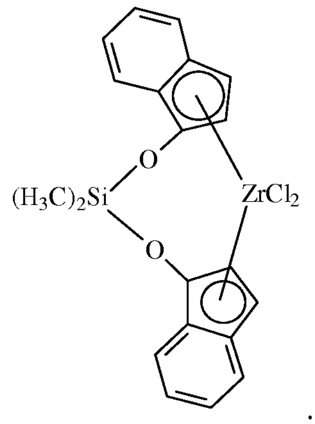

**Shuttling Agents** The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{3-20}$ olefin or cycloolefin, and most especially ethylene and a $C_{4-20}$ $\alpha$-olefin, using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using

CRYSTAF and DSC as a function of heat of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any $\beta$-hydride elimination is observed in the polymerization of ethylene/$\alpha$-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene $\alpha$-olefin interpolymers used in the embodiments of the invention are preferably interpolymers of ethylene with at least one $C_{3-}C_{20}$ $\alpha$-olefin. Copolymers of ethylene and a $C_{3-}C_{20}$ $\alpha$-olefin are especially preferred. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or nonconjugated dienes, polyenes, alkenylbenzenes, etc. Examples of such comonomers include $C_{3-}C_{20}$ $\alpha$ -olefins such as propylene, isobutylene, 1-butene, 1-hexene, 1-pentene, 4-methyl-1-pentene, 1-heptene, 1-octene, 1-nonene, and 1-decene. 1-Butene and 1-octene are especially preferred. Other suitable monomers include styrene, halo- or alkylsubstituted styrenes, vinylbenzocyclobutane, 1,4-hexadiene, 1,7-octadiene, and naphthenics (e.g., cyclopentene, cyclohexene and cyclooctene).

While ethylene/a-olefin interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. Preferably, suitable olefins are $C_{3-}C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 position with $C_1$-$C_{20}$ hydrocarbyl or cyclohydrocarbyl groups. Also included are mixtures of such olefins as well as mixtures of such olefins with $C_4$-$C_{40}$ diolefin compounds.

Examples of olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, $C_4$-$C_{40}$ dienes, including but not limited to 1,3-butadiene, 1,3-pentadiene, 1,4-hexadiene, 1,5-hexadiene, 1,7-octadiene, 1,9-decadiene, other $C_4$-$C_{40}$ $\alpha$-olefins, and the like. In certain embodiments, the $\alpha$-olefin is propylene, 1-butene, 1-pentene,1-hexene, 1-octene or a combination thereof. Although any hydrocarbon containing a vinyl group potentially may be used in embodiments of the invention, practical issues such as monomer availability, cost, and the ability to conveniently remove unreacted monomer from the resulting polymer may become more problematic as the molecular

weight of the monomer becomes too high.

The polymerization processes described herein are well suited for the production of olefin polymers comprising monovinylidene aromatic monomers including styrene, o-methyl styrene, p-methyl styrene, and t-butylstyrene. In particular, interpolymers comprising ethylene and styrene can be prepared by following the teachings herein. Optionally, copolymers comprising ethylene, styrene and a $C_{3-}C_{20}$ alpha olefin, optionally comprising a $C_4$-$C_{20}$ diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

One class of desirable polymers that can be made in accordance with embodiments of the invention are elastomeric interpolymers of ethylene, a $C_{3-}C_{20}$ $\alpha$-olefin, especially propylene, and optionally one or more diene monomers. Preferred $\alpha$-olefins for use in this embodiment of the present invention are designated by the formula $CH_2$=CHR*, where R* is a linear or branched alkyl group of from 1 to 12 carbon atoms. Examples of suitable $\alpha$-olefins include, but are not limited to, propylene, isobutylene, 1-butene, 1-pentene, 1-hexene, 4-methyl-1-pentene, and 1-octene. A particularly preferred $\alpha$-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

Because the diene containing polymers comprise alternating segments or blocks containing greater or lesser quantities of the diene (including none) and $\alpha$-olefin (including none), the total quantity of diene and $\alpha$-olefin may be reduced without loss of subsequent polymer properties. That is, because the diene and $\alpha$-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have an ethylene content of from 20 to 90 percent, a diene content of from 0.1 to 10 percent, and an $\alpha$-olefin content of from 10 to 80 percent, based on the total weight of the polymer. Further preferably, the multi-block elastomeric polymers have an ethylene content of from 60 to 90 percent, a diene content of from 0.1 to 10 percent, and an $\alpha$-olefin content of from 10 to 40 percent, based on the total weight of the polymer. Preferred polymers are high molecular weight polymers, having a weight average molecular weight (Mw) from 10,000 to 2,500,000, preferably from 20,000 to 500,000, more preferably from 20,000 to 350,000, and a polydispersity less than 3.5, more preferably less than 3.0, and a Mooney viscosity (ML (1+4) 125°C.) from 1 to 250. More preferably, such polymers have an ethylene content from 65 to 75 percent, a diene content from 0 to 6 percent, and an $\alpha$-olefin content from 20 to 35 percent.

The ethylene/a-olefin interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/ $\alpha$-olefin interpolymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541. One particularly useful functional group is malic anhydride.

The amount of the functional group present in the functional interpolymer can vary. The functional group can typically be present in a copolymer-type functionalized interpolymer in an amount of at least 1.0 weight percent, preferably at least 5 weight percent, and more preferably at least 7 weight percent. The functional group will typically be present in a copolymer-type functionalized interpolymer in an amount less than 40 weight percent, preferably less than 30 weight percent, and more preferably less than 25 weight percent.

The amount of the ethylene/a-olefin interpolymer in the polymer blend disclosed herein can be from 5 to 95

wt%, from 10 to 90 wt%, from 20 to 80 wt%, from 30 to 70 wt%, from 10 to 50 wt%, from 50 to 90 wt%, from 60 to 90 wt%, or from 70 to 90 wt% of the total weight of the polymer blend. In some embodiments, the amount of the ethylene/a-olefin interpolymer in the polymer blend disclosed herein is about 15%, 30%, 50%, 70% or 85% by total weight of the polymer blend.

Polyolefins

As discussed above, the polymer blends comprise at least one branched polyolefin which may improve or modify the rheology of the ethylene/a-olefin interpolymer. Any branched thermoplastic polyolefin with a branching index less than 1 can be used. The branching index quantifies the degree of long chain branching in a selected thermoplastic polymer. Preferably, the branching index is less than 0.9, 0.8, 0.7, 0.6 or 0.5. In some embodiments, the branching index is in the range from 0.01 to 0.4. In other embodiments, the branching index is less than 0.01, less than 0.001, less than 0.0001, less than 0.00001, or less than 0.000001. It is defined by the following equation:

$$g' = \left. \frac{IV_{Br}}{IV_{Lin}} \right|_{M_w}$$

where g' is the branching index, $IV_{Br}$ is the intrinsic viscosity of the branched thermoplastic polymer (e.g., LDPE or polypropylene) and $IV_{Lin}$ is the intrinsic viscosity of the corresponding linear thermoplastic polymer having the same weight average molecular weight as the branched thermoplastic polymer and, in the case of copolymers and terpolymers, substantially the same relative molecular proportion or proportions of monomer units.

Intrinsic viscosity, also known as the limiting viscosity number, in its most general sense is a measure of the capacity of a polymer molecule to enhance the viscosity of a solution. This depends on both the size and the shape of the dissolved polymer molecule. Hence, in comparing a nonlinear polymer with a linear polymer of substantially the same weight average molecular weight, it is an indication of configuration of the nonlinear polymer molecule. Indeed, the above ratio of intrinsic viscosities is a measure of the degree of branching of the nonlinear polymer. A method for determining intrinsic viscosity of propylene polymer material is described by Elliott et al., J. App. Poly. Sci., 14, pp 2947-2963 (1970). In this specification the intrinsic viscosity in each instance is determined with the polymer dissolved in decahydronaphthalene at 135 °C. Another method for measuring the intrinsic viscosity of a polymer is ASTM D5225-98 - *Standard Test Method for Measuring Solution Viscosity of Polymers with a Differential Viscometer.*

Suitable branched thermoplastic polyolefin include, but are not limited to, branched polyethylene (such as low density polyethylene), branched polypropylene. Preferably, a branched thermoplastic polyolefin has a relatively high melt strength. Specifically, the melt strength of branched thermoplastic polyolefin is at least 25% higher than that of the corresponding linear thermoplastic polyolefin with the same weight average molecular weight. In some instances, the melt strength of a branched thermoplastic polyolefin is about 50% higher, about 75% higher, about 100% higher, or about 150% higher than that of the corresponding linear thermoplastic polyolefin. In some embodiments, the melt strength of a branched thermoplastic polyolefin is at least 10 cN, at least 15 cN, at least 20 cN, at least 25 cN, at least 30 cN, at least 35 cN, or at least 40 cN. In some embodiments, the 1% secant modulus of the branched thermoplastic polyolefin is equal to or higher than 896 MPa (130,000 psi). It may also be higher than 1034 MPa (150,000 psi), higher than 1172 MPa (170,000 psi), or higher than 1379 MPa (200,000 psi). Typically, the compression set at 70 °C of such polyolefins is greater than 50 percent. In some embodiments, the compression set at 70 °C is greater than 60 percent, greater than 70 percent, greater than 80 percent, or greater than 90 percent.

Any amount of a branched polyolefin may be used to so long as the amount is sufficient for rheology modification of the ethylene/a-olefin interpolymer. Typically, a branched polyolefin is present in an amount of from 5% by weight and up to 95% of the total blend composition, preferably from 10% to 90%, from 15% to 80%, from 20% to 70% or from 30% to 45%. In some embodiments, a branched polyolefin is present in an amount of greater than zero but less than 50% by weight of the total blend composition, preferably from 5% to 45%, from 10% to 35%, or from 15% to 30% by total weight of the polymer blend.

Suitable polyolefins are polymers derived from one or more olefins. An olefin (*i.e.,* alkene) is a hydrocarbon that contains at least one carbon-carbon double bond. Some non-limiting examples of olefins include linear or branched, cyclic or acyclic, alkenes having from 2 to 20 carbon atoms. In some embodiments, the alkene has between 2 and 10 carbon atoms. In other embodiments, the alkene contains at least two carbon-carbon double bonds, such as butadiene and 1,5-hexadiene. In further embodiments, at least one of the hydrogen atoms of the alkene is substituted with an alkyl or aryl. In particular embodiments, the alkene is ethylene, propylene, 1-butene, 1-hexene, 1-octene, 1-decene, 4-methyl-1-pentene, norbornene, 1-decene, butadiene, 1,5-hexadiene, styrene or a combination thereof.

Any polyolefin meeting the various criteria disclosed herein may be used to prepare the polymer blend disclosed

herein. Non-limiting examples of polyolefins include polyethylenes (*e.g.,* ultralow, low, linear low, medium, high and ultrahigh density polyethylene); polypropylenes (*e.g.,* low and high density polypropylene); polybutylenes (*e.g.,* polybutene-1); polypentene-1; polyhexene-1; polyoctene-1; polydecene-1; poly-3-methylbutene-1; poly-4-methylpentene-1; polyisoprene; polybutadiene; poly-1,5-hexadiene; interpolymers derived from olefins; interpolymers derived from olefins and other polymers such as polyvinyl chloride, polystyrene, and polyurethane; and mixtures thereof. In some embodiments, the polyolefin is a homopolymer such as polyethylene, polypropylene, polybutylene, polypentene-1, poly-3-methylbutene-1, poly-4-methylpentene-1, polyisoprene, polybutadiene, poly-1,5-hexadiene, polyhexene-1, polyoctene-1 and polydecene-1. In other embodiments, the polyolefin is polypropylene or high density polyethylene (HDPE).

A preferred class of polyolefins is branched ethylene polymers. An ethylene polymer is any polymer comprising greater than fifty mole percent of $-CH_2-CH_2-$ repeating units as derived from an ethylene monomer or comonomer. Suitable ethylene polymers for use in embodiments of the invention include any ethylene-containing polymers, both homopolymers and copolymers. Examples of ethylene polymers include, but are not limited to, ethylene homopolymers and ethylene interpolymers, such as low density polyethylene (LDPE), heterogeneously branched ethylene/a-olefin interpolymer (i.e., linear low density polyethylene (LLDPE), ultra low density polyethylene (ULDPE)), substantially linear ethylene polymers (SLEP), and homogeneously branched ethylene polymer.

In some embodiments, the branched polymers and interpolymers are partly or entirely homopolymerized or interpolymerized in autoclave or tubular reactors at pressures above 14,500 psi (100 MPa) with the use of free-radical initiators. Such branched polymers and interpolymers, include, but are not limited to, low density ethylene polymers such as high pressure low density ethylene homopolymer (LPDE), ethylene-vinyl acetate copolymer (EVA), ethylene-acrylic acid copolymer (EAA), ethylene-carboxylic acid copolymers and ethylene acrylate copolymers as well as olefin polymers produced at low to medium pressures such as polybutylene (PB). A preferred class of brached polymer is LDPE, such as LDPE 662i and LDPE 620i, both of which are available from The Dow Chemical Company, Midland, MI. Such polymers are described in details in U.S. Patent No. 6,545,094 and WO 2005/023912 (PCT/US2004/029124).

Preferred LDPEs have a melt index ($I_2$) ("MI") of from 0.2 g/10 min. to 2 g/10 min. More preferably, the melt index is greater than 0.25 g/10 min.or greater than 0.3 g/10 min. The melt index is preferably less than 2 g/10 min., less than 1 g/10 min., or less than 0.7 g/10 min. The melt strength of suitable LDPEs is preferably greater than 24.1-18.0*log10(MI) or alternatively 25 cN or greater than 30 or 40 cN. For practice reasons, the melt strength is generally less than 100 cN.

Suitable high pressure ethylene interpolymers include ethylene interpolymerized with at least one, $\alpha,\beta$-ethylenically unsaturated comonomers (for example, acrylic acid, methacrylic acid and vinyl acetate) as described in U.S. Patent No. 4,599,392. Preferred high pressure ethylene interpolymers comprise from 0.1 to 55 total weight percent comonomer, and more preferably from 1 to 35 total weight percent comonomer, and most preferably from 2 to 28 total weight percent comonomer, and can be chemically and/or physically modified by any known technique such as, for example, by ionomerization and extrusion grafting.

Another preferred thermoplastic polymer is branched polypropylene, both homopolymer and copolymer. One class of branched polypropylene is coupled impact propylene polymer. As used herein, "coupling" refers to modifying the rheology of a polymer by reacting the polymer with a suitable coupling agent. A "coupled polymer" is a rheology modified polymer resulting from a coupling reaction. A coupled polymer is characterized by an increase in melt strength of at least 25% and a decrease in melt flow rate, compared to the polymer before coupling. A coupled polymer differs from a heavily crosslinked polymer in that the coupled polymer is thermoplastic and has a low gel level, i.e., a gel content of less than 50% by weight, preferably less than 30%, less than 20%, less than 10%, or less than 5% by weight. In contrast, heavy crosslinking (otherwise known as "vulcanization") results in a thermoset polymer characterized by high gel levels, i.e., a gel content of more than 50% by weight, preferably more than 70%, more than 80%, more than 90%, or more than 95% by weight.

One class of suitable coupled propylene polymers include those known as "Coupled Impact Polypropylene Polymers." Such polymers and their manufacture are disclosed in U.S. Patent No. 6,359,073, U.S. Patent Application Serial No. 09/017,230 filed on June 23, 2000 and in PCT Application No. WO 00/78858 A2, filed on June 23, 2000. The process to produce a coupled impact propylene copolymer involves coupling of a impact propylene copolymer by a coupling agent. The coupling reaction is implemented via reactive extrusion or any other method which is capable of mixing the coupling agent with the impact propylene copolymer and adding sufficient energy to cause a coupling reaction between the coupling agent and the impact propylene copolymer. Preferably, the process is carried out in a single vessel such as a melt mixer or a polymer extruder, such as described in U.S. Patent Application 09/133,576 filed August 13, 1998 which claims the benefit of U.S. Provisional Application No. 60/057,713 filed August 27, 1997.

The term "impact propylene copolymer" is used herein to refer to heterophasic propylene copolymers where polypropylene is the continuous phase and an elastomeric phase is dispersed therein. Those of skill in the art recognize that this elastomeric phase may also contain crystalline regions, which for purposes of current embodiments of the invention are considered part of the elastomeric phase. The impact propylene copolymers result from an in-reactor process rather than physical blending. Usually the impact propylene copolymers are formed in a dual or multi-stage

process, which optionally involves a single reactor with at least two process stages taking place therein, or optionally multiple reactors. Impact propylene copolymers are commercially available and are well known within the skill in the art, for instance, as described by E.P. Moore, Jr in Polypropylene Handbook, Hanser Publishers, 1996, page 220-221 and U.S. Patents 3,893,989 and 4,113,802. Additional suitable impact propylene copolymers are disclosed in the following US patents: 4,434,264; 4,459,385; 4,489,195; 4,493,923; 4,508,872; 4,535,125; 4,588,775; 4,843,129; 4,966,944; 5,011,891; 5,034,449; 5,066,723; 5,177,147; 5,314,746; 5,336,721; 5,367,022; 6,207,754; and 6,268,064.

A suitable coupling agent is a poly(sulfonyl azide), more preferably a bis(sulfonyl azide). Examples of poly(sulfonyl azides) useful in the thermoplastic vulcanizate are described in WO 99/10424. Poly(sulfonyl)azides include such compounds as 1, 5-pentane bis(sulfonyl azide), 1,8-octane bis(sulfonyl azide), 1,10-decane bis(sulfonyl azide), 1,10-octadecane bis(sulfonyl azide), 1-octyl-2,4,6-benzene tris(sulfonyl azide), 4,4'-diphenyl ether bis(sulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from 2 to 5 sulfonyl azide groups per molecule, and mixtures thereof. Preferred poly(sulfonyl azide)s include oxy-bis(4-sulfonylazidobenzene), 2,7-naphthalene bis(sulfonyl azido), 4,4'-bis(sulfonyl azido)biphenyl, 4,4'-diphenyl ether bis(sulfonyl azide) and bis(4-sulfonyl azidophenyl)methane, and mixtures thereof.

Sulfonyl azides are commercially available or are conveniently prepared by the reaction of sodium azide with the corresponding sulfonyl chloride, although oxidation of sulfonyl hydrazines with various reagents (nitrous acid, dinitrogen tetroxide, nitrosonium tetrafluoroborate) has been used.

When a bis(sulfonyl azide) is used for the coupling agent, preferably at least about 100 ppm of azide is used for coupling the impact propylene copolymer, based on the total weight of the impact propylene copolymer, more preferably at least 150 ppm of azide, most preferably at least 200 ppm of azide is used. In some instances, such as where a large reduction in the ductile-to-brittle transition temperature is desirable as compared with the base comparable non-coupled impact propylene copolymer, at least 300 ppm of bis(sulfonyl azide), preferably at least 450 ppm of bis(sulfonyl azide) based on the total weight of the impact propylene copolymer is used for coupling the impact propylene copolymer. It is important in choosing the impact propylene copolymer to be coupled, that a polymer is chosen that has a high enough melt flow rate, so that after coupling with the desired amount of coupling agent, the coupled impact propylene copolymer has a sufficiently high melt flow rate to be readily processed.

In some embodiments, the coupled impact propylene copolymer is characterized by the following formula:

$$X = [(A-C)/(B-D)] \leq 0.75;$$

$$Y \geq 1.25;$$

and

$$A \leq B-10$$

where A is the ductile-to-brittle transition temperature calculated from notched Izod values (Measured in accordance with ASTM D-256) measured with the notch perpendicular to the polymer injection flow direction for an article comprising the coupled impact propylene copolymer resin; B is the ductile-to-brittle transition temperature calculated from notched Izod values (Measured in accordance with ASTM D-256) measured with the notch perpendicular to the polymer injection flow direction for an article comprising the corresponding non-coupled impact propylene copolymer resin; C is the ductile-to-brittle transition temperature calculated from notched Izod values (Measured in accordance with ASTM D-256) measured with the notch parallel to the polymer injection flow direction for an article comprising the coupled impact propylene copolymer resin; D is the ductile-to-brittle transition temperature calculated from notched Izod (Measured in accordance with ASTM D-256) measured with the notch parallel to the polymer injection flow direction for an article comprising the corresponding non-coupled impact propylene copolymer resin.

Y is the ratio of the melt strength of the coupled impact propylene copolymer resin to the melt strength of the corresponding non-coupled impact propylene copolymer resin. In some embodiments, Y is at least 1.5, at least 2, at least 5; or at least 10. In other embodiments, X is less than 0.5, less than 0.33, or less than 0.25.

The coupled impact propylene copolymer has improved impact properties when compared to those of a non-coupled impact propylene copolymer and also increases the melt strength of the resulting coupled impact propylene copolymer resin to a level of at least 1.25 times, preferably at least 1.5 times, that of a corresponding non-coupled impact propylene copolymer. The corresponding non-coupled impact propylene copolymer is the same polymer used to make the coupled impact propylene copolymer, but has not been coupled. Preferably, the coupled impact propylene copolymer

resins have a melt strength of at least 8, at least 15 cN, at least 30 cN, at least 50 cN, or at least 60 cN. In some embodiments, the melt flow rate of the coupled impact propylene polymer may range from 0.01 to 100 g/10 min., as measured according to ASTM 1238 at 230 °C. and 2.16 kg. Preferably, the melt flow rate is in the range from 0.05 to 50 g/10 min., 0.1 to 10 g/10 min., or 0.5 to 5 g/10 min.

Examples of impact properties that are improved in the coupled impact propylene copolymer compared to the corresponding non-coupled impact propylene copolymers include, for example, higher impact strength at low temperatures as exhibited by articles formed from the coupled impact propylene copolymer and an improvement in the ductile-to-brittle transition temperature, which is reduced in articles formed from the coupled impact propylene copolymer.

"Impact properties" refer to properties of articles such as impact strength, which is measured by any means within the skill in the art, for instance, Izod impact energy as measured in accordance with ASTM D 256, MTS Peak Impact Energy (dart impact) as measured in accordance with ASTM D 3763-93, and MTS total Impact Energy as measured in accordance with ASTM D-3763. The ductile-to-brittle transition temperature (DBTT) is also an impact property of an article comprising a polymer. The ductile-to-brittle transition temperature defines, for a given set of conditions, the temperature at which an object transitions from a predominantly ductile mode of failure to a predominantly brittle mode of failure. The ductile-to-brittle transition temperature can be calculated using techniques known to one of skill in the art.

Examples of representative branched propylene polymers include Profax™ 814 and Profax™ 611 by Basell Polyolefins, the Netherlands or comparable polypropylene from The Dow Chemical Company, Midland, Michigan.

In addition to the branched propylene polymer described herein, suitable branched propylene polymers also include those disclosed in the following US patents: 4,311,628; 4,521,566; 4,916,198; 5,047,446; 5,047,485; 5,414,027; and 5,849,409 and in the following PCT patent applications: WO 01/53078; WO 97/20888; WO 97/20889; WO 99/10423; WO 99/10424; and WO 99/16797.

Additives

Optionally, the polymer blends disclosed herein can comprise at least one additive for the purposes of improving and/or controlling the processibility, appearance, physical, chemical, and/or mechanical properties of the polymer blends. In some embodiments, the polymer blends do not comprise an additive. Any plastics additive known to a person of ordinary skill in the art may be used in the polymer blends disclosed herein. Non-limiting examples of suitable additives include slip agents, anti-blocking agents, plasticizers, antioxidants, UV stabilizers, colorants or pigments, fillers, lubricants, antifogging agents, flow aids, coupling agents, cross-linking agents, nucleating agents, surfactants, solvents, flame retardants, antistatic agents, and combinations thereof. The total amount of the additives can range from greater than 0 to 80%, from 0.001 % to 70%, from 0.01 % to 60%, from 0.1 % to 50%, from 1 % to 40%, or from 10 % to 50% of the total weight of the polymer blend. Some polymer additives have been described in Zweifel Hans et al., "Plastics Additives Handbook," Hanser Gardner Publications, Cincinnati, Ohio, 5th edition (2001).

In some embodiments, the polymer blends disclosed herein comprise a slip agent. In other embodiments, the polymer blends disclosed herein do not comprise a slip agent. Slip is the sliding of film surfaces over each other or over some other substrates. The slip performance of films can be measured by ASTM D 1894, *Static and Kinetic Coefficients of Friction of Plastic Film and Sheeting.* In general, the slip agent can convey slip properties by modifying the surface properties of films; and reducing the friction between layers of the films and between the films and other surfaces with which they come into contact.

Any slip agent known to a person of ordinary skill in the art may be added to the polymer blends disclosed herein. Non-limiting examples of the slip agents include primary amides having 12 to 40 carbon atoms (e.g., erucamide, oleamide, stearamide and behenamide); secondary amides having 18 to 80 carbon atoms (*e.g.,* stearyl erucamide, behenyl erucamide, methyl erucamide and ethyl erucamide); secondary-bis-amides having 18 to 80 carbon atoms (*e.g.,* ethylene-bis-stearamide and ethylene-bis-oleamide); and combinations thereof. In a particular embodiment, the slip agent for the polymer blends disclosed herein is an amide represented by Formula (I) below:

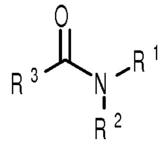

(I)

wherein each of $R^1$ and $R^2$ is independently H, alkyl, cycloalkyl, alkenyl, cycloalkenyl or aryl; and $R^3$ is alkyl or alkenyl, each having 11 to 39 carbon atoms, 13 to 37 carbon atoms, 15 to 35 carbon atoms, 17 to 33 carbon atoms or 19 to 33 carbon atoms. In some embodiments, $R^3$ is alkyl or alkenyl, each having at least 19 to 39 carbon atoms. In other

embodiments, $R^3$ is pentadecyl, heptadecyl, nonadecyl, heneicosanyl, tricosanyl, pentacosanyl, heptacosanyl, nonacosanyl, hentriacontanyl, tritriacontanyl, nonatriacontanyl or a combination thereof. In further embodiments, $R^3$ is pentadecenyl, heptadecenyl, nonadecenyl, heneicosanenyl, tricosanenyl, pentacosanenyl, heptacosanenyl, nonacosanenyl, hentriacontanenyl, tritriacontanenyl, nonatriacontanenyl or a combination thereof.

In a further embodiment, the slip agent for the polymer blends disclosed herein is an amide represented by Formula (II) below:

$$CH_3\text{-}(CH_2)_m\text{-}(CH{=}CH)_p\text{-}(CH_2)_n\text{-}C(=0)\text{-}NR^1R^2 \qquad (II)$$

wherein each of m and n is independently an integer between 1 and 37; p is an integer between 0 and 3; each of $R^1$ and $R^2$ is independently H, alkyl, cycloalkyl, alkenyl, cycloalkenyl or aryl; and the sum of m, n and p is at least 8. In some embodiments, each of $R^1$ and $R^2$ of Formulae (I) and (II) is an alkyl group containing between 1 and 40 carbon atoms or an alkenyl group containing between 2 and 40 carbon atoms. In further embodiments, each of $R^1$ and $R^2$ of Formulae (I) and (II) is H. In certain embodiments, the sum of m, n and p is at least 18.

In some embodiments, the slip agent is a primary amide with a saturated aliphatic group having between 18 and 40 carbon atoms (*e.g.,* stearamide and behenamide). In other embodiments, the slip agent is a primary amide with an unsaturated aliphatic group containing at least one carbon-carbon double bond and between 18 and 40 carbon atoms (*e.g.,* erucamide and oleamide). In further embodiments, the slip agent is a primary amide having at least 20 carbon atoms. In further embodiments, the slip agent is erucamide, oleamide, stearamide, behenamide, ethylene-bis-stearamide, ethylene-bis-oleamide, stearyl erucamide, behenyl erucamide or a combination thereof. In a particular embodiment, the slip agent is erucamide. In further embodiments, the slip agent is commercially available having a trade name such as ATMER™ SA from Uniqema, Everberg, Belgium; ARMOSLIP® from Akzo Nobel Polymer Chemicals, Chicago, IL; KEMAMIDE® from Witco, Greenwich, CT; and CRODAMIDE® from Croda, Edison, NJ. Where used, the amount of the slip agent in the polymer blend can be from greater than 0 to 3 wt%, from 0.0001 to 2 wt%, from 0.001 to 1 wt%, from 0.001 to 0.5 wt% or from 0.05 to 0.25 wt% of the total weight of the polymer blend. Some slip agents have been described in Zweifel Hans et al., "Plastics Additives Handbook," Hanser Gardner Publications, Cincinnati, Ohio, 5th edition, Chapter 8, pages 601-608 (2001).

Optionally, the polymer blends disclosed herein can comprise an anti-blocking agent. In some embodiments, the polymer blends disclosed herein do not comprise an anti-blocking agent. The anti-blocking agent can be used to prevent the undesirable adhesion between touching layers of articles comprising the polymer blends, particularly under moderate pressure and heat during storage, manufacture or use. Any anti-blocking agent known to a person of ordinary skill in the art may be added to the polymer blends disclosed herein. Non-limiting examples of anti-blocking agents include minerals (*e.g.*, clays, chalk, and calcium carbonate), synthetic silica gel (*e.g.,* SYLOBLOC® from Grace Davison, Columbia, MD), natural silica (*e.g.,* SUPER FLOSS® from Celite Corporation, Santa Barbara, CA), talc (*e.g.,* OPTIBLOC® from Luzenac, Centennial, CO), zeolites (*e.g.,* SIPERNAT® from Degussa, Parsippany, NJ), aluminosilicates (*e.g.*, SILTON® from Mizusawa Industrial Chemicals, Tokyo, Japan), calcium sterate, limestone (*e.g.*, CARBOREX® from Omya, Atlanta, GA), spherical polymeric particles (*e.g.*, EPOSTAR®, poly(methyl methacrylate) particles from Nippon Shokubai, Tokyo, Japan and TOSPEARL®, silicone particles from GE Silicones, Wilton, CT), waxes, amides (*e.g.* erucamide, oleamide, stearamide, behenamide, ethylene-bis-stearamide, ethylene-bis-oleamide, stearyl erucamide and other slip agents), molecular sieves, and combinations thereof. The mineral particles can lower blocking by creating a physical gap between articles, while the organic anti-blocking agents can migrate to the surface to limit surface adhesion. Where used, the amount of the anti-blocking agent in the polymer blend can be from greater than 0 to 3 wt%, from 0.0001 to 2 wt%, from 0.001 to 1 wt%, or from 0.001 to 0.5 wt% of the total weight of the polymer blend. Some anti-blocking agents have been described in Zweifel Hans et al., "Plastics Additives Handbook," Hanser Gardner Publications, Cincinnati, Ohio, 5th edition, Chapter 7, pages 585-600 (2001).

Optionally, the polymer blends disclosed herein can comprise a plasticizer. In general, a plasticizer is a chemical that can increase the flexibility and lower the glass transition temperature of polymers. Any plasticizer known to a person of ordinary skill in the art may be added to the polymer blends disclosed herein. Non-limiting examples of plasticizers include abietates, adipates, alkyl sulfonates, azelates, benzoates, chlorinated paraffins, citrates, epoxides, glycol ethers and their esters, glutarates, hydrocarbon oils, isobutyrates, oleates, pentaerythritol derivatives, phosphates, phthalates, esters, polybutenes, ricinoleates, sebacates, sulfonamides, tri- and pyromellitates, biphenyl derivatives, stearates, difuran diesters, fluorine-containing plasticizers, hydroxybenzoic acid esters, isocyanate adducts, multi-ring aromatic compounds, natural product derivatives, nitriles, siloxane-based plasticizers, tar-based products, thioeters and combinations thereof. Where used, the amount of the plasticizer in the polymer blend can be from greater than 0 to 15 wt%, from 0.5 to 10 wt%, or from 1 to 5 wt% of the total weight of the polymer blend. Some plasticizers have been described in George Wypych, "Handbook of Plasticizers," ChemTec Publishing, Toronto-Scarborough, Ontario (2004).

In some embodiments, the polymer blends disclosed herein optionally comprise an antioxidant that can prevent the oxidation of polymer components and organic additives in the polymer blends. Any antioxidant known to a person

of ordinary skill in the art may be added to the polymer blends disclosed herein. Non-limiting examples of suitable antioxidants include aromatic or hindered amines such as alkyl diphenylamines, phenyl-α- naphthylamine, alkyl or aralkyl substituted phenyl-α-naphthylamine, alkylated p-phenylene diamines, tetramethyl-diaminodiphenylamine and the like; phenols such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (*e.g.*, IRGANOX™ 1010, from Ciba Geigy, New York); acryloyl modified phenols; octadecyl-3,5-di-t-butyl-4-hydroxycinnamate (*e.g.,* IRGANOX™ 1076, commercially available from Ciba Geigy); phosphites and phosphonites; hydroxylamines; benzofuranone derivatives; and combinations thereof. Where used, the amount of the antioxidant in the polymer blend can be from greater than 0 to 5 wt%, from 0.0001 to 2.5 wt%, from 0.001 to 1 wt%, or from 0.001 to 0.5 wt% of the total weight of the polymer blend. Some antioxidants have been described in Zweifel Hans et al., "Plastics Additives Handbook," Hanser Gardner Publications, Cincinnati, Ohio, 5th edition, Chapter 1, pages 1-140 (2001).

In other embodiments, the polymer blends disclosed herein optionally comprise an UV stabilizer that may prevent or reduce the degradation of the polymer blends by UV radiations. Any UV stabilizer known to a person of ordinary skill in the art may be added to the polymer blends disclosed herein. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Where used, the amount of the UV stabilizer in the polymer blend can be from greater than 0 to 5 wt%, from 0.01 to 3 wt%, from 0.1 to 2 wt%, or from 0.1 to 1 wt% of the total weight of the polymer blend. Some UV stabilizers have been described in Zweifel Hans et al., "Plastics Additives Handbook," Hanser Gardner Publications, Cincinnati, Ohio, 5th edition, Chapter 2, pages 141-426 (2001).

In further embodiments, the polymer blends disclosed herein optionally comprise a colorant or pigment that can change the look of the polymer blends to human eyes. Any colorant or pigment known to a person of ordinary skill in the art may be added to the polymer blends disclosed herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Where used, the amount of the colorant or pigment in the polymer blend can be from greater than 0 to 10 wt%, from 0.1 to 5 wt%, or from 0.25 to 2 wt% of the total weight of the polymer blend. Some colorants have been described in Zweifel Hans et al., "Plastics Additives Handbook," Hanser Gardner Publications, Cincinnati, Ohio, 5th edition, Chapter 15, pages 813-882 (2001).

Optionally, the polymer blends disclosed herein can comprise a filler which can be used to adjust, *inter alia,* volume, weight, costs, and/or technical performance. Any filler known to a person of ordinary skill in the art may be added to the polymer blends disclosed herein. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Where used, the amount of the filler in the polymer blend can be from greater than 0 to 80 wt%, from 0.1 to 60 wt%, from 0.5 to 40 wt%, from 1 to 30 wt%, or from 10 to 40 wt% of the total weight of the polymer blend. Some fillers have been disclosed in U.S. Patent No. 6,103,803 and Zweifel Hans et al., "Plastics Additives Handbook," Hanser Gardner Publications, Cincinnati, Ohio, 5th edition, Chapter 17, pages 901-948 (2001).

Optionally, the polymer blends disclosed herein can comprise a lubricant. In general, the lubricant can be used, *inter alia,* to modify the rheology of the molten polymer blends, to improve the surface finish of molded articles, and/or to facilitate the dispersion of fillers or pigments. Any lubricant known to a person of ordinary skill in the art may be added to the polymer blends disclosed herein. Non-limiting examples of suitable lubricants include fatty alcohols and their dicarboxylic acid esters, fatty acid esters of short-chain alcohols, fatty acids, fatty acid amides, metal soaps, oligomeric fatty acid esters, fatty acid esters of long-chain alcohols, montan waxes, polyethylene waxes, polypropylene waxes, natural and synthetic paraffin waxes, fluoropolymers and combinations thereof. Where used, the amount of the lubricant in the polymer blend can be from greater than 0 to 5 wt%, from 0.1 to 4 wt%, or from 0.1 to 3 wt% of the total weight of the polymer blend. Some suitable lubricants have been disclosed in Zweifel Hans et al., "Plastics Additives Handbook," Hanser Gardner Publications, Cincinnati, Ohio, 5th edition, Chapter 5, pages 511-552 (2001).

Optionally, the polymer blends disclosed herein can comprise an antistatic agent. Generally, the antistatic agent can increase the conductivity of the polymer blends and to prevent static charge accumulation. Any antistatic agent known to a person of ordinary skill in the art may be added to the polymer blends disclosed herein. Non-limiting examples

of suitable antistatic agents include conductive fillers *(e.g.,* carbon black, metal particles and other conductive particles), fatty acid esters *(e.g.,* glycerol monostearate), ethoxylated alkylamines, diethanolamides, ethoxylated alcohols, alkylsulfonates, alkylphosphates, quaternary ammonium salts, alkylbetaines and combinations thereof. Where used, the amount of the antistatic agent in the polymer blend can be from greater than 0 to 5 wt%, from 0.01 to 3 wt%, or from 0.1 to 2 wt% of the total weight of the polymer blend. Some suitable antistatic agents have been disclosed in Zweifel Hans et al., "Plastics Additives Handbook," Hanser Gardner Publications, Cincinnati, Ohio, 5th edition, Chapter 10, pages 627-646 (2001).

In further embodiments, the polymer blends disclosed herein optionally comprise a cross-linking agent that can be used to increase the cross-linking density of the polymer blends. Any cross-linking agent known to a person of ordinary skill in the art may be added to the polymer blends disclosed herein. Non-limiting examples of suitable cross-linking agents include organic peroxides (*e.g.,* alkyl peroxides, aryl peroxides, peroxyesters, peroxycarbonates, diacylperoxides, peroxyketals, and cyclic peroxides) and silanes (*e.g.,* vinyltrimethoxysilane, vinyltriethoxysilane, vinyltris(2-methoxyethoxy)silane, vinyltriacetoxysilane, vinylmethyldimethoxysilane, and 3-methacryloyloxypropyltrimethoxysilane). Where used, the amount of the cross-linking agent in the polymer blend can be from greater than 0 to 20 wt%, from 0.1 to 15 wt%, or from 1 to 10 wt% of the total weight of the polymer blend. Some suitable cross-linking agents have been disclosed in Zweifel Hans et al., "Plastics Additives Handbook," Hanser Gardner Publications, Cincinnati, Ohio, 5th edition, Chapter 14, pages 725-812 (2001).

The cross-linking of the polymer blends can also be initiated by any radiation means known in the art, including, but not limited to, electron-beam irradiation, beta irradiation, gamma irradiation, corona irradiation, and UV radiation with or without cross-linking catalyst. US2002/0132923 A1 and U.S. Patent No. 6,803,014 disclose electron-beam irradiation methods that can be used in embodiments of the invention.

Preparation of the Polymer blends

The components of the polymer blends, *i.e.,* the ethylene/a-olefin interpolymer, the polyolefin and the optional additives, can be mixed or blended using methods known to a person of ordinary skill in the art, preferably methods that can provide a substantially homogeneous distribution of the polyolefin and/or the additives in the ethylene/a-olefin interpolymer. Non-limiting examples of suitable blending methods include melt blending, solvent blending, extruding, and the like.

In some embodiments, the ingredients of the polymer blends are melt blended by a method as described by Guerin et al. in U.S. Patent No. 4,152,189. First, all solvents, if there are any, are removed from the ingredients by heating to an appropriate elevated temperature of 100°C to 200°C or 150°C to 175°C at a pressure of 5 torr (667 Pa) to 10 torr (1333 Pa). Next, the ingredients are weighed into a vessel in the desired proportions and the polymer blend is formed by heating the contents of the vessel to a molten state while stirring.

In other embodiments, the ingredients of the polymer blends are processed using solvent blending. First, the ingredients of the desired polymer blend are dissolved in a suitable solvent and the mixture is then mixed or blended. Next, the solvent is removed to provide the polymer blend.

In further embodiments, physical blending devices that provide dispersive mixing, distributive mixing, or a combination of dispersive and distributive mixing can be useful in preparing homogenous blends. Both batch and continuous methods of physical blending can be used. Non-limiting examples of batch methods include those methods using BRABENDER® mixing equipments (e.g., BRABENDER PREP CENTER®, available from C. W. Brabender Instruments, Inc., South Hackensack, N.J.) or BANBURY® internal mixing and roll milling (available from Farrel Company, Ansonia, Conn.) equipment. Non-limiting examples of continuous methods include single screw extruding, twin screw extruding, disk extruding, reciprocating single screw extruding, and pin barrel single screw extruding. In some embodiments, the additives can be added into an extruder through a feed hopper or feed throat during the extrusion of the ethylene/a-olefin interpolymer, the polyolefin or the polymer blend. The mixing or blending of polymers by extrusion has been described in C. Rauwendaal, "Polymer Extrusion", Hanser Publishers, New York, NY, pages 322-334 (1986).

When one or more additives are required in the polymer blends, the desired amounts of the additives can be added in one charge or multiple charges to the ethylene/a-olefin interpolymer, the polyolefin or the polymer blend. Furthermore, the addition can take place in any order. In some embodiments, the additives are first added and mixed or blended with the ethylene/a-olefin interpolymer and then the additive-containing interpolymer is blended with the polyolefin. In other embodiments, the additives are first added and mixed or blended with the polyolefin and then the additive-containing polyolefin is blended with the ethylene/a-olefin interpolymer. In further embodiments, the ethylene/a-olefin interpolymer is blended with the polyolefin first and then the additives are blended with the polymer blend.

Alternatively, master batches containing high concentrations of the additives can be used. In general, master batches can be prepared by blending either the ethylene/a-olefin interpolymer, the polyolefin or the polymer blend with high concentrations of additives. The master batches can have additive concentrations from 1 to 50 wt%, from 1 to 40 wt%, from 1 to 30 wt%, or from 1 to 20 wt% of the total weight of the polymer blend. The master batches can then be

added to the polymer blends in an amount determined to provide the desired additive concentrations in the end products. In some embodiments, the master batch contains a slip agent, an anti-blocking agent, a plasticizer, an antioxidant, a UV stabilizer, a colorant or pigment, a filler, a lubricant, an antifogging agent, a flow aid, a coupling agent, a cross-linking agent, a nucleating agent, a surfactant, a solvent, a flame retardant, an antistatic agent, or a combination thereof. In other embodiment, the master batch contains a slip agent, an anti-blocking agent or a combination thereof. In other embodiment, the master batch contains a slip agent.

Applications of the Polymer blends

The polymer blends disclosed herein can be used to manufacture durable articles for the automotive, construction, medical, food and beverage, electrical, appliance, business machine, and consumer markets. In some embodiments, the polymer blends are used to manufacture flexible durable parts or articles selected from toys, grips, soft touch handles, bumper rub strips, floorings, auto floor mats, wheels, casters, furniture and appliance feet, tags, seals, profiles, automotive and residential window seals, flooring and wall base covering, calendared sheeting for automotive interiors and commercial roofing, calendared film for pipe wrap and tapes, thermoplastic wire and cable jacketing, injection molded caps and lids used as closure seals, gaskets such as static and dynamic gaskets, automotive doors, bumper fascia, grill components, rocker panels, hoses, linings, office supplies, seals, liners, diaphragms, tubes, lids, stoppers, plunger tips, delivery systems, kitchen wares, shoes, shoe bladders and shoe soles. In other embodiments, the polymer blends can be used to manufacture durable parts or articles that require a high tensile strength and low compression set. In further embodiments, the polymer blends can be used to manufacture durable parts or articles that require a high upper service temperature and low modulus.

The polymer blends can be used to prepare these durable parts or articles with known polymer processes such as extrusion (*e.g.,* sheet extrusion and profile extrusion), injection molding, molding, rotational molding, and blow molding. In general, extrusion is a process by which a polymer is propelled continuously along a screw through regions of high temperature and pressure where it is melted and compacted, and finally forced through a die. The extruder can be a single screw extruder, a multiple screw extruder, a disk extruder or a ram extruder. The die can be a film die, blown film die, sheet die, pipe die, tubing die or profile extrusion die. The extrusion of polymers has been described in C. Rauwendaal, "Polymer Extrusion", Hanser Publishers, New York, NY (1986); and M.J. Stevens, "Extruder Principals and Operation," Ellsevier Applied Science Publishers, New York, NY (1985).

Profile extrusion molding is a popular method for producing continuous uniform thermoplastic items having often complex cross sections for use as, for example, automobile exterior trim. The profile assumes the shape of the extrusion die of choice, and is cut and end-capped to form such articles as body side moldings. A single profile may be designed to fit many models of cars, making profile extrusion a popular after market process. A wide processing range of thermoplastic materials permits high outputs in profile extrusion. Continuous operation of an extruder permits uniform production of plastic products. The temperature required along the extruder barrel, adapter and die depend upon the specific extrusion process being conducted and the nature of the plastic used.

In a typical extrusion process, resin pellets are either gravity fed or force fed from a hopper into single or twin screw extruders and are conveyed along the screw surface. Solid and liquid additives, such as reinforcing additives and fillers, are often incorporated into the mix, and must be homogenously combined via distributive or dispersive mixing by the screw. U.S. Patents No. 6,682,811, No. 5,783,620, No. 5,951,930, No. 5,382,395, No. 4,256,685 and No. 5,468,530 teach various methods of profile extrusion which can be used in certain embodiments of the invention.

Injection molding is also widely used for manufacturing a variety of plastic parts for various applications. In general, injection molding is a process by which a polymer is melted and injected at high pressure into a mold, which is the inverse of the desired shape, to form parts of the desired shape and size. The mold can be made from metal, such as steel and aluminum. The injection molding of polymers has been described in Beaumont et al., "Successful Injection Molding: Process, Design, and Simulation," Hanser Gardner Publications, Cincinnati, Ohio (2002).

Molding is generally a process by which a polymer is melted and led into a mold, which is the inverse of the desired shape, to form parts of the desired shape and size. Molding can be pressureless or pressure-assisted. The molding of polymers is described in Hans-Georg Elias "An Introduction to Plastics," Wiley-VCH, Weinhei, Germany, pp. 161-165 (2003).

Rotational molding is a process generally used for producing hollow plastic products. By using additional post-molding operations, complex components can be produced as effectively as other molding and extrusion techniques. Rotational molding differs from other processing methods in that the heating, melting, shaping, and cooling stages all occur after the polymer is placed in the mold, therefore no external pressure is applied during forming. The rotational molding of polymers has been described in Glenn Beall, "Rotational Molding : Design, Materials & Processing," Hanser Gardner Publications, Cincinnati, Ohio (1998).

Blow molding can be used for making hollow plastics containers. The process includes placing a softened polymer in the center of a mold, inflating the polymer against the mold walls with a blow pin, and solidifying the product

by cooling. There are three general types of blow molding: extrusion blow molding, injection blow molding, and stretch blow molding. Injection blow molding can be used to process polymers that cannot be extruded. Stretch blow molding can be used for difficult to blow crystalline and crystallizable polymers such as polypropylene. The blow molding of polymers has been described in Norman C. Lee, "Understanding Blow Molding," Hanser Gardner Publications, Cincinnati, Ohio (2000).

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

EXAMPLES

**Testing Methods**

In the examples that follow, the following analytical techniques are employed:

**GPC Method for Samples 1-4 and A-C**

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx Rapid GPC system is used to determine the molecular weight data for each sample. A Gilson 350 pump set at 2.0 ml/min flow rate is used to pump helium-purged 1,2-dichlorobenzene stabilized with 300 ppm Ionol as the mobile phase through three Plgel 10 micrometer ($\mu$m) Mixed B 300mm x 7.5mm columns placed in series and heated to 160°C. A Polymer Labs ELS 1000 Detector is used with the Evaporator set to 250°C, the Nebulizer set to 165°C, and the nitrogen flow rate set to 1.8 SLM at a pressure of 60-80 psi (400-600 kPa) $N_2$. The polymer samples are heated to 160°C and each sample injected into a 250 $\mu$l loop using the liquid-handling robot and a heated needle. Serial analysis of the polymer samples using two switched loops and overlapping injections are used. The sample data is collected and analyzed using Symyx Epoch™ software. Peaks are manually integrated and the molecular weight information reported uncorrected against a polystyrene standard calibration curve.

**Standard CRYSTAF Method**

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

**DSC Standard Method (Excluding Samples 1-4 and A-C)**

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to - 40°C at 10°C/min cooling rate and held at -40°C for 3 minutes. The sample is then heated to 150°C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

**GPC Method (Excluding Samples 1-4 and A-C)**

The gel permeation chromatographic system consists of either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.
Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431(M_{polystyrene})$.
Polyethylene equivalent molecular weight calculations are performed using Viscotek TriSEC software Version 3.0.

**Compression Set**

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°C, followed by cooling inside the press with cold running water at 86 MPa.

**Density**

Samples for density measurement are prepared according to ASTM D 1928. Measurements are made within one hour of sample pressing using ASTM D792, Method B.

**Flexural/Secant Modulus/ Storage Modulus**

Samples are compression molded using ASTM D 1928. Flexural and 2 percent secant moduli are measured according to ASTM D-790. Storage modulus is measured according to ASTM D 5026-01 or equivalent technique.

**Optical properties**

Films of 0.4 mm thickness are compression molded using a hot press (Carver Model #4095-4PR1001R). The pellets are placed between polytetrafluoroethylene sheets, heated at 190°C at 55 psi (380 kPa) for 3 min, followed by 1.3 MPa for 3 min, and then 2.6 MPa for 3 min. The film is then cooled in the press with running cold water at 1.3 MPa for 1 min. The compression molded films are used for optical measurements, tensile behavior, recovery, and stress relaxation.
Clarity is measured using BYK Gardner Haze-gard as specified in ASTM D 1746.
45° gloss is measured using BYK Gardner Glossmeter Microgloss 45° as specified in ASTM D-2457
Internal haze is measured using BYK Gardner Haze-gard based on ASTM D 1003 Procedure A. Mineral oil is applied to the film surface to remove surface scratches.

**Mechanical Properties - Tensile, Hysteresis, and Tear**

Stress-strain behavior in uniaxial tension is measured using ASTM D 1708 microtensile specimens. Samples are stretched with an Instron at 500 % $min^{-1}$ at 21°C. Tensile strength and elongation at break are reported from an

average of 5 specimens.

100% and 300% Hysteresis is determined from cyclic loading to 100% and 300% strains using ASTM D 1708 microtensile specimens with an Instron™ instrument. The sample is loaded and unloaded at 267 % $min^{-1}$ for 3 cycles at 21°C. Cyclic experiments at 300% and 80°C are conducted using an environmental chamber. In the 80 °C experiment, the sample is allowed to equilibrate for 45 minutes at the test temperature before testing. In the 21 °C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\%\,\mathrm{Re}\,\mathrm{cov}\,ery = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the 1st unloading cycle.

Stress relaxation is measured at 50 percent strain and 37 °C for 12 hours using an Instron™ instrument equipped with an environmental chamber. The gauge geometry was 76 mm x 25 mm x 0.4 mm. After equilibrating at 37°C for 45 min in the environmental chamber, the sample was stretched to 50% strain at 333% $min^{-1}$. Stress was recorded as a function of time for 12 hours. The percent stress relaxation after 12 hours was calculated using the formula:

$$\%\ Stress\ Relaxation = \frac{L_0 - L_{12}}{L_0} \times 100$$

where $L_0$ is the load at 50% strain at 0 time and $L_{12}$ is the load at 50 percent strain after 12 hours.

Tensile notched tear experiments are carried out on samples having a density of 0.88 g/cc or less using an Instron™ instrument. The geometry consists of a gauge section of 76 mm x 13 mm x 0.4 mm with a 2 mm notch cut into the sample at half the specimen length. The sample is stretched at 508 mm $min^{-1}$ at 21 °C until it breaks. The tear energy is calculated as the area under the stress-elongation curve up to strain at maximum load. An average of at least 3 specimens are reported.

TMA

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with 1.5 mm radius tip (P/N N519-0416) is applied to the surface of the sample disc with IN force. The temperature is raised at 5°C/min from 25°C. The probe penetration distance is measured as a function of temperature. The experiment ends when the probe has penetrated 1 mm into the sample.

DMA

Dynamic Mechanical Analysis (DMA) is measured on compression molded disks formed in a hot press at 180°C at 10 MPa pressure for 5 minutes and then water cooled in the press at 90°C / min. Testing is conducted using an ARES controlled strain rheometer (TA instruments) equipped with dual cantilever fixtures for torsion testing.

A 1.5mm plaque is pressed and cut in a bar of dimensions 32x12mm. The sample is clamped at both ends between fixtures separated by 10mm (grip separation ΔL) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation Δ L increases with the temperature, particularly above the melting or softening point of the polymer sample. The test stops at the maximum temperature or when the gap between the fixtures reaches 65 mm.

**Melt Index**

Melt index, or $I_2$, is measured in accordance with ASTM D 1238, Condition 190°C/2.16 kg. Melt index, or $I_{10}$ is

also measured in accordance with ASTM D 1238, Condition 190°C/10 kg.

### ATREF

Analytical temperature rising elution fractionation (ATREF) analysis is conducted according to the method described in USP 4,798,081 and Wilde, L.; Ryle, T.R.; Knobeloch, D.C.; Peat, I.R.; Determination of Branching Distributions in Polyethylene and Ethylene Copolymers, J. Polym. Sci., 20, 441-455 (1982). The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared detector. An ATREF chromatogram curve is then generated by eluting the crystallized polymer sample from the column by slowly increasing the temperature of the eluting solvent (trichlorobenzene) from 20 to 120°C at a rate of 1.5°C/min.

### $^{13}C$ NMR Analysis

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}C$ resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989).

### Polymer Fractionation by TREF

Large-scale TREF fractionation is carried by dissolving 15-20 g of polymer in 2 liters of 1,2,4-trichlorobenzene (TCB)by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel, 0.028" (0.7mm) diameter cut wire shot (available from Pellets, Inc. 63 Industrial Drive, North Tonawanda, NY, 14120). The column is immersed in a thermally controlled oil jacket, set initially to 160 °C. The column is first cooled ballistically to 125 °C, then slow cooled to 20 °C at 0.04 °C per minute and held for one hour. Fresh TCB is introduced at about 65 ml/min while the temperature is increased at 0.167 °C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60 °C and weighed on an analytical balance before further testing.

### Melt Strength

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 mm/$sec^2$. The required tensile force is recorded as a function of the take-up speed of the nip rolls. The maximum tensile force attained during the test is defined as the melt strength. In the case of polymer melt exhibiting draw resonance, the tensile force before the onset of draw resonance was taken as melt strength. The melt strength is recorded in centiNewtons ("cN").

### Catalysts

The term "overnight", if used, refers to a time of approximately 16-18 hours, the term "room temperature", refers to a temperature of 20-25 °C, and the term "mixed alkanes" refers to a commercially obtained mixture of $C_{6-9}$ aliphatic hydrocarbons available under the trade designation Isopar E®, from ExxonMobil Chemical Company. In the event the name of a compound herein does not conform to the structural representation thereof, the structural representation shall control. The synthesis of all metal complexes and the preparation of all screening experiments were carried out in a dry

nitrogen atmosphere using dry box techniques. All solvents used were HPLC grade and were dried before their use.

MMAO refers to modified methylalumoxane, a triisobutylaluminum modified methylalumoxane available commercially from Akzo-Nobel Corporation.

The preparation of catalyst (B1) is conducted as follows.

a) Preparation of (1-methylethyl)(2-hydroxy-3,5-di(t-butyl)phenyl)methylimine

3,5-Di-t-butylsalicylaldehyde (3.00 g) is added to 10 mL of isopropylamine. The solution rapidly turns bright yellow. After stirring at ambient temperature for 3 hours, volatiles are removed under vacuum to yield a bright yellow, crystalline solid (97 percent yield).

b) Preparation of 1,2-bis-(3,5-di-t-butylphenylene)(1-(N-(1-methylethyl)immino)methyl)(2-oxoyl) zirconium dibenzyl

A solution of (1-methylethyl)(2-hydroxy-3,5-di(t-butyl)phenyl)imine (605 mg, 2.2 mmol) in 5 mL toluene is slowly added to a solution of $Zr(CH_2Ph)_4$ (500 mg, 1.1 mmol) in 50 mL toluene. The resulting dark yellow solution is stirred for 30 min. Solvent is removed under reduced pressure to yield the desired product as a reddish-brown solid.

The preparation of catalyst (B2) is conducted as follows.

a) Preparation of (1-(2-methylcyclohexyl)ethyl)(2-oxoyl-3,5-di(t-butyl)phenyl)imine

2-Methylcyclohexylamine (8.44 mL, 64.0 mmol) is dissolved in methanol (90 mL), and di-t-butylsalicaldehyde (10.00 g, 42.67 mmol) is added. The reaction mixture is stirred for three hours and then cooled to -25°C for 12 hrs. The resulting yellow solid precipitate is collected by filtration and washed with cold methanol (2 x 15 mL), and then dried under reduced pressure. The yield is 11.17 g of a yellow solid. $^1$H NMR is consistent with the desired product as a mixture of isomers.

b) Preparation of bis-(1-(2-methylcyclohexyl)ethyl)(2-oxoyl-3,5-di(t-butyl)phenyl)immino)zirconium dibenzyl

A solution of (1-(2-methylcyclohexyl)ethyl)(2-oxoyl-3,5-di(t-butyl)phenyl)imine (7.63 g, 23.2 mmol) in 200 mL toluene is slowly added to a solution of $Zr(CH_2Ph)_4$ (5.28 g, 11.6 mmol) in 600 mL toluene. The resulting dark yellow solution is stirred for 1 hour at 25°C. The solution is diluted further with 680 mL toluene to give a solution having a concentration of 0.00783 M.

**Cocatalyst 1** A mixture of methyldi($C_{14-18}$ alkyl)ammonium salts of tetrakis(pentafluorophenyl)borate (hereinafter armeenium borate), prepared by reaction of a long chain trialkylamine (Armeen™ M2HT, available from Akzo-Nobel, Inc.), HCl and $Li[B(C_6F_5)_4]$, substantially as disclosed in USP 5,919,9883, Ex. 2.

**Cocatalyst 2** Mixed $C_{14-18}$ alkyldimethylammonium salt of bis(tris(pentafluorophenyl)-alumane)-2-undecylimidazolide, prepared according to USP 6,395,671, Ex. 16.

**Shuttling Agents** The shuttling agents employed include diethylzinc (DEZ, SA1), di(i-butyl)zinc (SA2), di(n-hexyl)zinc (SA3), triethylaluminum (TEA, SA4), trioctylaluminum (SA5), triethylgallium (SA6), i-butylaluminum bis(dimethyl(t-butyl)siloxane) (SA7), i-butylaluminum bis(di(trimethylsilyl)amide) (SA8), n-octylaluminum di(pyridine-2-methoxide) (SA9), bis(n-octadecyl)i-butylaluminum (SA10), i-butylaluminum bis(di(n-pentyl)amide) (SA11), n-octylaluminum bis(2,6-di-t-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheptaneamide) (SA16), n-octylaluminum bis(2,3,6,7-dibenzo-1-azacycloheptaneamide) (SA17), n-octylaluminum bis(dimethyl(t-butyl)siloxide(SA18), ethylzinc (2,6-diphenylphenoxide) (SA19), and ethylzinc (t-butoxide) (SA20).

Examples 1-4, Comparative Examples A*-C*

General High Throughput Parallel Polymerization Conditions

Polymerizations are conducted using a high throughput, parallel polymerization reactor (PPR) available from Symyx technologies, Inc. and operated substantially according to USP's 6,248,540, 6,030,917, 6,362,309, 6,306,658, and 6,316,663. Ethylene copolymerizations are conducted at 130°C and 200 psi (1.4 MPa) with ethylene on demand using 1.2 equivalents of cocatalyst 1 based on total catalyst used (1.1 equivalents when MMAO is present). A series of polymerizations are conducted in a parallel pressure reactor (PPR) contained of 48 individual reactor cells in a 6 x 8 array that are fitted with a pre-weighed glass tube. The working volume in each reactor cell is 6000 $\mu$L. Each cell is temperature and pressure controlled with stirring provided by individual stirring paddles. The monomer gas and quench gas are plumbed directly into the PPR unit and controlled by automatic valves. Liquid reagents are robotically added to

each reactor cell by syringes and the reservoir solvent is mixed alkanes. The order of addition is mixed alkanes solvent (4 ml), ethylene, 1-octene comonomer (1 ml), cocatalyst 1 or cocatalyst 1/MMAO mixture, shuttling agent, and catalyst or catalyst mixture. When a mixture of cocatalyst 1 and MMAO or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until predetermined ethylene consumptions are reached. After quenching with CO, the reactors are cooled and the glass tubes are unloaded. The tubes are transferred to a centrifuge/vacuum drying unit, and dried for 12 hours at 60 °C. The tubes containing dried polymer are weighed and the difference between this weight and the tare weight gives the net yield of polymer. Results are contained in Table 1. In Table 1 and elsewhere in the application, comparative compounds are indicated by an asterisk (*).

Examples 1-4 demonstrate the synthesis of linear block copolymers by the present invention as evidenced by the formation of a very narrow MWD, essentially monomodal copolymer when DEZ is present and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting copolymers of the invention are distinguishable based on branching or density.

**Table 1**

| Ex. | Cat. (A1) (μmol) | Cat (B1) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |
| 1 | 0.06 | 0.1 | 0.192 | - | DEZ (8.0) | 0.1974 | 28715 | 1.19 | 4.8 |
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the polymers produced according to the invention have a relatively narrow polydispersity (Mw/Mn) and larger block-copolymer content (trimer, tetramer, or larger) than polymers prepared in the absence of the shuttling agent.

Further characterizing data for the polymers of Table 1 are determined by reference to the figures. More specifically DSC and ATREF results show the following:

The DSC curve for the polymer of example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of example 2 shows a peak with a 109.7°C melting point (Tm) with a heat of fusion of 214.0 J/g. The corresponding CRYSTAF curve shows the tallest peak at 46.2°C with a peak area of 57.0 percent. The difference between the DSC Tm and the Tcrystaf is 63.5°C.

The DSC curve for the polymer of example 3 shows a peak with a 120.7°C melting point (Tm) with a heat of fusion of 160.1 J/g. The corresponding CRYSTAF curve shows the tallest peak at 66.1°C with a peak area of 71.8 percent. The difference between the DSC Tm and the Tcrystaf is 54.6°C.

The DSC curve for the polymer of example 4 shows a peak with a 104.5°C melting point (Tm) with a heat of fusion of 170.7 J/g. The corresponding CRYSTAF curve shows the tallest peak at 30 °C with a peak area of 18.2 percent. The difference between the DSC Tm and the Tcrystaf is 74.5°C.

The DSC curve for Comparative Example A* shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for Comparative Example B* shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for Comparative Example C* shows a 125.3°C melting point (Tm) with a heat of fusion of 143.0 J/g. The corresponding CRYSTAF curve shows the tallest peak at 81.8 °C with a peak area of 34.7 percent as well as

a lower crystalline peak at 52.4 °C. The separation between the two peaks is consistent with the presence of a high crystalline and a low crystalline polymer. The difference between the DSC Tm and the Tcrystaf is 43.5°C.

Examples 5-19, Comparative Examples D*-F*, Continuous Solution Polymerization, Catalyst A1/B2 + DEZ

Continuous solution polymerizations are carried out in a computer controlled autoclave reactor equipped with an internal stirrer. Purified mixed alkanes solvent (Isopar™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer. Process details and results are contained in Table 2. Selected polymer properties are provided in Table 3.

**Table 2 Process details for preparation of exemplary polymers**

| Ex. | $C_8H_{16}$ kg/hr | Solv. kg/hr | $H_2$ sccm[1] | T °C | Cat A1[2] ppm | Cat A1 Flow kg/hr | Cat B2[3] ppm | B2 Flow kg/hr | DEZ Conc % | DEZ Flow kg/hr | Cocat Cone. ppm | Cocat Flow kg/hr | $[C_2H_4]/[DEZ]$[4] | Poly Rate[5] kg/hr | Conv %[6] | Solids % | Eff[7]. |
|---|---|---|---|---|---|---|---|---|---|---|---|---|---|---|---|---|---|
| D* | 1.63 | 12.7 | 29.90 | 120 | 142.2 | 0.14 | - | -- | 0.19 | 0.32 | 820 | 0.17 | 536 | 1.81 | 88.8 | 11.2 | 95.2 |
| E* | " | 9.5 | 5.00 | " | -- | -- | 109 | 0.10 | 0.19 | " | 1743 | 0.40 | 485 | 1.47 | 89.9 | 11.3 | 126.8 |
| F* | " | 11.3 | 251.6 | " | 71.7 | 0.06 | 30.8 | 0.06 | -- | -- | " | 0.11 | - | 1.55 | 88.5 | 10.3 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | " | " | 4.92 | " | " | 0.10 | 30.4 | 0.08 | 0.17 | 0.32 | " | 0.18 | 570 | 1.65 | 89.3 | 11.1 | 172.7 |
| 7 | " | " | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 30.3 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | " | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 90.2 |
| 19 | 0.32 | " | " | 122 | 71.1 | 0.06 | " | " | " | 0.09 | 1743 | 0.08 | 367 | 1.16 | 90.74 | 8.4 | 106.0 |

* Comparative, not an example of the invention

1 standard $cm^3$/min

2. [N-(2,6-di(1-methylethyl)phenyl)amido)(2-isopropylphenyl)(α-naphthalen-2-diyl(6-pyridin-2-diyl)methane)]hafnium dimethyl

3. bis-(1-(2-methylcyclohexyl)ethyl)(2-oxoyl-3,5-di(t-butyl)phenyl)immino)zirconium dibenzyl

4. molar ratio in reactor

5. polymer production rate

6. percent ethylene conversion in reactor

7 efficiency, kg polymer/g M where g M = g Hf + g Zr

**Table 3 Properties of exemplary polymers**

| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (°C) | $T_c$ (°C) | TCRYSTAF (°C) | Tm-TCRYSTAF (°C) | CRYSTAF Peak Area (percent) |
|---|---|---|---|---|---|---|---|---|---|---|---|---|---|
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137,300 | 9,980 | 13.8 | 90 | 125 | 111 | 78 | 47 | 20 |
| 5 | 0.8786 | 1.5 | 9.8 | 6.7 | 104,600 | 53,200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

The resulting polymers are tested by DSC and ATREF as with previous examples. Results are as follows:

The DSC curve for the polymer of example 5 shows a peak with a 119.6 °C melting point (Tm) with a heat of fusion of 60.0 J/g. The corresponding CRYSTAF curve shows the tallest peak at 47.6°C with a peak area of 59.5 percent. The delta between the DSC Tm and the Tcrystaf is 72.0°C.

The DSC curve for the polymer of example 6 shows a peak with a 115.2 °C melting point (Tm) with a heat of fusion of 60.4 J/g. The corresponding CRYSTAF curve shows the tallest peak at 44.2°C with a peak area of 62.7 percent. The delta between the DSC Tm and the Tcrystaf is 71.0°C.

The DSC curve for the polymer of example 7 shows a peak with a 121.3 °C melting point with a heat of fusion of 69.1 J/g. The corresponding CRYSTAF curve shows the tallest peak at 49.2°C with a peak area of 29.4 percent. The delta between the DSC Tm and the Tcrystaf is 72.1°C.

The DSC curve for the polymer of example 8 shows a peak with a 123.5 °C melting point (Tm) with a heat of fusion of 67.9 J/g. The corresponding CRYSTAF curve shows the tallest peak at 80.1°C with a peak area of 12.7 percent. The delta between the DSC Tm and the Tcrystaf is 43.4°C.

The DSC curve for the polymer of example 9 shows a peak with a 124.6 °C melting point (Tm) with a heat of fusion of 73.5 J/g. The corresponding CRYSTAF curve shows the tallest peak at 80.8°C with a peak area of 16.0 percent. The delta between the DSC Tm and the Tcrystaf is 43.8°C.

The DSC curve for the polymer of example 10 shows a peak with a 115.6 °C melting point (Tm) with a heat of fusion of 60.7 J/g. The corresponding CRYSTAF curve shows the tallest peak at 40.9°C with a peak area of 52.4 percent. The delta between the DSC Tm and the Tcrystaf is 74.7°C.

The DSC curve for the polymer of example 11 shows a peak with a 113.6 °C melting point (Tm) with a heat of fusion of 70.4 J/g. The corresponding CRYSTAF curve shows the tallest peak at 39.6°C with a peak area of 25.2 percent. The delta between the DSC Tm and the Tcrystaf is 74.1°C.

The DSC curve for the polymer of example 12 shows a peak with a 113.2 °C melting point (Tm) with a heat of fusion of 48.9 J/g. The corresponding CRYSTAF curve shows no peak equal to or above 30 °C. (Tcrystaf for purposes of further calculation is therefore set at 30°C). The delta between the DSC Tm and the Tcrystaf is 83.2°C.

The DSC curve for the polymer of example 13 shows a peak with a 114.4 °C melting point (Tm) with a heat of fusion of 49.4 J/g. The corresponding CRYSTAF curve shows the tallest peak at 33.8 °C with a peak area of 7.7 percent. The delta between the DSC Tm and the Tcrystaf is 84.4°C.

The DSC for the polymer of example 14 shows a peak with a 120.8 °C melting point (Tm) with a heat of fusion of 127.9 J/g. The corresponding CRYSTAF curve shows the tallest peak at 72.9 °C with a peak area of 92.2 percent. The delta between the DSC Tm and the Tcrystaf is 47.9°C.

The DSC curve for the polymer of example 15 shows a peak with a 114.3 °C melting point (Tm) with a heat of fusion of 36.2 J/g. The corresponding CRYSTAF curve shows the tallest peak at 32.3 °C with a peak area of 9.8 percent. The delta between the DSC Tm and the Tcrystaf is 82.0°C.

The DSC curve for the polymer of example 16 shows a peak with a 116.6 °C melting point (Tm) with a heat of fusion of 44.9 J/g. The corresponding CRYSTAF curve shows the tallest peak at 48.0 °C with a peak area of 65.0 percent. The delta between the DSC Tm and the Tcrystaf is 68.6°C.

The DSC curve for the polymer of example 17 shows a peak with a 116.0 °C melting point (Tm) with a heat of fusion of 47.0 J/g. The corresponding CRYSTAF curve shows the tallest peak at 43.1 °C with a peak area of 56.8 percent. The delta between the DSC Tm and the Tcrystaf is 72.9°C.

The DSC curve for the polymer of example 18 shows a peak with a 120.5 °C melting point (Tm) with a heat of fusion of 141.8 J/g. The corresponding CRYSTAF curve shows the tallest peak at 70.0 °C with a peak area of 94.0 percent. The delta between the DSC Tm and the Tcrystaf is 50.5 °C.

The DSC curve for the polymer of example 19 shows a peak with a 124.8 °C melting point (Tm) with a heat of fusion of 174.8 J/g. The corresponding CRYSTAF curve shows the tallest peak at 79.9 °C with a peak area of 87.9 percent. The delta between the DSC Tm and the Tcrystaf is 45.0 °C.

The DSC curve for the polymer of Comparative Example D* shows a peak with a 37.3°C melting point (Tm) with a heat of fusion of 31.6 J/g. The corresponding CRYSTAF curve shows no peak equal to and above 30°C. Both of these values are consistent with a resin that is low in density. The delta between the DSC Tm and the Tcrystaf is 7.3°C.

The DSC curve for the polymer of Comparative Example E* shows a peak with a 124.0 °C melting point (Tm) with a heat of fusion of 179.3 J/g. The corresponding CRYSTAF curve shows the tallest peak at 79.3°C with a peak area of 94.6 percent. Both of these values are consistent with a resin that is high in density. The delta between the DSC Tm and the Tcrystaf is 44.6°C.

The DSC curve for the polymer of Comparative Example F* shows a peak with a 124.8 °C melting point (Tm) with a heat of fusion of 90.4 J/g. The corresponding CRYSTAF curve shows the tallest peak at 77.6°C with a peak area of 19.5 percent. The separation between the two peaks is consistent with the presence of both a high crystalline and a low crystalline polymer. The delta between the DSC Tm and the Tcrystaf is 47.2°C.

**Physical Property Testing**

Polymer samples are evaluated for physical properties such as high temperature resistance properties, as evidenced by TMA temperature testing, pellet blocking strength, high temperature recovery, high temperature compression set and storage modulus ratio, G'(25°C)/G'(100°C). Several commercially available polymers are included in the tests: Comparative Example G* is a substantially linear ethylene/1-octene copolymer (AFFINITY®, available from The Dow Chemical Company), Comparative Example H* is an elastomeric, substantially linear ethylene/ 1-octene copolymer (AFFINITY®EG8100, available from The Dow Chemical Company), Comparative Example I* is a substantially linear ethylene/1-octene copolymer (AFFINITY®PL1840, available from The Dow Chemical Company), Comparative Example J* is a hydrogenated styrene/butadiene/styrene triblock copolymer (KRATON™ G1652, available from KRATON Polymers), Comparative Example K* is a thermoplastic vulcanizate (TPV, a polyolefin blend containing dispersed therein a crosslinked elastomer). Results are presented in Table 4.

Table 4 High Temperature Mechanical Properties

| Ex. | TMA-1mm penetration (°C) | Pellet Blocking Strength lb/ft$^2$ (kPa) | G'(25°C)/G'(100°C) | 300 % Strain Recovery (80°C) (percent) | Compression Set (70°C) (percent) |
|---|---|---|---|---|---|
| D* | 51 | - | 9 | Failed | - |
| E* | 130 | - | 18 | - | - |
| F* | 70 | 141 (6.8) | 9 | Failed | 100 |
| 5 | 104 | 0(0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0(0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (10.2) | 29 | Failed | 100 |
| I* | 111 | - | 11 | - | - |
| J* | 107 | - | 5 | Failed | 100 |
| K* | 152 | - | 3 | - | 40 |

In Table 4, Comparative Example F* (which is a physical blend of the two polymers resulting from simultaneous polymerizations using catalyst A1 and B1) has a 1 mm penetration temperature of about 70°C, while Examples 5-9 have a 1 mm penetration temperature of 100°C or greater. Further, examples 10-19 all have a 1 mm penetration temperature of greater than 85°C, with most having 1 mm TMA temperature of greater than 90°C or even greater than 100°C. This shows that the novel polymers have better dimensional stability at higher temperatures compared to a physical blend. Comparative Example J* (a commercial SEBS) has a good 1 mm TMA temperature of about 107°C, but it has very poor

(high temperature 70°C) compression set of about 100 percent and it also failed to recover (sample broke) during a high temperature (80°C) 300 percent strain recovery. Thus the exemplified polymers have a unique combination of properties unavailable even in some commercially available, high performance thermoplastic elastomers.

Similarly, Table 4 shows a low (good) storage modulus ratio, G'(25°C)/G'(100°C), for the inventive polymers of 6 or less, whereas a physical blend (Comparative Example F*) has a storage modulus ratio of 9 and a random ethylene/octene copolymer (Comparative Example G*) of similar density has a storage modulus ratio an order of magnitude greater (89). It is desirable that the storage modulus ratio of a polymer be as close to 1 as possible. Such polymers will be relatively unaffected by temperature, and fabricated articles comprising such polymers can be usefully employed over a broad temperature range. This feature of low storage modulus ratio and temperature independence is particularly useful in elastomer applications such as in pressure sensitive adhesive formulations.

The data in Table 4 also demonstrate that the polymers of the invention possess improved pellet blocking strength. In particular, Example 5 has a pellet blocking strength of 0 MPa, meaning it is free flowing under the conditions tested, compared to Comparative Examples F* and G* which show considerable blocking. Blocking strength is important since bulk shipment of polymers having large blocking strengths can result in product clumping or sticking together upon storage or shipping, resulting in poor handling properties.

High temperature (70°C) compression set for the inventive polymers is generally good, meaning generally less than about 80 percent, preferably less than about 70 percent and especially less than about 60 percent. In contrast, Comparative Examples F*, G*, H* and J* all have a 70°C compression set of 100 percent (the maximum possible value, indicating no recovery). Good high temperature compression set (low numerical values) is especially needed for applications such as gaskets, window profiles, and o-rings.

Table 5 Ambient Temperature Mechanical Properties

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| D* | 12 | 5 | - | - | 10 | 1074 | - | - | 91 | 83 | 760 | - | - |
| E* | 895 | 589 | | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | - | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 | 30 |
| 12 | 20 | 17 | 12 | 961 | 13 | 931 | - | 1247 | 91 | 75 | 700 | 17 | - |
| 13 | 16 | 14 | - | - | 13 | 814 | - | 691 | 91 | - | - | 21 | - |
| 14 | 212 | 160 | - | - | 29 | 857 | - | - | - | - | - | - | - |
| 15 | 18 | 14 | 12 | 1127 | 10 | 1573 | - | 2074 | 89 | 83 | 770 | 14 | - |
| 16 | 23 | 20 | - | - | 12 | 968 | - | - | 88 | 83 | 1040 | 13 | - |
| 17 | 20 | 18 | - | - | 13 | 1252 | - | 1274 | 13 | 83 | 920 | 4 | - |
| 18 | 323 | 239 | - | - | 30 | 808 | - | - | - | - | - | - | - |
| 19 | 706 | 483 | - | - | 36 | 871 | - | - | - | - | - | - | - |
| G* | 15 | 15 | - | - | 17 | 1000 | - | 746 | 86 | 53 | 110 | 27 | 50 |
| H* | 16 | 15 | - | - | 15 | 829 | - | 569 | 87 | 60 | 380 | 23 | - |
| I* | 210 | 147 | - | - | 29 | 697 | - | - | - | - | - | - | - |
| J* | - | - | - | - | 32 | 609 | - | - | 93 | 96 | 1900 | 25 | - |

(continued)

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| K* | - | - | - | - | - | - | - | - | - | - | - | 30 | - |

1. Tested at 51 cm/minute
2. measured at 38°C for 12 hours

Table 5 shows results for mechanical properties for the new polymers as well as for various comparison polymers at ambient temperatures. It may be seen that the inventive polymers have very good abrasion resistance when tested according to ISO 4649, generally showing a volume loss of less than 90 $mm^3$, preferably less than 80 $mm^3$, and especially less than 50 $mm^3$. In this test, higher numbers indicate higher volume loss and consequently lower abrasion resistance.

Tear strength as measured by tensile notched tear strength of the inventive polymers is generally 1000 mJ or higher, as shown in Table 5. Tear strength for the inventive polymers can be as high as 3000 mJ, or even as high as 5000 mJ. Comparative polymers generally have tear strengths no higher than 750 mJ.

Table 5 also shows that the polymers of the invention have better retractive stress at 150 percent strain (demonstrated by higher retractive stress values) than some of the comparative samples. Comparative Examples F*, G* and H* have retractive stress value at 150 percent strain of 400 kPa or less, while the inventive polymers have retractive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic bands.

Table 5 also shows that stress relaxation (at 50 percent strain) is also improved (less) for the inventive polymers as compared to, for example, Comparative Example G*. Lower stress relaxation means that the polymer retains its force better in applications such as diapers and other garments where retention of elastic properties over long time periods at body temperatures is desired.

Optical Testing

Table 6 Polymer Optical Properties

| Ex. | Internal Haze (percent) | Clarity (percent) | 45° Gloss (percent) |
|---|---|---|---|
| F* | 84 | 22 | 49 |
| G* | 5 | 73 | 56 |
| 5 | 13 | 72 | 60 |
| 6 | 33 | 69 | 53 |
| 7 | 28 | 57 | 59 |
| 8 | 20 | 65 | 62 |
| 9 | 61 | 38 | 49 |
| 10 | 15 | 73 | 67 |
| 11 | 13 | 69 | 67 |
| 12 | 8 | 75 | 72 |
| 13 | 7 | 74 | 69 |
| 14 | 59 | 15 | 62 |
| 15 | 11 | 74 | 66 |
| 16 | 39 | 70 | 65 |
| 17 | 29 | 73 | 66 |
| 18 | 61 | 22 | 60 |
| 19 | 74 | 11 | 52 |
| G* | 5 | 73 | 56 |
| H* | 12 | 76 | 59 |
| I* | 20 | 75 | 59 |

The optical properties reported in Table 6 are based on compression molded films substantially lacking in orientation. Optical properties of the polymers may be varied over wide ranges, due to variation in crystallite size, resulting

from variation in the quantity of chain shuttling agent employed in the polymerization.

Extractions of Multi-Block Copolymers

Extraction studies of the polymers of examples 5, 7 and Comparative Example E* are conducted. In the experiments, the polymer sample is weighed into a glass fritted extraction thimble and fitted into a Kumagawa type extractor. The extractor with sample is purged with nitrogen, and a 500mL round bottom flask is charged with 350 mL of diethyl ether. The flask is then fitted to the extractor. The ether is heated while being stirred. Time is noted when the ether begins to condense into the thimble, and the extraction is allowed to proceed under nitrogen for 24 hours. At this time, heating is stopped and the solution is allowed to cool. Any ether remaining in the extractor is returned to the flask. The ether in the flask is evaporated under vacuum at ambient temperature, and the resulting solids are purged dry with nitrogen. Any residue is transferred to a weighed bottle using successive washes of hexane. The combined hexane washes are then evaporated with another nitrogen purge, and the residue dried under vacuum overnight at 40°C. Any remaining ether in the extractor is purged dry with nitrogen.

A second clean round bottom flask charged with 350 mL of hexane is then connected to the extractor. The hexane is heated to reflux with stirring and maintained at reflux for 24 hours after hexane is first noticed condensing into the thimble. Heating is then stopped and the flask is allowed to cool. Any hexane remaining in the extractor is transferred back to the flask. The hexane is removed by evaporation under vacuum at ambient temperature, and any residue remaining in the flask is transferred to a weighed bottle using successive hexane washes. The hexane in the flask is evaporated by a nitrogen purge, and the residue is vacuum dried overnight at 40°C.

The polymer sample remaining in the thimble after the extractions is transferred from the thimble to a weighed bottle and vacuum dried overnight at 40°C. Results are contained in Table 7.

Table 7

| Sample | wt. (g) | ether soluble (g) | ether soluble (percent) | $C_8$ mole percent[1] | hexane soluble (g) | hexane soluble (percent) | $C_8$ mole percent[1] | residue $C_8$ mole percent[1] |
|---|---|---|---|---|---|---|---|---|
| Comp. F* | 1.097 | 0.063 | 5.69 | 12.2 | 0.245 | 22.35 | 13.6 | 6.5 |
| Ex. 5 | 1.006 | 0.041 | 4.08 | - | 0.040 | 3.98 | 14.2 | 11.6 |
| Ex. 7 | 1.092 | 0.017 | 1.59 | 13.3 | 0.012 | 1.10 | 11.7 | 9.9 |

[1]Determined by C NMR

**Additional Polymer Examples 19 A-F, Continuous Solution Polymerization, Catalyst A1/B2 + DEZ**

Continuous solution polymerizations are carried out in a computer controlled well-mixed reactor. Purified mixed alkanes solvent (Isopar™ E available from ExxonMobil Chemical Company), ethylene, 1-octene, and hydrogen (where used) are combined and fed to a 102 liter (27 gallon) reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 3.8 MPa (550 psig) pressure. Upon exiting the reactor, water and additive are injected in the polymer solution. The water hydrolyzes the catalysts, and terminates the polymerization reactions. The post reactor solution is then heated in preparation for a two-stage devolatization. The solvent and unreacted monomers are removed during the devolatization process. The polymer melt is pumped to a die for underwater pellet cutting.

Process details and results are contained in Table 8A. Selected polymer properties are provided in Table 8B and 8C.

Table 8A Polymerization Conditions

| Ex. | $C_2H_4$ lb/hr | $C_8H_{16}$ lb/hr | Solv. lb/hr | $H_2$ sccm[1] | T °C | Cat A1[2] Conc. ppm | Cat A1 Flow lb/hr | Cat B2[3] Conc. ppm | Cat B2 Flow lb/hr | DEZ Conc wt% | DEZ Flow lb/hr | Cocat 1 Conc. ppm | Cocat 1 Flow lb/hr | Cocat 2 Conc. ppm | Cocat 2 Flow lb/hr | [Zn][4] in polymer ppm | Poly Rate[5] lb/hr | Conv[6] wt% | Polymer wt% | Eff.[7] |
|---|---|---|---|---|---|---|---|---|---|---|---|---|---|---|---|---|---|---|---|---|
| 19a | 55.29 | 32.03 | 323.03 | 101 | 120 | 600 | 0.25 | 200 | 0.42 | 3.0 | 0.70 | 4500 | 0.65 | 525 | 0.33 | 248 | 83.94 | 88.0 | 17.28 | 297 |
| 19b | 53.95 | 28.96 | 325.3 | 577 | 120 | 600 | 0.25 | 200 | 0.55 | 3.0 | 0.24 | 4500 | 0.63 | 525 | 0.11 | 90 | 80.72 | 88.1 | 17.2 | 295 |
| 19c | 55.53 | 30.97 | 324.37 | 550 | 120 | 600 | 0.216 | 200 | 0.609 | 3.0 | 0.69 | 4500 | 0.61 | 525 | 0.33 | 246 | 84.13 | 88.9 | 17.16 | 293 |
| 19d | 54.83 | 30.58 | 326.33 | 60 | 120 | 600 | 0.22 | 200 | 0.63 | 3.0 | 1.39 | 4500 | 0.66 | 525 | 0.66 | 491 | 82.56 | 88.1 | 17.07 | 280 |
| 19e | 54.95 | 31.73 | 326.75 | 251 | 120 | 600 | 0.21 | 200 | 0.61 | 3.0 | 1.04 | 4500 | 0.64 | 525 | 0.49 | 368 | 84.11 | 88.4 | 17.43 | 288 |
| 19f | 50.43 | 34.80 | 330.33 | 124 | 120 | 600 | 0.20 | 200 | 0.60 | 3.0 | 0.74 | 4500 | 0.52 | 525 | 0.35 | 257 | 85.31 | 87.5 | 17.09 | 319 |
| 19g | 50.25 | 33.08 | 325.61 | 188 | 120 | 600 | 0.19 | 200 | 0.59 | 3.0 | 0.54 | 4500 | 0.51 | 525 | 0.16 | 194 | 83.72 | 87.5 | 17.34 | 333 |
| 19h | 50.15 | 34.87 | 318.17 | 58 | 120 | 600 | 0.21 | 200 | 0.66 | 3.0 | 0.70 | 4500 | 0.52 | 525 | 0.70 | 259 | 83.21 | 88.0 | 17.46 | 312 |
| 19i | 55.02 | 34.02 | 323.59 | 53 | 120 | 600 | 0.44 | 200 | 0.74 | 3.0 | 1.72 | 4500 | 0.70 | 525 | 1.65 | 600 | 86.63 | 88.0 | 17.6 | 275 |
| 19j | 7.46 | 9.04 | 50.6 | 47 | 120 | 150 | 0.22 | 76.7 | 0.36 | 0.5 | 0.19 | - | - | - | - | - | - | - | - | - |

1 standard $cm^3$/min
2. [N-(2,6-di(1-methylethyl)phenyl)amido)(2-isopropylphenyl)(α-naphthalen-2-diyl(6-pyridin-2-diyl)methane)]hafnium dimethyl
3. bis-(1-(2-methylcyclohexyl)ethyl)(2-oxoyl-3,5-di(t-butyl)phenyl)immino) zirconium dimethyl
4. ppm in final product calculated by mass balance
5. polymer production rate
6. weight percent ethylene conversion in reactor
7 efficiency, kg polymer/g M where g M = g Hf + g Z

Table 8B Polymer Physical properties

| Polymer Ex. No. | Density (g/cc) | I2 | I10 | I10/I2 | Mw (g/mol) | Mn (g/mol) | Mw/Mn | Heat of Fusion (J/g) | Tm (°C) | Tc (°C) | TCRYSTAF (°C) | Tm-TCRYSTAF (°C) | CRYST AF Peak Area (wt%) |
|---|---|---|---|---|---|---|---|---|---|---|---|---|---|
| 19g | 0.8649 | 0.9 | 6.4 | 7.1 | 135000 | 64800 | 2.1 | 26 | 120 | 92 | 30 | 90 | 90 |
| 19h | 0.8654 | 1.0 | 7.0 | 7.1 | 131600 | 66900 | 2.0 | 26 | 118 | 88 | - | - | - |

Table 8C Average Block Index For exemplary polymers[1]

| Example | Zn/C2[2] | Average BI |
|---|---|---|
| Polymer F | 0 | 0 |
| Polymer 8 | 0.56 | 0.59 |
| Polymer 19a | 1.3 | 0.62 |
| Polymer 5 | 2.4 | 0.52 |
| Polymer 19b | 0.56 | 0.54 |
| Polymer 19h | 3.15 | 0.59 |

1. Additional information regarding the measurement and calculation of the block indices for various polymers is disclosed in WO 2006/101966.
2. Zn/C2 *1000 = (Zn feed flow*Zn concentration/1000000/Mw of Zn)/(Total Ethylene feed flow*(1-fractional ethylene conversion rate)/Mw of Ethylene)*1000. Please note that "Zn" in "Zn/C2*1000" refers to the amount of zinc in diethyl zinc ("DEZ") used in the polymerization process, and "C2" refers to the amount of ethylene used in the polymerization process.

Blend Examples

Blend compositions of various branched LDPEs and polypropylene (PP) and an inventive block copolymer were prepared, evaluated and tested for properties. The blend components were first dry blended and were then melt blended in a Haake batch mixer at 40 rpm and melt temperature of 180-190 °C for the LDPE blends and 200 °C for the PP blends. The blends were mixed for 10 minutes in the Haake and subsequently removed for compression molding and testing. The LDPE and PP blends were melted at 190 °C and 200 °C, respectively, for 3 minutes and compression molded at 5.5 MPa pressure for 2 min. The molten materials were then quenched in a press equilibrated at room temperature.

The extrudate blend was also tested for physical properties including melt strength, mechanical, thermal properties, and rheological properties. The blend compositions ranged from 15 weight percent to 85 weight percent of the inventive block copolymer (typically at 0%, 15%, 30%, 50%, 70%, 85% and 100%). The remaining balance was a branched polyethylene or polypropylene. Table 9 gives information about the polymers used in the examples.

Table 9. Resin Information

| Polymer Designation | Grade/Type | Conomoner Type | Density (g/cc) | Melt Index (190 °C, $I_2$) | Melt Strength (cN) |
|---|---|---|---|---|---|
| LDPE 620i[1] | Low density polyethylene | Octene | 0.924 | 1.8 | 13.4 |
| LDPE 662i [1] | Low density polyethylene | Octene | 0.919 | 0.5 | 27.4 |
| PP PF814[1] | High melt strength polypropylene | None | 0.902 | 2.5 (MFR) | 11.9 |
| 1. A polyolefin product obtained from The Dow Chemical Co., Midland, MI. | | | | | |

Various physical property data were obtained on the blend compositions made according to the above procedures and are provided in Table 10.

Melt Strength (MS, measured in cN) and Melt Extensibility (ME, measured in mm/s)

The melt strength and melt extensibility measurements were conducted by pulling strands of molten polymers or blends at constant acceleration until breakage occurred. The experimental set-up consisted of a capillary rheometer and a Rheotens apparatus as the take-up device. The force required to uniaxially extend the strands was recorded as a function of the take-up velocity. The maximum force attained before either draw resonance or breakage occurred, was defined as the Melt Strength. The corresponding velocity at which draw resonance or breakage occurred was defined as the Melt Extensibility

Draw resonance, which terminated in breakage, was indicated by the onset of a periodic oscillation of increasing amplitude in the measured force profile. In the absence of any observable draw resonance, the melt strength was defined

as the force at break. These tests were run under the following conditions:

Temperature 1 : 190 C for LDPE based blends
Temperature 2 : 200 C for HMS PP based blends
Capillary length: 30.0 mm
Capillary diameter: 2.0 mm
Piston diameter: 12.0 mm
Piston velocity: 0.265 mm/s
Shear rate: 38.2 s-1
Draw down distance (die exit to take-up wheels : 100 mm Cooling conditions : ambient air Acceleration : 2.4 mm/s2

Table 10 Physical Properties Data

| | | | | | | | Density | $I_2$ | Melt |
|---|---|---|---|---|---|---|---|---|---|
| | | | | | | | g/cm$^3$ (g/cc) | 190°C | Strength |
| | Description | | | | | | g/10min | cN | |
| A | Polymer Made in Example 6 0.879/1.1 MI | | | | | | 0.879 | 1.1 | 2.7 |
| B | Polymer Made in Example 11 0.883/0.9 MI | | | | | | 0.883 | 0.9 | 3.1 |
| C | Affinity® VP8770 0.885/1 MI | | | | | | 0.885 | 1.0 | 4.2 |
| D | LDPE 662I 0.919/0.47 MI | | | | | | 0.919 | 0.5 | 27.4 |
| E | LDPE 620 0.924/ 1.8 MI | | | | | | 0.924 | 1.8 | 13.4 |
| F | PF814 0.902g/cc, 2.5 MFR | | | | | | 0.902 | 2.5* | 11.9† |
| Blends | % A | % B | % C | % D | % E | %F | | | |
| 1 | 85 | | | 15 | | | | 0.9 | 13.8 |
| 2 | 70 | | | 30 | | | | 0.7 | 28.7 |
| 3 | 85 | | | | 15 | | | 1.1 | 7.9 |
| 4 | 70 | | | | 30 | | | 1.1 | 12.6 |
| 5 | 50 | | | | 50 | | | 1.0 | 18.2 |
| 6 | 30 | | | | 70 | | | 1.1 | 20.1 |
| 7 | 15 | | | | 85 | | | 1.3 | 18.4 |
| 8 | | 70 | | 30 | | | | 0.5 | 26.2 |
| 9 | | 70 | | | 30 | | | 0.8 | 11.4 |
| 10 | | 50 | | | 50 | | | 0.9 | 15.0 |
| 11 | | 15 | | | 85 | | | 1.3 | 16.3 |
| 12 | | | 70 | 30 | | | | 0.5 | 28.1 |
| 13 | | | 70 | | 30 | | | 0.9 | 13.3 |
| 14 | | | 50 | | 50 | | | 1.0 | 16.6 |
| 15 | | | 15 | | 85 | | | 1.2 | 15.9 |
| 16 | 85 | | | | | 15 | - | 2.0* | 7.2† |
| 17 | 70 | | | | | 30 | - | 2.6* | 9.4† |
| 18 | 50 | | | | | 50 | - | 4.6* | 8.0† |
| 19 | 30 | | | | | 70 | - | 5.6* | 8.9† |
| 20 | 15 | | | | | 85 | - | 6.7* | 8.6† |
| 21 | | 70 | | | | 30 | - | 2.5* | 8.3† |

(continued)

| Blends | % A | % B | % C | % D | % E | %F | | | |
|---|---|---|---|---|---|---|---|---|---|
| 22 | | 30 | | | | 70 | - | 5.6* | 9.7† |
| Measured at * 230 °C and; † at 200 °C | | | | | | | | | |

Various plots are constructed based on the above data. Figure 8 is a plot of melt strength as a function of melt index, $I_2$, for various ethylene polymers before rheology modification. As can be seen, there is almost a linear relationship between melt strength, MS, and melt index, $I_2$, for these ethylene polymers before rheology modification.

Figure 9 shows plots obatined from melt strength measurements for an inventive interpolymer, LDPE 662i, and blends thereof. It is noted that inventive polymer 6 has a relatively low melt strength, whereas LDPE 662i has a relatively high melt strength. Adding about 15% LDPE 662i to inventive polymer 6 (curve 1) increases the melt strenght by at least two fold. Adding about 30% LDPE 662i to inventive polymer 6 (curve 2) increases the melt strength close to that of LDPE 662i.

Figure 10 shows plots obtained from melt strength measurements for an inventive interpolymer of Example 6, LDPE 620, and blends thereof. It is notable that the melt strength exceeds that of LDPE 620 when LDPE 620 is present in the blend by at least 50% by weight.

Figure 11 shows plots of crystallization peak temperature and melting peak temperature as a function as the weight percent of LDPE 620 in a blend with an inventive interpolymer of Example 6. Both the melting peak temperature and crystallization peak temperature were obtained by Differential Scanning Calorimetry ("DSC"): one is from heating curves; the other from the cooling curves. Only one melting or crystallization peak was observed, indicating co-crystallization and melt miscibility of the inventive interpolymer and LDPE 620.

Figure 12 shows plots of loss modulus, G", as a function of temperature for an inventive interpolymer of Example 6, LDPE 620, and blends thereof.

Figure 13 shows SEM micrographs for an inventive interpolymer of Example 6, LDPE 620, and blends thereof. The morphology of Polymer Example 6 is distinctively different than that of LDPE 620. Their blends exhibits some unique morphology as shown in Figures 13(C)-(D).

Figure 14 shows plots of viscosity as a function of temperature for an inventive interpolymer of Example 6, LDPE 620, and blends thereof. It is notable that the blends show similar crystallization profile as pure LDPE 620, even at about 15% by weight.

Figure 15 shows plots of shear shinning behavior for an inventive interpolymer of Example 6, LDPE 620, and blends thereof. The figure indicates that shearing shinning increases as LDPE 620 increases in the blends.

Figure 16 shows plots of stress-strain behavior for an inventive interpolymer of Example 6, LDPE 620, and blends thereof. The figure indicates that the blends exhibit show synergistic enhancement in tensile toughness. It is notable that the ultimate strength of the blends are higher than that of the respective polymers.

Figure 17 shows plots of shear shinning behavior for an inventive interpolymer of Example 19a, a polypropylene (designed as "PF814"), and blends thereof. The figure indicates that, with increasing PP content, the zero shear viscosity of the blend decreases whereas shear thinning increases.

Figure 18 shows plots of crystallization behavior for a polypropylene (designed as "PF814"), and its blends with an inventive interpolymer of Example 19a. The figure indicates that, at less than 50% PP content, two crystallization transitions are observed (each corresponding to either blend component). On the other hand, at PP content equal to or more than 50%, the crystallization transition is governed by PP.

Figure 19 shows plots of melt strength measurements for an inventive interpolymer of Example 19 A, a polypropylene (designed as "PF814"), and blends thereof. The figure indicates that, with increasing PP content, the melt strength of the blends increases.

Figure 20 shows a plot of melt strength versus melt flow rate ("MFR") for an inventive interpolymer of Example 19 A, a polypropylene (designed as "PF814"), and blends thereof. As the polypropylene content increases (as indicated by the MFR), the melt strength increases but is not in a linear fashion.

As demonstrated above, embodiments of the invention provide rheology modification of ethylene/$\alpha$-olefin interpolymers by blending the interpolymers with a branched polyolefin. Synergistic effects are observed in the resulting blends, especially in those blended with a LDPE and high melt strength polypropylene. A balance of properties between melt strength, shear thinning, and processibility, is obtained. The blends provide improved line speeds, smooth surfaces and reduce melt fracture. Therefore, scrap rates due to surface defects are reduced. Improved melt strength provides greater shape retention for extruded profiles and gaskets. Improved melt strength also makes it suitable for making better performing foams, crosslinked or uncrosslinked. Additional advantages and characteristics are apparent to those skilled in the art.

While the invention has been described with respect to a limited number of embodiments, the specific features

of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

## Claims

**1.** A polymer blend comprising:

(i) at least one ethylene/α-olefin interpolymer, wherein the ethylene/α-olefin interpolymer is a block interpolymer and:

(a) has a $M_w/M_n$ from 1.7 to 3.5, at least one melting point, $T_m$, in °C (degrees Celsius), and a density, d, in g/cm$^3$ (grams/cubic centimeter), wherein the numerical values of $T_m$ and d correspond to the relationship:

$$T_m > -2002.9 + 4538.5(d) - 2422.2(d)^2,$$

or

(b) has a $M_w/M_n$ from 1.7 to 3.5, and is **characterized by** heat of fusion, ΔH in J/g, and a delta quantity, ΔT, in °C (degrees Celsius) defined as temperature difference between the tallest DSC peak and the tallest CRYSTAF peak, wherein the numerical values of ΔT and ΔH have the following relationships:

$\Delta T > -0.1299(\Delta H) + 62.81$ for ΔH greater than zero and up to 130 J/g,
$\Delta T \geq 48$ °C for ΔH greater than 130 J/g,

wherein the CRYSTAF peak is determined using at least 5 percent of the cumulative polymer, and if less than 5 percent of the polymer has an identifiable CRYSTAF peak, then the CRYSTAF temperature is 30 °C; or
(c) is **characterized by** an elastic recovery, Re, in percent at 300 percent strain and 1 cycle measured with a compression-molded film of the ethylene/α-olefin interpolymer, and has a density, d, in g/cm$^3$ (grams/cubic centimeter), wherein the numerical values of Re and d satisfy the following relationship when the ethylene/α-olefin interpolymer is substantially free of a cross-linked phase:

$$Re > 1481-1629(d);$$

or

(d) has a comonomer content of the TREF fraction which elutes between 40°C and 130°C greater than or equal to the quantity (-0.2013)T+21.07 where T is the numerical value of the peak elution temperature of the TREF fraction measured in °C; or
(e) is **characterized by** a storage modulus at 25 °C, G' (25°C), and a storage modulus at 100 °C, G'(100 °C), wherein the ratio of G'(25 °C) to G' (100°C) is from 1:1 to 10:1; and

(ii) at least one branched polyolefin with a branching index of less than 1.

**2.** The polymer blend of claim 1, wherein the ethylene/α-olefin interpolymer has a $M_w/M_n$ from 1.7 to 3.5, at least one melting point, $T_m$ in °C (degrees Celsius), and a density, d, in g/cm$^3$ (grams/cubic centimeter), wherein the numerical values of $T_m$ and d correspond to the relationship:

$$T_m \geq 858.91 - 1825.3(d) + 1112.8(d)^2.$$

**3.** The polymer blend of claim 1, wherein the ethylene/α-olefin interpolymer has a $M_w/M_n$ from 1.7 to 3.5 and is **characterized by** a heat of fusion, ΔH in J/g, and a delta quantity, ΔT in °C (degrees Celsius) defined as the temperature

difference between the tallest DSC peak and the tallest CRYSTAF peak, wherein the numerical values of $\Delta T$ and $\Delta H$ have the following relationships:

$\Delta T > -0.1299(\Delta H) + 62.81$ for $\Delta H$ greater than zero and up to 130 J/g,
$\Delta T \geq 48$ °C for $\Delta H$ greater than 130 J/g,

wherein the CRYSTAF peak is determined using at least 5 percent of the cumulative polymer, and if less than5 percent of the polymer has an identifiable CRYSTAF peak, then the CRYSTAF temperature is 30 °C.

**4.** The polymer blend of claim 1, wherein the ethylene/$\alpha$-olefin interpolymer is **characterized by** an elastic recovery, Re, in percent at 300 percent strain and 1 cycle measured with a compression-molded film of the ethylene/$\alpha$-olefin interpolymer, and has a density, d, in g/cm$^3$ (grams/cubic centimeter), wherein the numerical values of Re and d satisfy the following relationship when the ethylene/$\alpha$-olefin interpolymer is substantially free of a cross-linked phase:

$$Re > 1481 - 1629\ (d).$$

**5.** The polymer blend of claim 4, wherein the numerical values of Re and d satisfy the following relationship:

$$Re > 1491 - 1629(d).$$

**6.** The polymer blend of claim 4, wherein the numerical values of Re and d satisfy the following relationship:

$$Re > 1501 - 1629(d).$$

**7.** The polymer blend of claim 4, wherein the numerical values of Re and d satisfy the following relationship:

$$Re > 1511 - 1629(d).$$

**8.** A polymer blend comprising:

(i) at least one ethylene/$\alpha$-olefin interpolymer, wherein the ethylene/$\alpha$-olefin interpolymer is a block interpolymer and has:

(a) at least one molecular fraction which elutes between 40°C and 130°C when fractionated using TREF, **characterized in that** the fraction has a block index of at least 0.5 and up to 1 and a molecular weight distribution, $M_w/M_n$, greater than 1.3 or
(b) an average block index greater than 0.1 and up to 1.0 and a molecular weight distribution, $M_w/M_n$, greater than 1.3 and

(ii) at least one branched polyolefin with a branching index of less than 1.

**9.** The polymer blend of claims 1 or 8, wherein the ethylene/$\alpha$-olefin interpolymer has a comonomer content of the TREF molecular fraction which elutes between 40 °C and 130°C greater than or equal to the quantity (-0.2013)T+21.07 where T is the numerical value of the peak elution temperature of the TREF fraction measured in °C.

**10.** The polymer blend of claims 1 or 8, wherein the ethylene/$\alpha$-olefin interpolymer is **characterized by** a storage modulus at 25 °C, G'(25 °C), and a storage modulus at 100 °C, G'(100 °C), wherein the ratio of G'(25 °C) to G'(100°C) is from 1:1 to 10:1.

**11.** The polymer blend of claims 1 or 8, wherein the $\alpha$-olefin is styrene, propylene, 1-butene, 1-hexene, 1-octene, 4-methyl-1-pentene, norbornene, 1-decene, 1,5-hexadiene, or a combination thereof.

**12.** The polymer blend of claim 1 or 8 wherein the ethylene/$\alpha$-olefin interpolymer is present in the range from 5% to 95% by weight of the total composition.

**13.** The polymer blend of claim 1 or 8, wherein the polyolefin is a high melt strength polypropylene.

**14.** The polymer blend of claim 13, wherein the polypropylene is impact modified polypropylene.

**15.** The polymer blend of claim 13, wherein the polypropylene has a melt strength of at least 15 cN.

**16.** The polymer blend of claim 1 or 8, wherein the polyolefin is a polyethylene.

**17.** The polymer blend of claim 16, wherein the polyolefin is a low density polyethylene.

**18.** The polymer blend of claim 17, wherein the low density polyethylene is **characterized by** a melt strength, MS, and a melt index, $I_2$, wherein the melt strength and melt index satisfies the following relationship: $MS>24.1-18.0*log_{10}(I_2)$.

**19.** The polymer blend of claim 17, wherein the low density polyethylene has a melt strength of at least 15 cN.

**20.** A profile comprising the polymer blend of claim 1 or 8.

**21.** A gasket comprising the polymer blend of claim 1 or 8.

**22.** A foam comprising the polymer blend of claim 1 or 8.

**23.** A thermoformed article comprising the polymer blend of claim 1 or 8.

**24.** The profile of claim 20, wherein the profile is prepared by profile extrusion.

**25.** The gasket of claim 21, wherein the gasket is prepared by profile extrusion.

**Patentansprüche**

**1.** Polymermischung, umfassend:

(i) mindestens ein Ethylen/$\alpha$,-Olefin-Interpolymer, wobei das Ethylen/$\alpha$,-Olefin-Interpolymer ein Blockinterpolymer ist und:

(a) eine $M_w/M_n$ von 1,7 bis 3,5 hat, mindestens einen Schmelzpunkt, $T_m$, in °C (Graden Celsius), und eine Dichte, d, in g/cm$^3$ (Gramm/Kubikzentimeter), wobei die numerischen Werte von $T_m$ und d der Beziehung entsprechen:

$$T_m \geq -2002,9 + 4538,5(d) - 2422,2(d)^2;$$

oder
(b) eine $M_w/M_n$ von 1,7 bis 3,5 hat, und **gekennzeichnet ist, durch** eine Fusionswärme, $\Delta H$ in J/g, und eine Deltamenge, $\Delta T$, in °C (Graden Celsius) definiert als die Temperaturdifferenz zwischen dem höchsten DSC-Peak und dem höchsten CRYSTAF-Peak, wobei die numerischen Werte von $\Delta T$ und $\Delta H$ die folgenden Beziehungen haben:

$\Delta T > -0,1299(\Delta H) + 62,81$ für $\Delta H$ größer als null und bis zu 130 J/g,
$\Delta T \geq 48$ °C für $\Delta H$ größer als 130 J/g,

wobei der CRYSTAF-Peak bestimmt wird unter Verwendung von mindestens 5 Prozent des kumulativen Polymers, und falls weniger als 5 Prozent des Polymers einen identifizierbaren CRYSTAF-Peak hat, dann ist die CRYSTAF-Temperatur 30 °C; oder
(c) **gekennzeichnet ist, durch** eine elastische Erholung, Re, in Prozent bei 300 Prozent Belastung und 1 Zyklus, gemessen mit einer formgepressten Folie des Ethylen/$\alpha$,-Olefin-Interpolymers, und eine Dichte, d, in g/cm$^3$ (Gramm/Kubikzentimeter) hat, wobei die numerischen Werte von Re und d die folgende Beziehung erfüllen, wenn das Ethylen/$\alpha$,-Olefin-Interpolymer im Wesentlichen frei von einer vernetzten Phase ist:

$$Re > 1481 - 1629(d);$$

oder

(d) einen Comonomergehalt einer TREF-Fraktion hat, die zwischen 40 °C und 130 °C eluiert, größer als oder gleich der Menge (-0,2013)T + 21,07, wobei T der numerische Wert der Peakelutionstemperatur der TREF-Fraktion gemessen in °C ist; oder

(e) **gekennzeichnet ist, durch** ein Speichermodul bei 25 °C, G'(25°C), und ein Speichermodul bei 100°C, G'(100°C), wobei das Verhältnis von G'(25°C) zu G'(100°C) von 1:1 bis 10:1 ist; und

(ii) mindestens ein verzweigtes Polyolefin mit einem Verzweigungsindex von weniger als 1.

**2.** Polymermischung nach Anspruch 1, wobei das Ethylen/α-Olefin-Interpolymer eine $M_w/M_n$ von 1,7 bis 3,5 hat, mindestens einen Schmelzpunkt, $T_m$, in °C (Graden Celsius), und eine Dichte, d, in g/cm$^3$ (Gramm/Kubikzentimeter), wobei die numerischen Werte von $T_m$ und d der Beziehung entsprechen:

$$T_m \geq 858{,}91 - 1825{,}3(d) + 1112{,}8(d)^2.$$

**3.** Polymermischung nach Anspruch 1, wobei das Ethylen/α-Olefin-Interpolymer eine $M_w/M_n$ von 1,7 bis 3,5 hat und **gekennzeichnet ist, durch** eine Fusionswärme, ΔH in J/g, und eine Deltamenge, ΔT, in °C (Graden Celsius) definiert als die Temperaturdifferenz zwischen dem höchsten DSC-Peak und dem höchsten CRYSTAF-Peak, wobei die numerischen Werte von ΔT und ΔH die folgenden Beziehungen haben:

$\Delta T > -0{,}1299(\Delta H) + 62{,}81$ für ΔH größer als null und bis zu 130 J/g,
$\Delta T \geq 48$ °C für ΔH größer als 130 J/g,

wobei der CRYSTAF-Peak bestimmt wird unter Verwendung von mindestens 5 Prozent des kumulativen Polymers, und falls weniger als 5 Prozent des Polymers einen identifizierbaren CRYSTAF-Peak hat, dann ist die CRYSTAF-Temperatur 30 °C.

**4.** Polymermischung nach Anspruch 1, wobei das Ethylen/α-Olefin-Interpolymer **gekennzeichnet ist, durch** eine elastische Erholung, Re, in Prozent bei 300 Prozent Belastung und 1 Zyklus, gemessen mit einer formgepressten Folie des Ethylen/α-Olefin-Interpolymers, und eine Dichte, d, in g/cm$^3$ (Gramm/Kubikzentimeter) hat, wobei die numerischen Werte von Re und d die folgende Beziehung erfüllen, wenn das Ethylen/α-Olefin-Interpolymer im Wesentlichen frei von einer vernetzten Phase ist:

$$Re > 1481 - 1629(d).$$

**5.** Polymermischung nach Anspruch 4, wobei die numerischen Werte von Re und d die folgende Beziehung erfüllen:

$$Re > 1491 - 1629(d).$$

**6.** Polymermischung nach Anspruch 4, wobei die numerischen Werte von Re und d die folgende Beziehung erfüllen:

$$Re > 1501 - 1629(d).$$

**7.** Polymermischung nach Anspruch 4, wobei die numerischen Werte von Re und d die folgende Beziehung erfüllen:

$$Re > 1511 - 1629(d).$$

**8.** Polymermischung, umfassend:

(i) mindestens ein Ethylen/α-Olefin-Interpolymer, wobei das Ethylen/α-Olefin-Interpolymer ein Blockinterpolymer ist und hat:

(a) mindestens eine molekulare Fraktion, die zwischen 40 °C und 130 °C eluiert, wenn fraktioniert unter Verwendung von TREF, **gekennzeichnet dadurch, dass** die Fraktion einen Blockindex von mindestens 0,5 bis zu 1 hat und eine Molekulargewichtsverteilung, $M_w/M_n$, größer als 3,5 oder
(b) einen durchschnittlichen Blockindex größer als 0,1 und bis zu 1,0 und eine Molekulargewichtsverteilung, $M_w/M_n$, größer als 1,3 und

(ii) mindestens ein verzweigtes Polyolefin mit einem Verzweigungsindex von weniger als 1.

**9.** Polymermischung nach Anspruch 1 oder 8, wobei das Ethylen/α-Olefin-Interpolymer einen Comonomergehalt der molekularen TREF-Fraktion hat, die zwischen 40°C und 130 °C eluiert, größer als oder gleich der Menge (-0,2013)T + 21,07), wobei T der numerische Wert, der Peakelutionstemperatur der TREF-Fraktion gemessen in °C ist.

**10.** Polymermischung nach Anspruch 1 oder 8, wobei das Ethylen/α-Olefin-Interpolymer **gekennzeichnet ist, durch** ein Speichermodul bei 25°C, G'(25°C), und ein Speichermodul bei 100 °C, G'(100 °C), wobei das Verhältnis von G'(25°C) zu G'(100°C) von 1:1 bis 10:1 ist.

**11.** Polymermischung nach Anspruch 1 oder 8, wobei das α-Olefin Styrol, Propylen, 1-Buten, 1-Hexen, 1-Octen, 4-Methyl-1-Penten, Norbornen, 1-Decen, 1,5-Hexadien, oder eine Kombination davon ist.

**12.** Polymermischung nach Anspruch 1 oder 8, wobei das Ethylen/α-Olefin-Interpolymer in einem Bereich von 5 % bis 95 %, bezogen auf das Gewicht der Gesamtzusammensetzung, vorhanden ist.

**13.** Polymermischung nach Anspruch 1 oder 8, wobei das Polyolefin ein Polypropylen mit hoher Schmelzfestigkeit ist.

**14.** Polymermischung nach Anspruch 13, wobei das Polypropylen ein schlagzäh modifiziertes Polypropylen ist.

**15.** Polymermischung nach Anspruch 13, wobei das Polypropylen eine Schmelzfestigkeit von mindestens 15 cN hat.

**16.** Polymermischung nach Anspruch 1 oder 8, wobei das Polyolefin ein Polyethylen ist.

**17.** Polymermischung nach Anspruch 16, wobei das Polyolefin ein Polyethylen geringer Dichte ist.

**18.** Polymermischung nach Anspruch 17, wobei das Polyethylen geringer Dichte **gekennzeichnet ist, durch** eine Schmelzfestigkeit, MS, und einen Schmelzindex, $I_2$, wobei die Schmelzfestigkeit und der Schmelzindex die folgende Beziehung erfüllt: $MS > 24,1 - 18,0*\log_{10}(I_2)$.

**19.** Polymermischung nach Anspruch 17, wobei das Polyethylen geringer Dichte eine Schmelzfestigkeit von mindestens 15 cN hat.

**20.** Form, umfassend die Polymermischung nach Anspruch 1 oder 8.

**21.** Dichtung, umfassend die Polymermischung nach Anspruch 1 oder 8.

**22.** Schaum, umfassend die Polymermischung nach Anspruch 1 oder 8.

**23.** Thermisch geformter Gegenstand, umfassend die Polymermischung nach Anspruch 1 oder 8.

**24.** Form nach Anspruch 20, wobei die Form durch Profilextrusion erstellt ist.

**25.** Dichtung nach Anspruch 21, wobei die Dichtung durch Profilextrusion erstellt ist.

## Revendications

**1.** Un mélange de polymères comprenant :

(i) au moins un interpolymère d'éthylène/$\alpha$-oléfine, dans lequel l'interpolymère d'éthylène/$\alpha$-oléfine est un interpolymère à bloc et :

(a) a une $M_w/M_n$ allant de 1,7 à 3,5, au moins un point de fusion, $T_m$, en °C (degrés Celsius), et une masse volumique, d, en g/cm$^3$ (grammes/centimètre cube), dans lequel les valeurs numériques de $T_m$ et d correspondent à la relation :

$$T_m > -2\,002,9 + 4\,538,5(d) - 2\,422,2(d)^2,$$

ou

(b) a une $M_w/M_n$ allant de 1,7 à 3,5, et est **caractérisé par** une chaleur de fusion, $\Delta H$ en J/g, et une quantité delta, $\Delta T$, en °C (degrés Celsius), définie comme la différence de température entre le pic DSC le plus haut et le pic CRYSTAF le plus haut, dans lequel les valeurs numériques de $\Delta T$ et $\Delta H$ ont les relations suivantes :

$\Delta T > -0,1299(\Delta H) + 62,81$ pour $\Delta H$ supérieure à zéro et allant jusqu'à 130 J/g,
$\Delta T \geq 48$ °C pour $\Delta H$ supérieure à 130 J/g,

dans lequel le pic CRYSTAF est déterminé à l'aide d'au moins 5 pour cent du polymère cumulé, et si moins de 5 pour cent du polymère a un pic CRYSTAF identifiable, alors la température CRYSTAF est de 30 °C ; ou

(c) est **caractérisé par** une recouvrance élastique, Re, en pourcentage pour une déformation de 300 pour cent et 1 cycle mesurée à l'aide d'un film moulé par compression de l'interpolymère d'éthylène/$\alpha$-oléfine, et a une masse volumique, d, en g/cm$^3$ (grammes/centimètre cube), dans lequel les valeurs numériques de Re et d satisfont à la relation suivante lorsque l'interpolymère d'éthylène/$\alpha$-oléfine est substantiellement exempt d'une phase réticulée :

$$Re > 1\,481 - 1\,629(d) ;$$

ou

(d) a une teneur en comonomère de la fraction TREF qui s'élue entre 40 °C et 130 °C supérieure ou égale à la quantité (-0,2013)T + 21,07, où T est la valeur numérique de la température d'élution de pic de la fraction TREF mesurée en °C ; ou

(e) est **caractérisé par** un module de conservation à 25 °C, G'(25 °C), et un module de conservation à 100 °C, G'(100 °C), dans lequel le rapport de G'(25 °C) à G'(100 °C) va de 1/1 à 10/1 ; et

(ii) au moins une polyoléfine ramifiée avec un indice de ramification inférieur à 1.

**2.** Le mélange de polymères de la revendication 1, dans lequel l'interpolymère d'éthylène/$\alpha$-oléfine a une $M_w/M_n$ allant de 1,7 à 3,5, au moins un point de fusion, $T_m$ en °C (degrés Celsius), et une masse volumique, d, en g/cm$^3$ (grammes/centimètre cube), dans lequel les valeurs numériques de $T_m$ et d correspondent à la relation :

$$T_m \geq 858,91 - 1\,825,3(d) + 1\,112,8(d)^2.$$

**3.** Le mélange de polymères de la revendication 1, dans lequel l'interpolymère d'éthylène/$\alpha$-oléfine a une $M_w/M_n$ allant de 1,7 à 3,5, et est **caractérisé par** une chaleur de fusion, $\Delta H$ en J/g, et une quantité delta, $\Delta T$ en °C (degrés Celsius), définie comme la différence de température entre le pic DSC le plus haut et le pic CRYSTAF le plus haut, dans lequel les valeurs numériques de $\Delta T$ et $\Delta H$ ont les relations suivantes :

$\Delta T > -0,1299(\Delta H) + 62,81$ pour $\Delta H$ supérieure à zéro et allant jusqu'à 130 J/g,
$\Delta T \geq 48$ °C pour $\Delta H$ supérieure à 130 J/g,

dans lequel le pic CRYSTAF est déterminé à l'aide d'au moins 5 pour cent du polymère cumulé, et si moins de 5 pour cent du polymère a un pic CRYSTAF identifiable, alors la température CRYSTAF est de 30 °C.

**4.** Le mélange de polymères de la revendication 1, dans lequel l'interpolymère d'éthylène/$\alpha$-oléfine est **caractérisé par** une recouvrance élastique, Re, en pourcentage pour une déformation de 300 pour cent et 1 cycle mesurée à

l'aide d'un film moulé par compression de l'interpolymère d'éthylène/α-oléfine, et a une masse volumique, d, en g/cm$^3$ (grammes/centimètre cube), dans lequel les valeurs numériques de Re et d satisfont à la relation suivante lorsque l'interpolymère d'éthylène/α-oléfine est substantiellement exempt d'une phase réticulée :

$$Re > 1\,481 - 1\,629(d).$$

**5.** Le mélange de polymères de la revendication 4, dans lequel les valeurs numériques de Re et d satisfont à la relation suivante :

$$Re > 1\,491 - 1\,629(d).$$

**6.** Le mélange de polymères de la revendication 4, dans lequel les valeurs numériques de Re et d satisfont à la relation suivante :

$$Re > 1\,501 - 1\,629(d).$$

**7.** Le mélange de polymères de la revendication 4, dans lequel les valeurs numériques de Re et d satisfont à la relation suivante :

$$Re > 1\,511 - 1\,629(d).$$

**8.** Un mélange de polymères comprenant :

(i) au moins un interpolymère d'éthylène/α-oléfine, l'interpolymère d'éthylène/α-oléfine étant un interpolymère à bloc et a :

(a) au moins une fraction moléculaire qui s'élue entre 40 °C et 130 °C lorsqu'il est fractionné à l'aide d'un TREF, **caractérisé en ce que** la fraction a un indice à bloc d'au moins 0,5 et allant jusqu'à 1 et une distribution des masses moléculaires, $M_w/M_n$, supérieure à 1,3 ou
(b) un indice à bloc moyen supérieur à 0,1 et allant jusqu'à 1,0 et une distribution des masses moléculaires, $M_w/M_n$, supérieure à 1,3 et

(ii) au moins une polyoléfine ramifiée avec un indice de ramification inférieur à 1.

**9.** Le mélange de polymères des revendications 1 ou 8, dans lequel l'interpolymère d'éthylène/α-oléfine a une teneur en comonomère de la fraction moléculaire TREF qui s'élue entre 40 °C et 130 °C supérieure ou égale à la quantité (-0,2013)T + 21,07, où T est la valeur numérique de la température d'élution de pic de la fraction TREF mesurée en °C.

**10.** Le mélange de polymères des revendications 1 ou 8, dans lequel l'interpolymère d'éthylène/α-oléfine est **caractérisé par** un module de conservation à 25 °C, G'(25 °C), et un module de conservation à 100 °C, G'(100 °C), dans lequel le rapport de G'(25 °C) à G'(100 °C) va de 1/1 à 10/1.

**11.** Le mélange de polymères des revendications 1 ou 8, dans lequel l'a-oléfine est le styrène, le propylène, le 1-butène, le 1-hexène, le 1-octène, le 4-méthyl-1-pentène, le norbornène, le 1-décène, le 1,5-hexadiène, ou une combinaison de ceux-ci.

**12.** Le mélange de polymères de la revendication 1 ou de la revendication 8, dans lequel l'interpolymère d'éthylène/α-oléfine est présent dans la gamme allant de 5 % à 95 % en poids de la composition totale.

**13.** Le mélange de polymères de la revendication 1 ou de la revendication 8, dans lequel la polyoléfine est un polypropylène à haute résistance à l'état fondu.

**14.** Le mélange de polymères de la revendication 13, dans lequel le polypropylène est un polypropylène à résistance au choc modifiée.

**15.** Le mélange de polymères de la revendication 13, dans lequel le polypropylène a une résistance à l'état fondu d'au moins 15 cN.

**16.** Le mélange de polymères de la revendication 1 ou de la revendication 8, dans lequel la polyoléfine est un polyéthylène.

**17.** Le mélange de polymères de la revendication 16, dans lequel la polyoléfine est un polyéthylène basse densité.

**18.** Le mélange de polymères de la revendication 17, dans lequel le polyéthylène basse densité est **caractérisé par** une résistance à l'état fondu, MS, et un indice de fluidité, $I_2$, dans lequel la résistance à l'état fondu et l'indice de fluidité satisfont à la relation suivante : $MS > 24,1 - 18,0*\log_{10}(I_2)$.

**19.** Le mélange de polymères de la revendication 17, dans lequel le polyéthylène basse densité a une résistance à l'état fondu d'au moins 15 cN.

**20.** Un profilé comprenant le mélange de polymères de la revendication 1 ou de la revendication 8.

**21.** Un joint d'étanchéité comprenant le mélange de polymères de la revendication 1 ou de la revendication 8.

**22.** Une mousse comprenant le mélange de polymères de la revendication 1 ou de la revendication 8.

**23.** Un article thermoformé comprenant le mélange de polymères de la revendication 1 ou de la revendication 8.

**24.** Le profilé de la revendication 20, le profilé étant préparé par extrusion de profilés.

**25.** Le joint d'étanchéité de la revendication 21, le joint d'étanchéité étant préparé par extrusion de profilés.

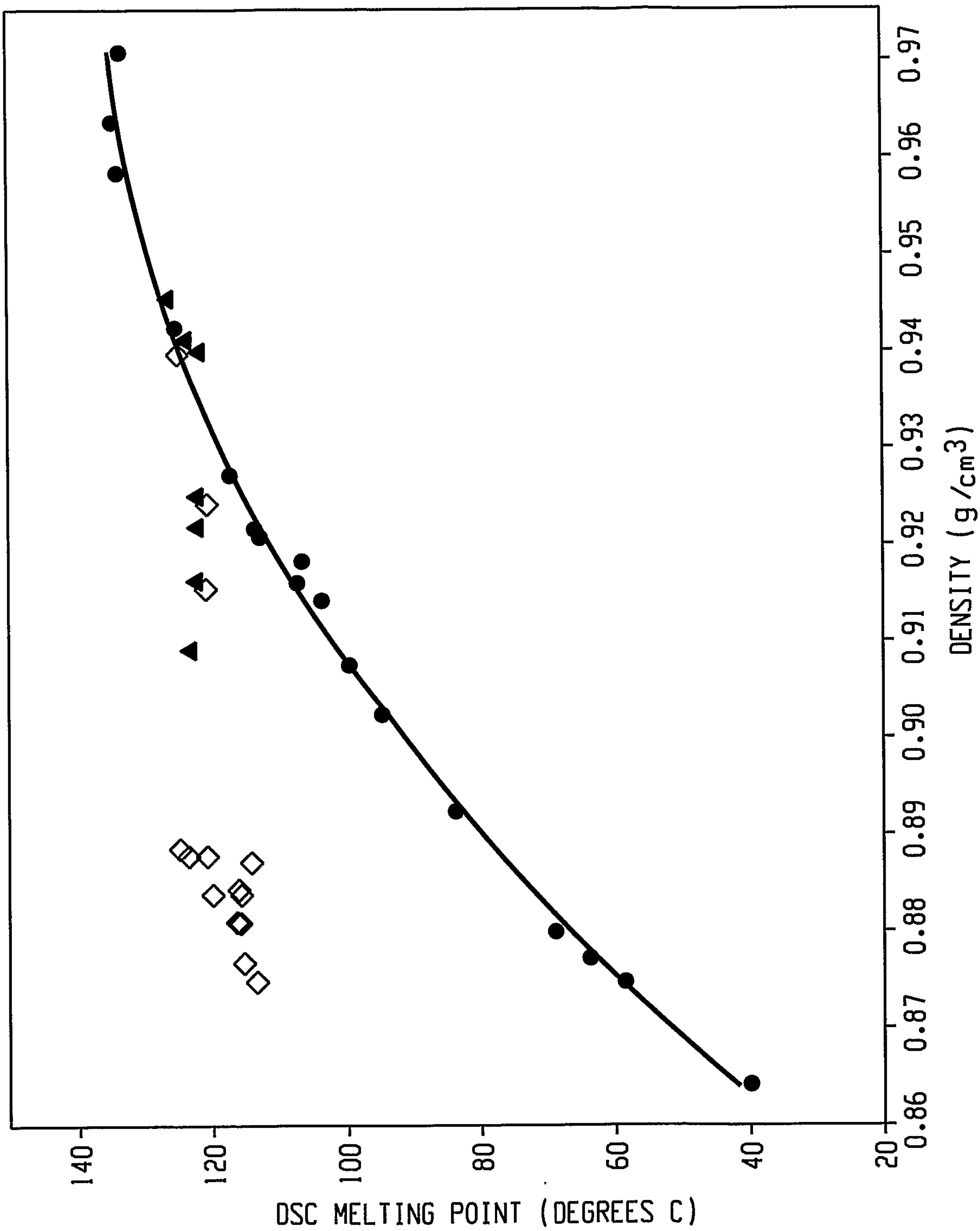
DSC MELTING POINT (DEGREES C)
20
40
60
80
100
120
140
DENSITY (g/cm3)
0.86
0.87
0.88
0.89
0.90
0.91
0.92
0.93
0.94
0.95
0.96
0.97

*Fig. 1*

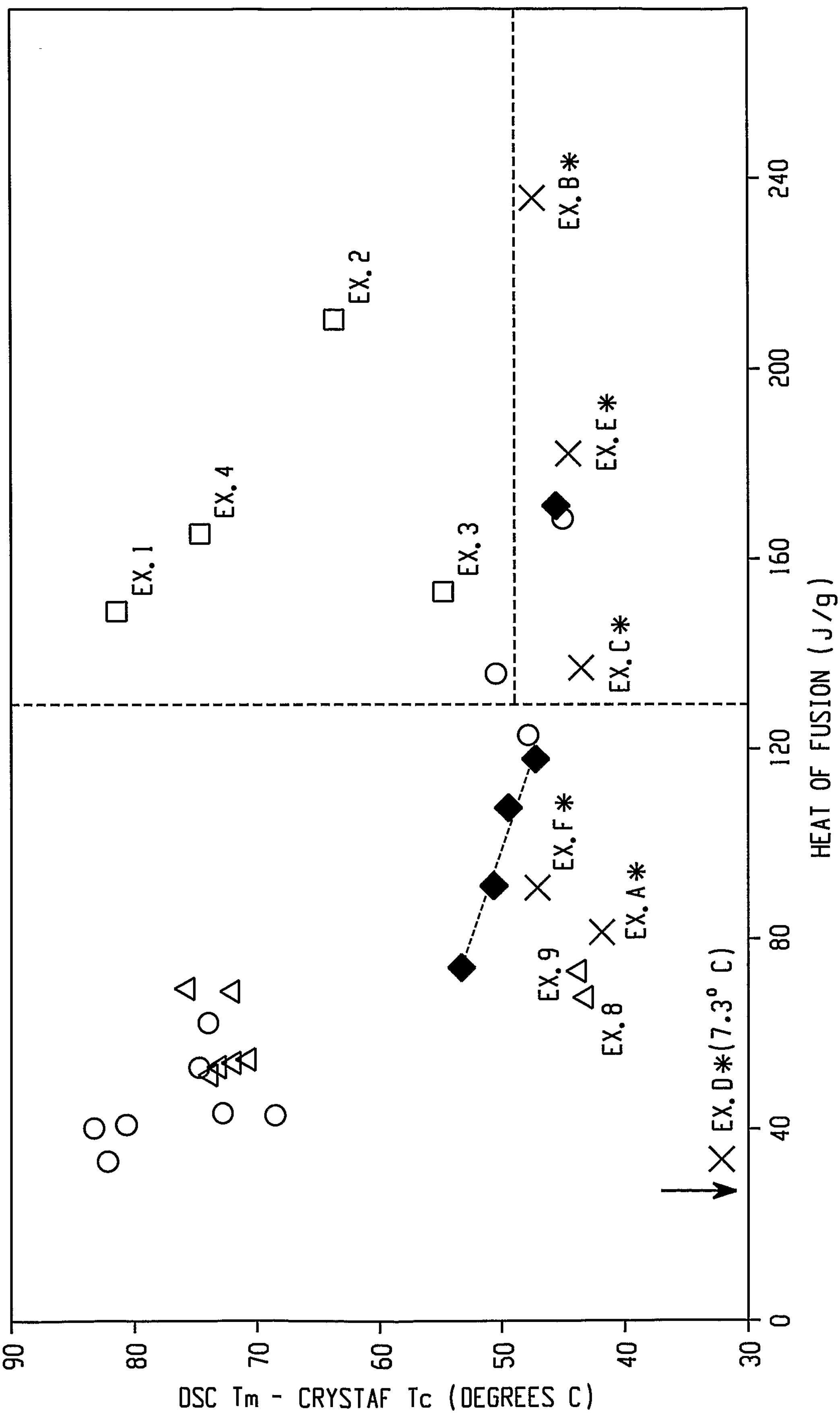
EX. 1
EX. 2
EX. 3
EX. 4
EX. 8
EX. 9
EX. A*
EX. B*
EX. C*
EX. D*(7.3° C)
EX. E*
EX. F*
0
40
80
120
160
200
240
HEAT OF FUSION (J/g)
90
80
70
60
50
40
30
DSC Tm - CRYSTAF Tc (DEGREES C)

Fig. 2

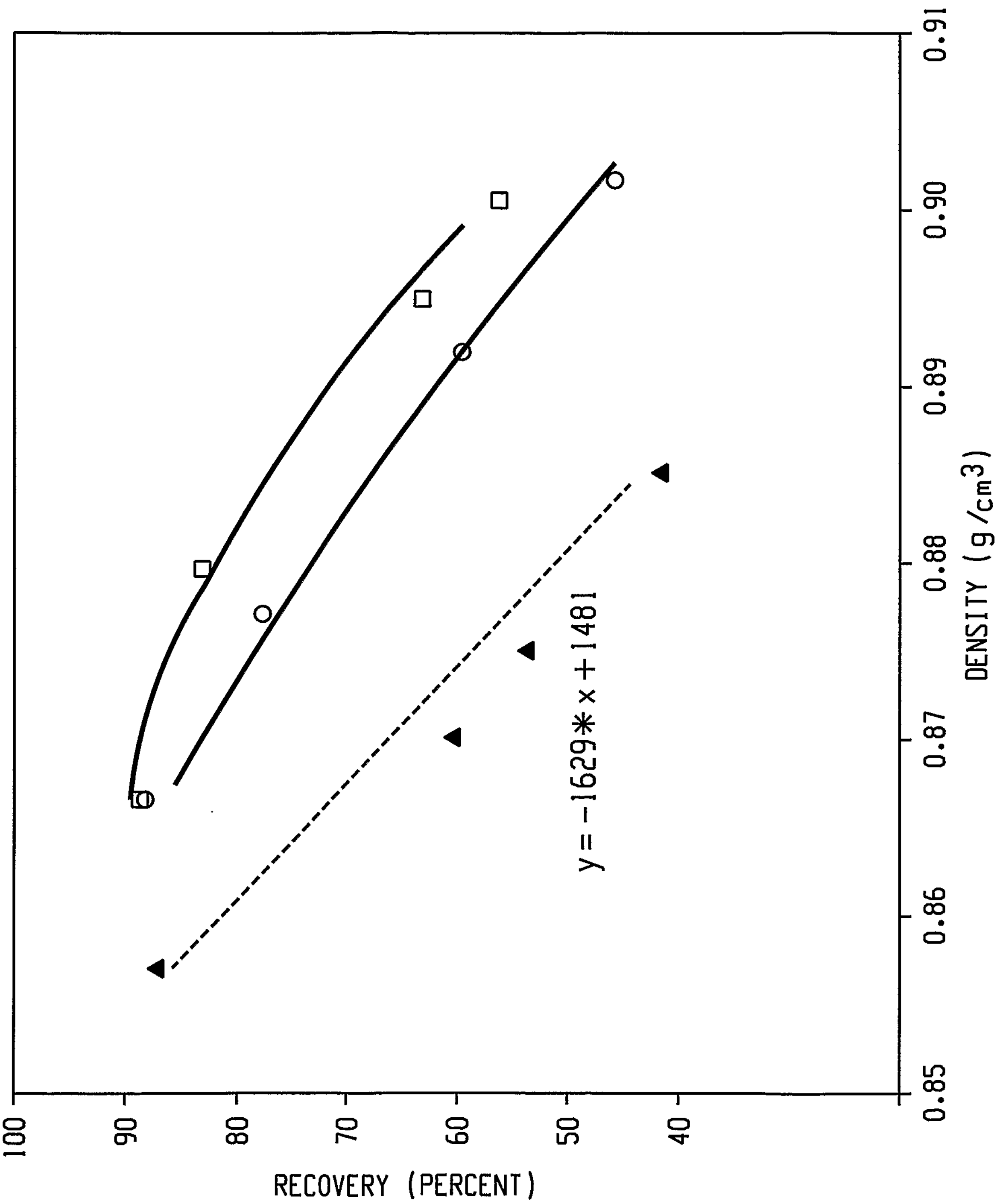

RECOVERY (PERCENT)
100
90
80
70
60
50
40
DENSITY (g/cm3)
0.85
0.86
0.87
0.88
0.89
0.90
0.91
y = -1629 * x + 1481


*Fig. 3*

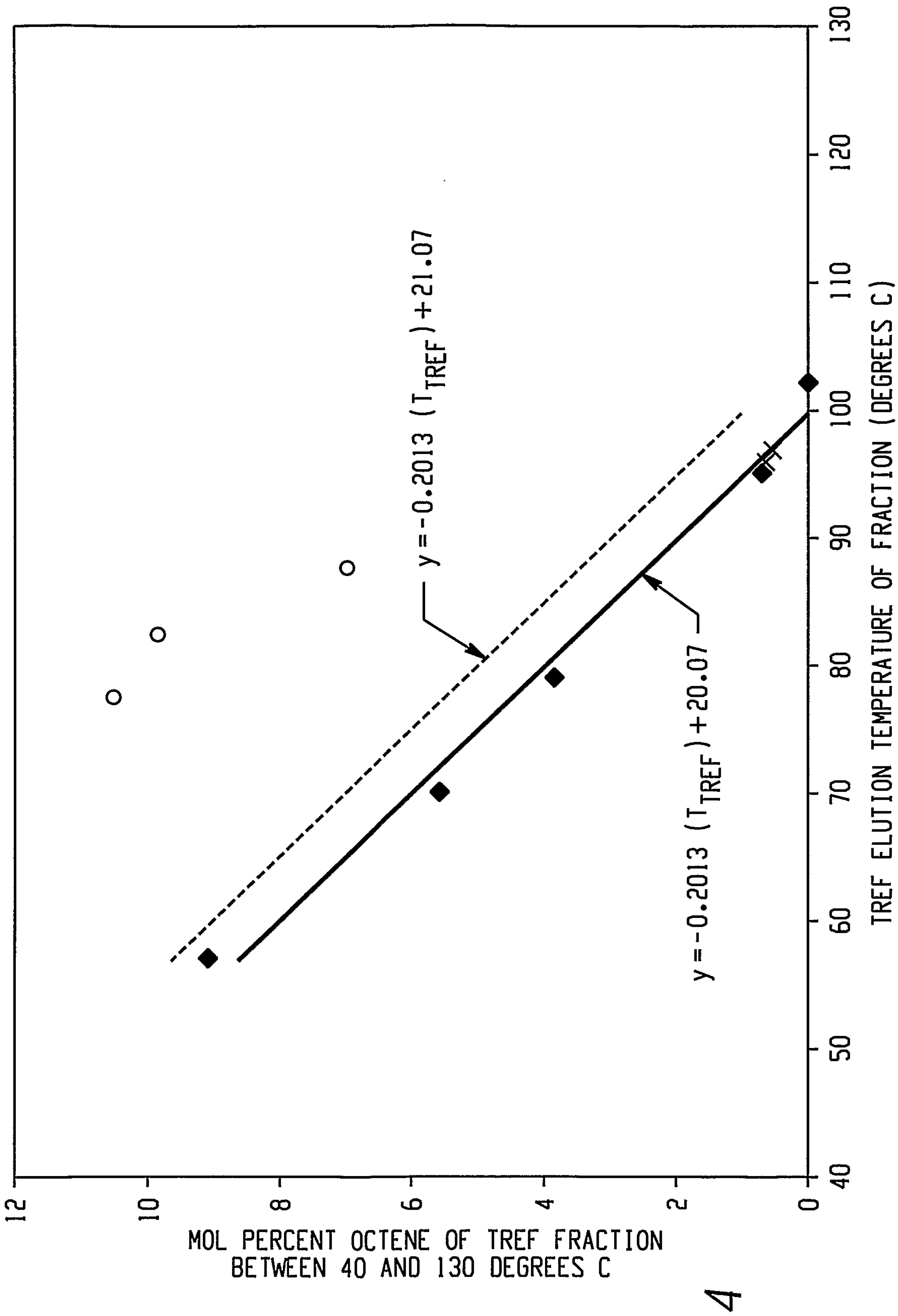
y = -0.2013 (T_TREF) + 21.07
y = -0.2013 (T_TREF) + 20.07
TREF ELUTION TEMPERATURE OF FRACTION (DEGREES C)
MOL PERCENT OCTENE OF TREF FRACTION
BETWEEN 40 AND 130 DEGREES C
40
50
60
70
80
90
100
110
120
130
0
2
4
6
8
10
12

Fig. 4

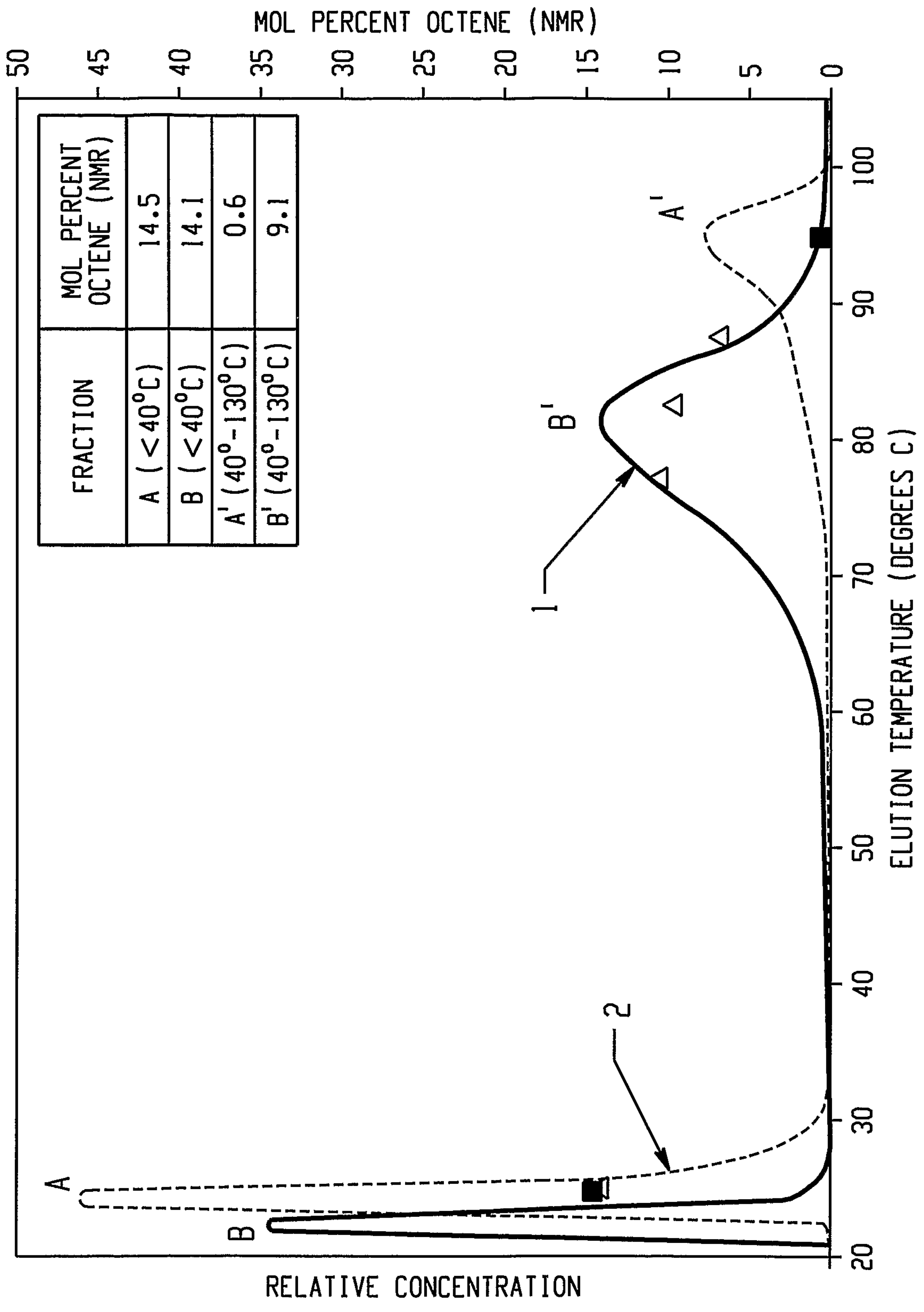
MOL PERCENT OCTENE (NMR)
50
45
40
35
30
25
20
15
10
5
0
FRACTION
MOL PERCENT OCTENE (NMR)
A (<40°C)
14.5
B (<40°C)
14.1
A' (40°-130°C)
0.6
B' (40°-130°C)
9.1
A
B
A'
B'
1
2
RELATIVE CONCENTRATION
20
30
40
50
60
70
80
90
100
ELUTION TEMPERATURE (DEGREES C)

*Fig. 5*

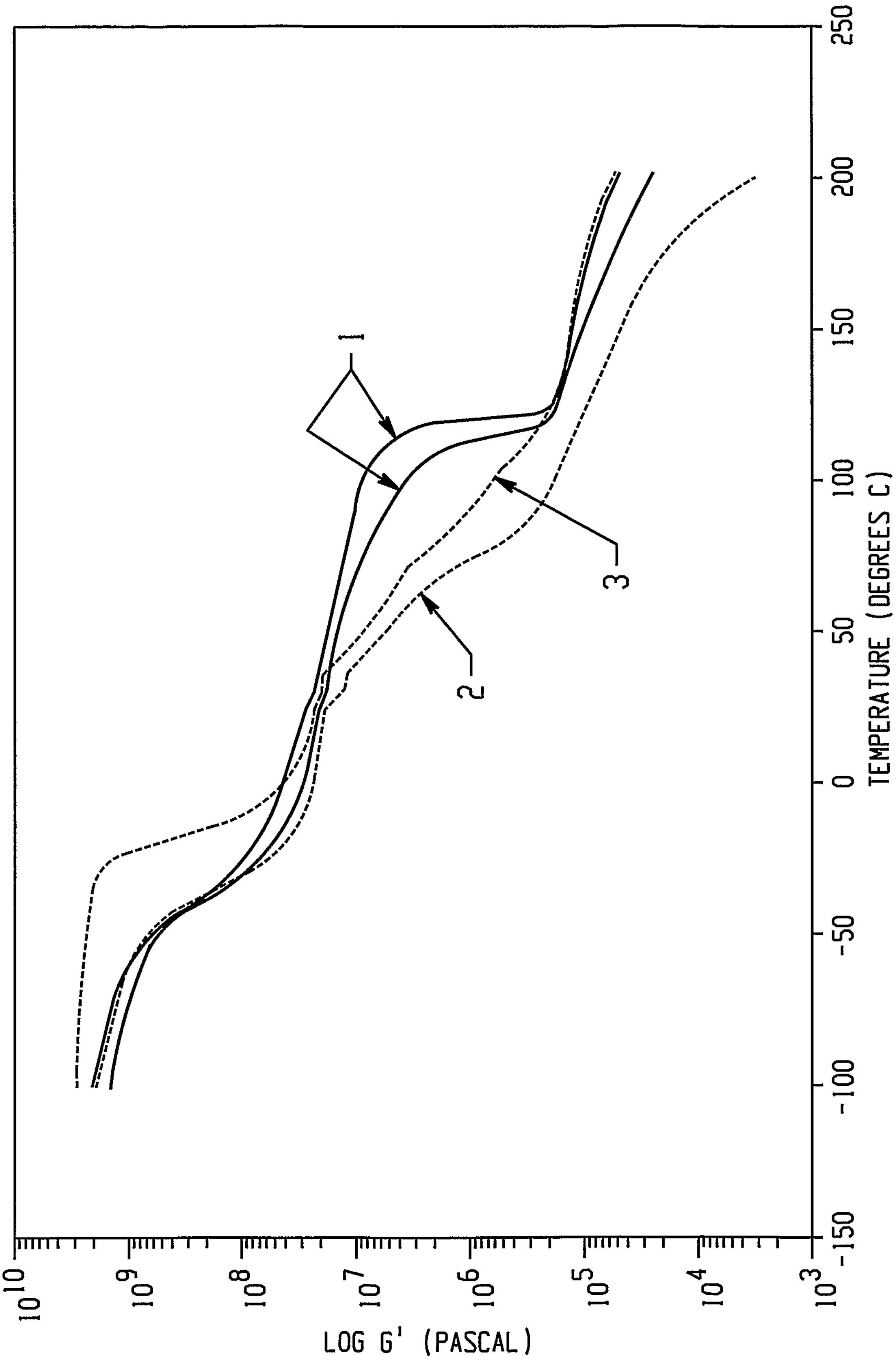
LOG G' (PASCAL)
TEMPERATURE (DEGREES C)
1
2
3
-150
-100
-50
0
50
100
150
200
250
$10^{10}$
$10^{9}$
$10^{8}$
$10^{7}$
$10^{6}$
$10^{5}$
$10^{4}$
$10^{3}$

*Fig. 6*

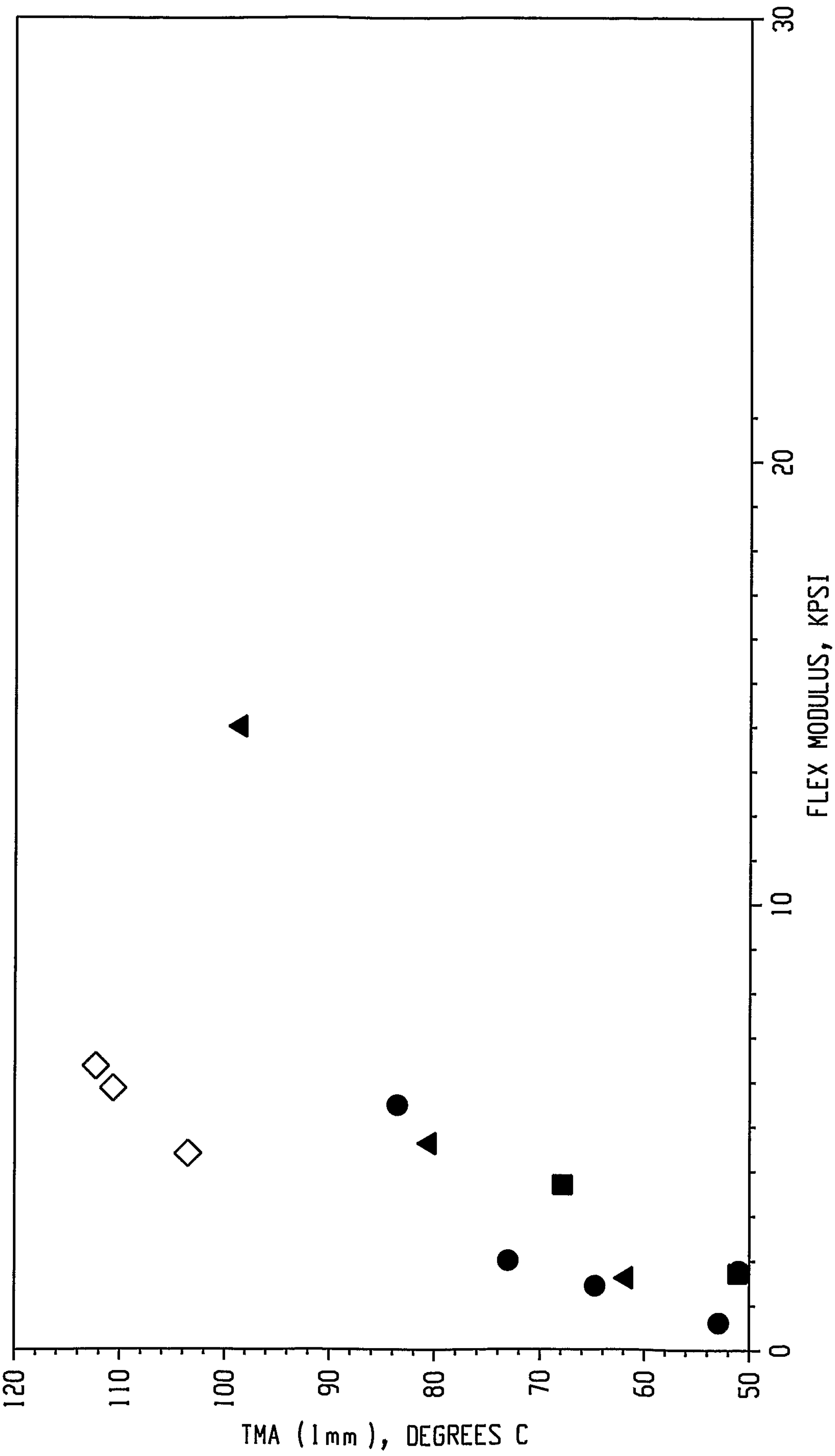
FLEX MODULUS, KPSI
0
10
20
30
TMA (1mm), DEGREES C
120
110
100
90
80
70
60
50

Fig. 7

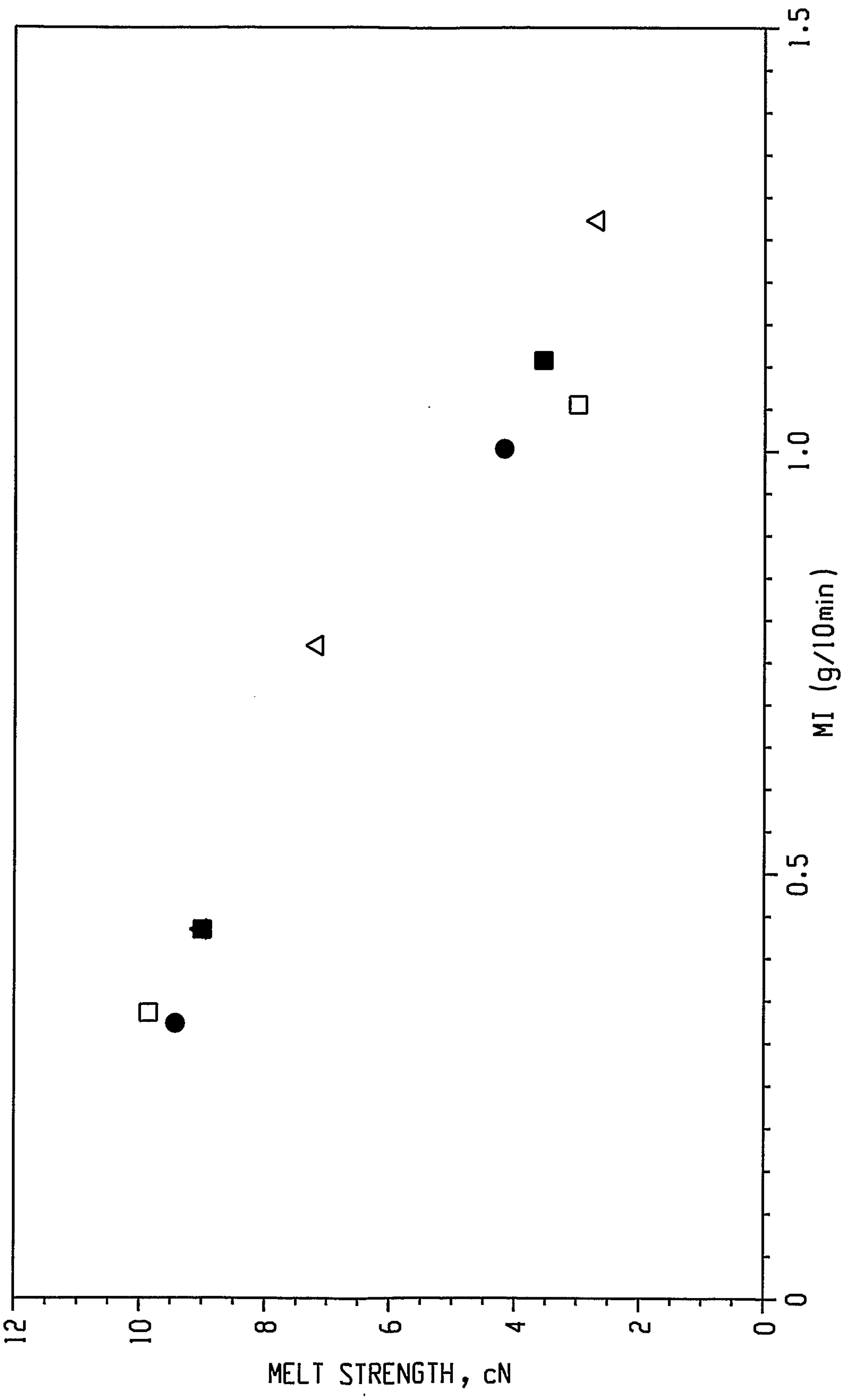


*Fig. 8*

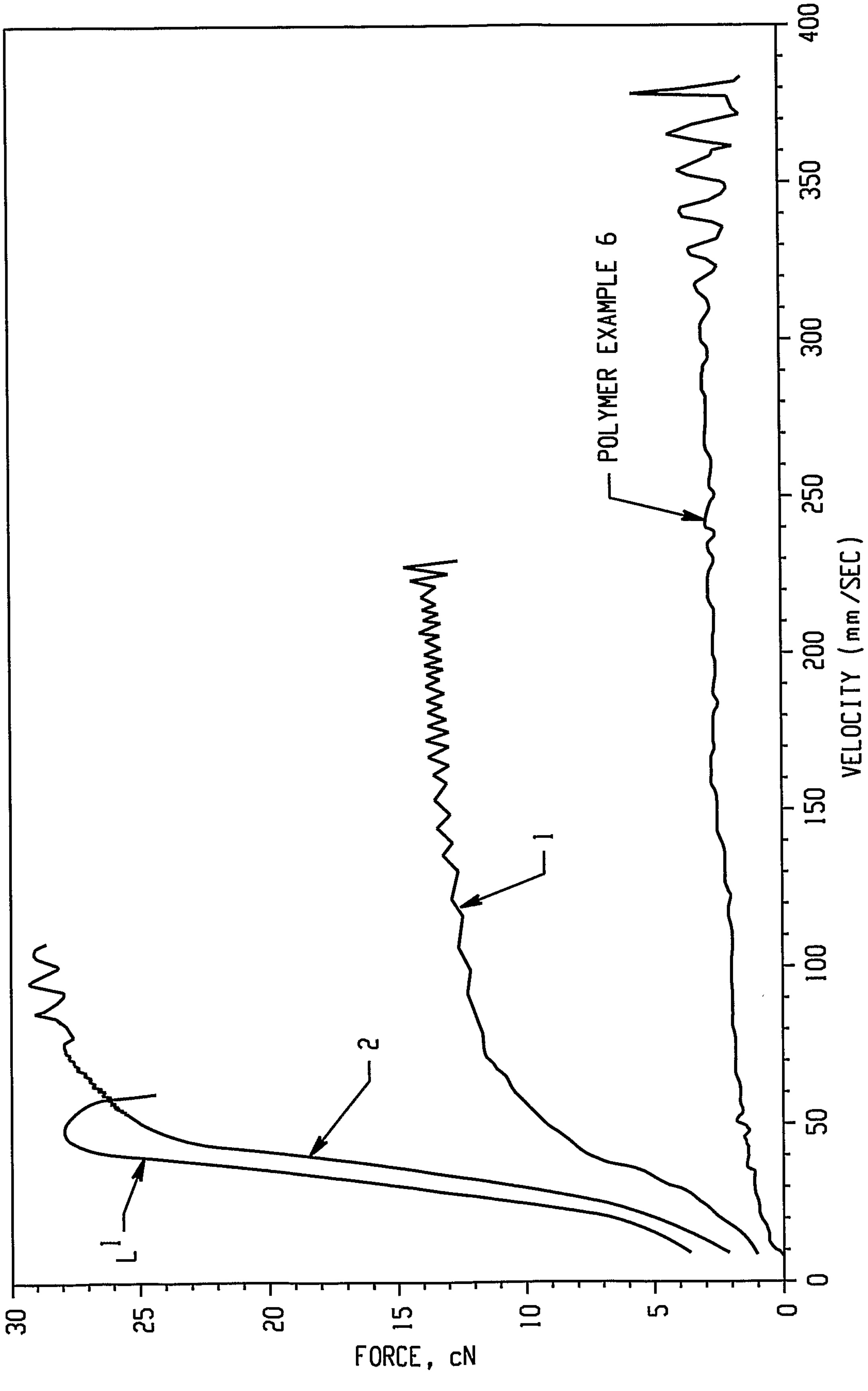

FORCE, cN
0
5
10
15
20
25
30
VELOCITY (mm/SEC)
0
50
100
150
200
250
300
350
400
POLYMER EXAMPLE 6
1
2
L1


Fig. 9

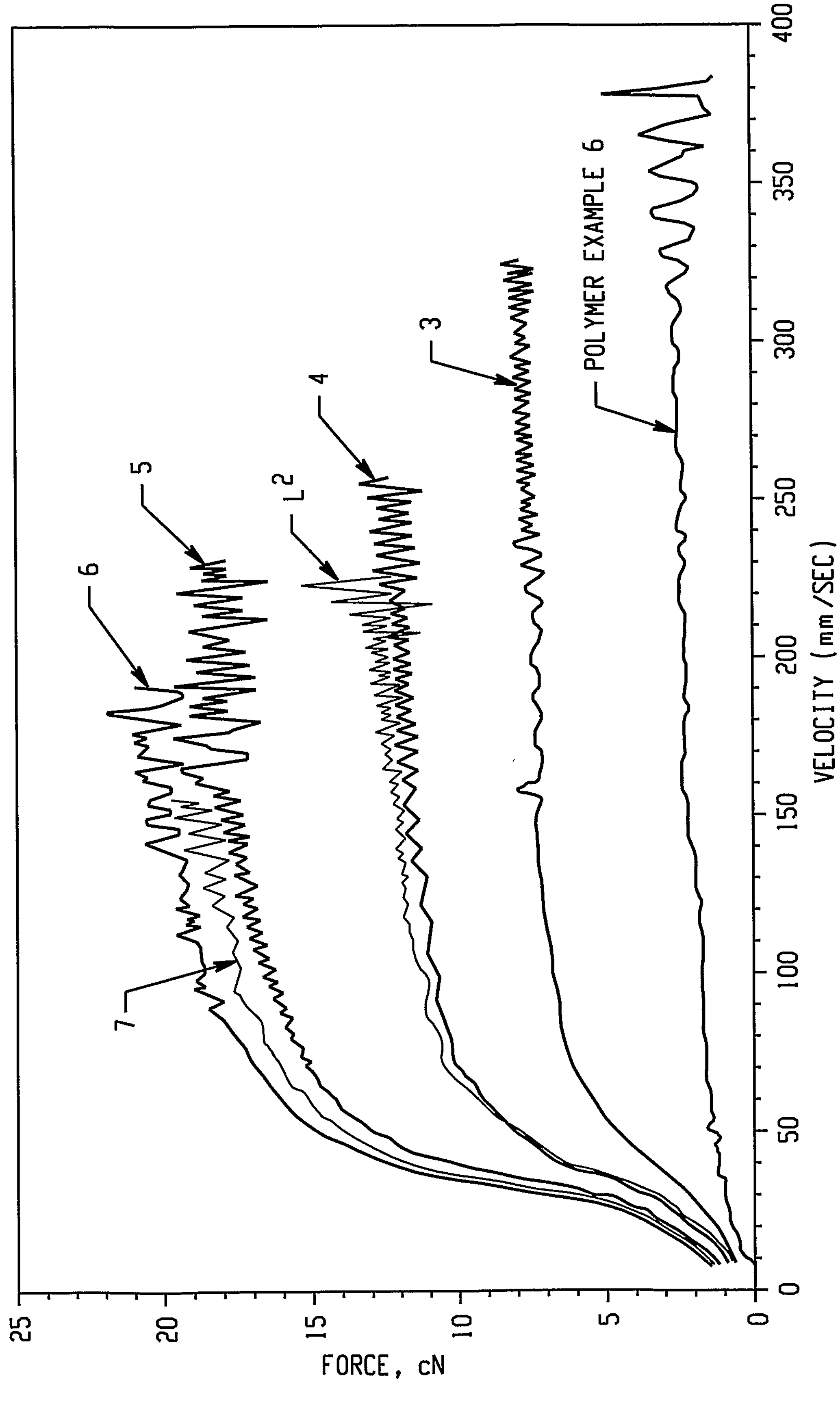
FORCE, cN
VELOCITY (mm/SEC)
0
5
10
15
20
25
0
50
100
150
200
250
300
350
400
7
6
5
L2
4
3
POLYMER EXAMPLE 6

Fig. 10

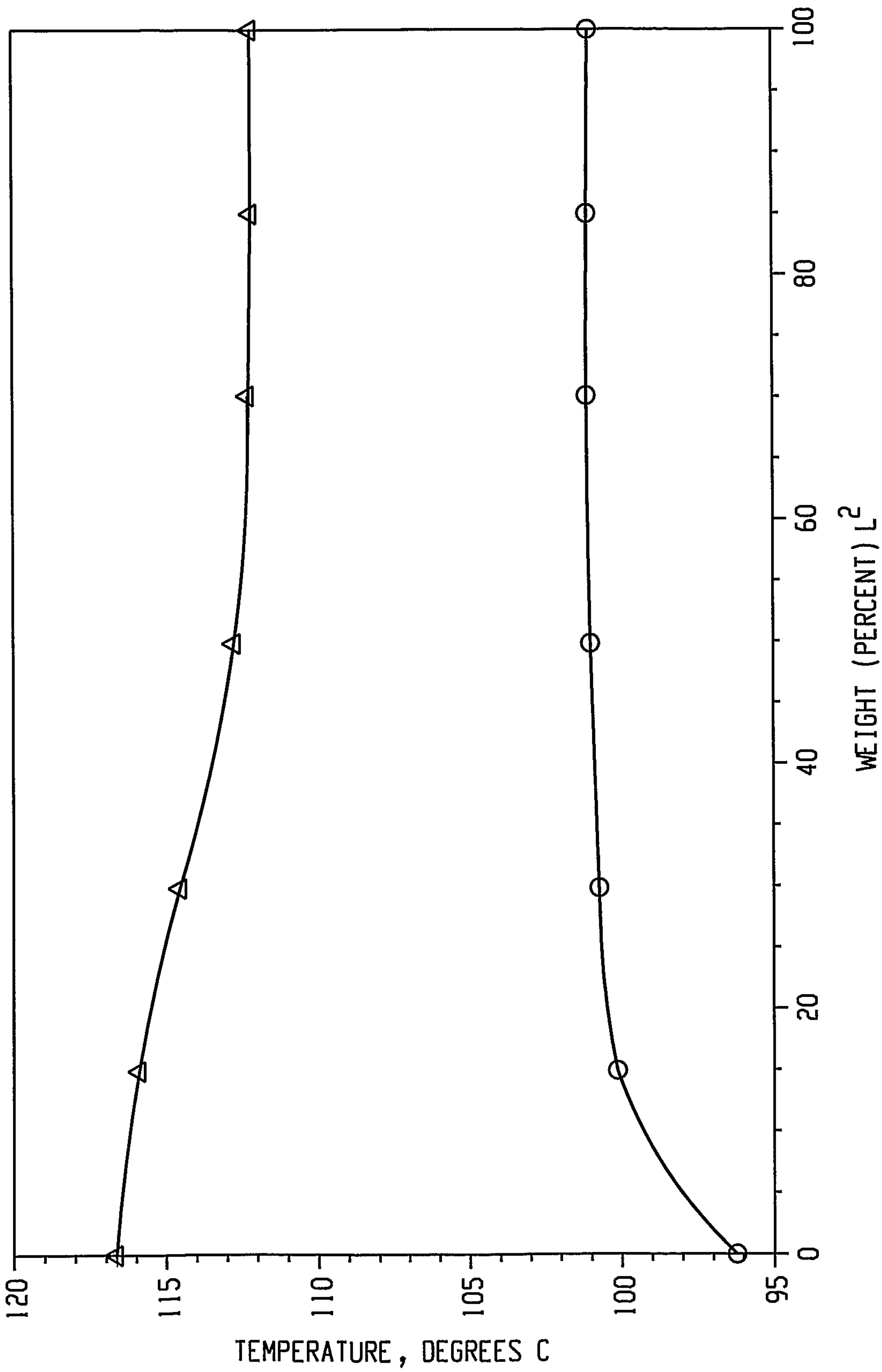

TEMPERATURE, DEGREES C
120
115
110
105
100
95
WEIGHT (PERCENT) L2
0
20
40
60
80
100


*Fig. 11*

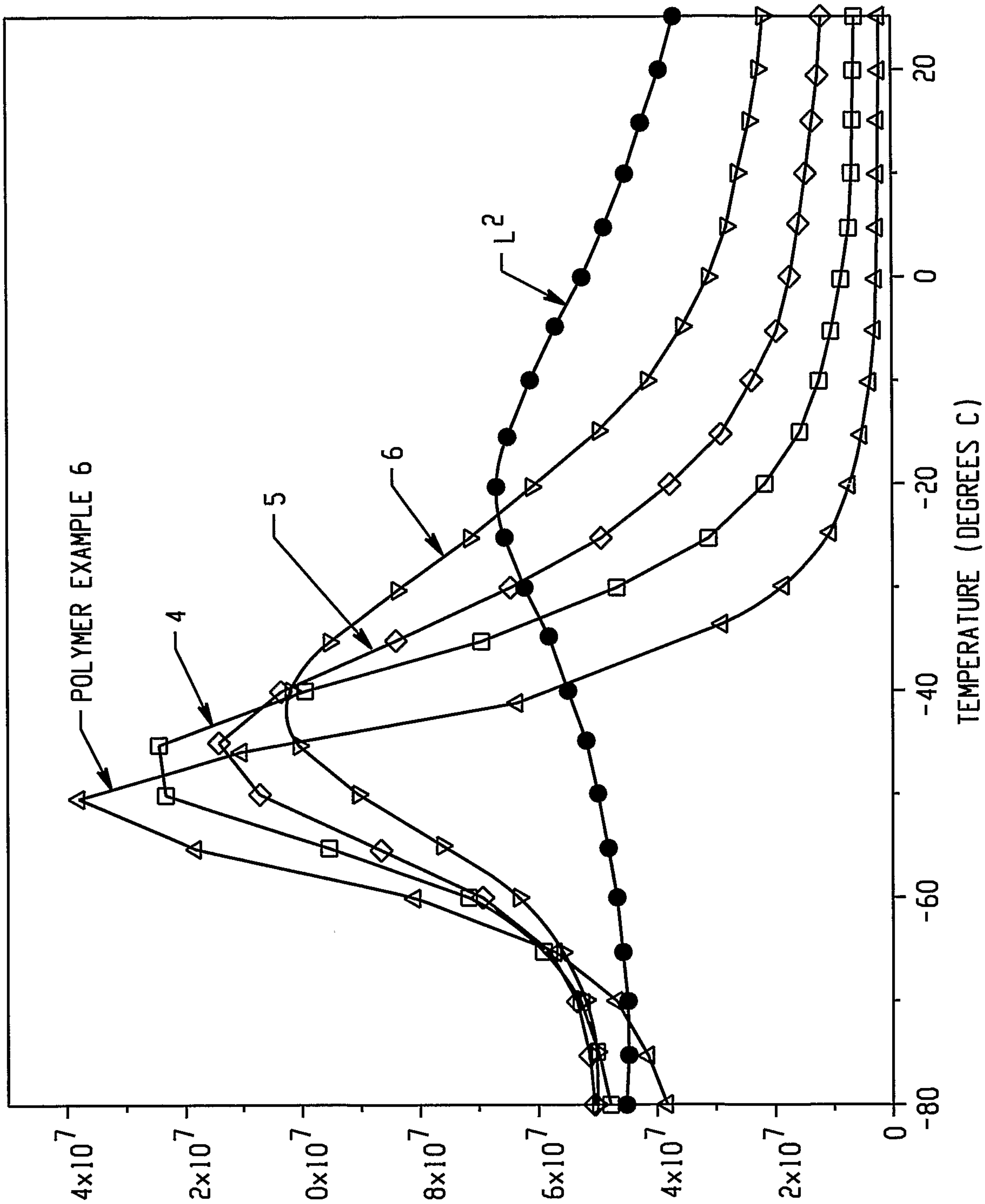
POLYMER EXAMPLE 6
4
5
6
$L^2$
G",Pa
0
$2x10^7$
$4x10^7$
$6x10^7$
$8x10^7$
$10x10^7$
$12x10^7$
$14x10^7$
-80
-60
-40
-20
0
20
TEMPERATURE (DEGREES C)

Fig. 12

POLYMER EXAMPLE 6

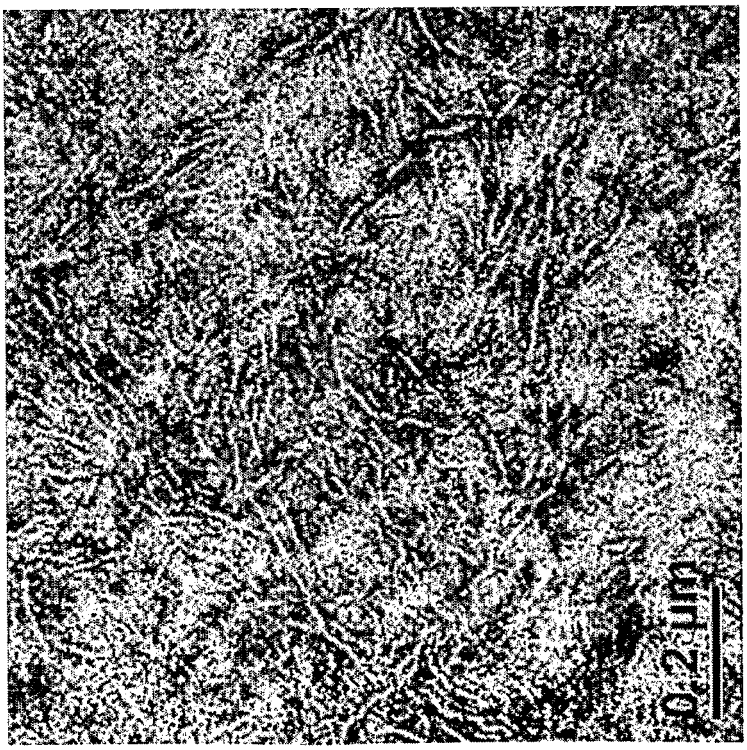


Fig. 13A

L²

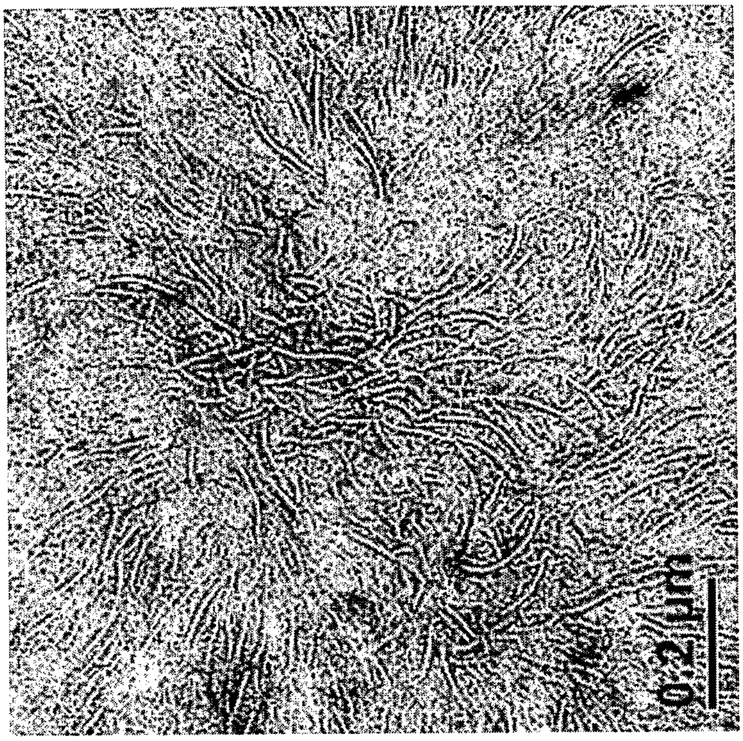


Fig. 13B

4

5

6

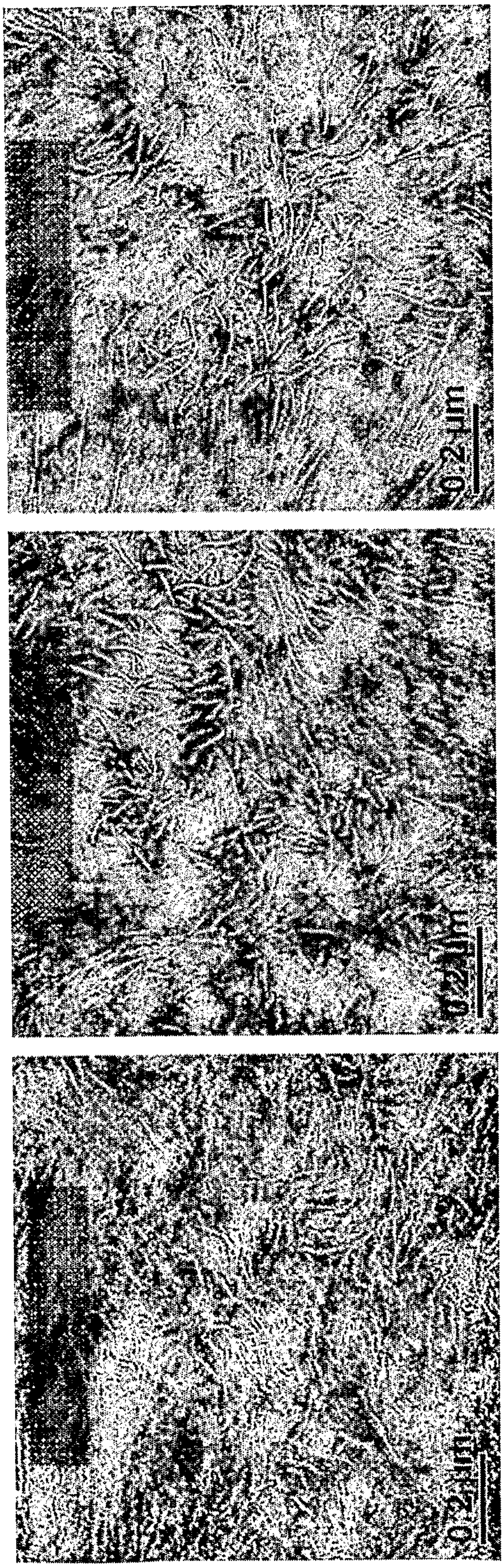


Fig. 13C

Fig. 13D

Fig. 13E

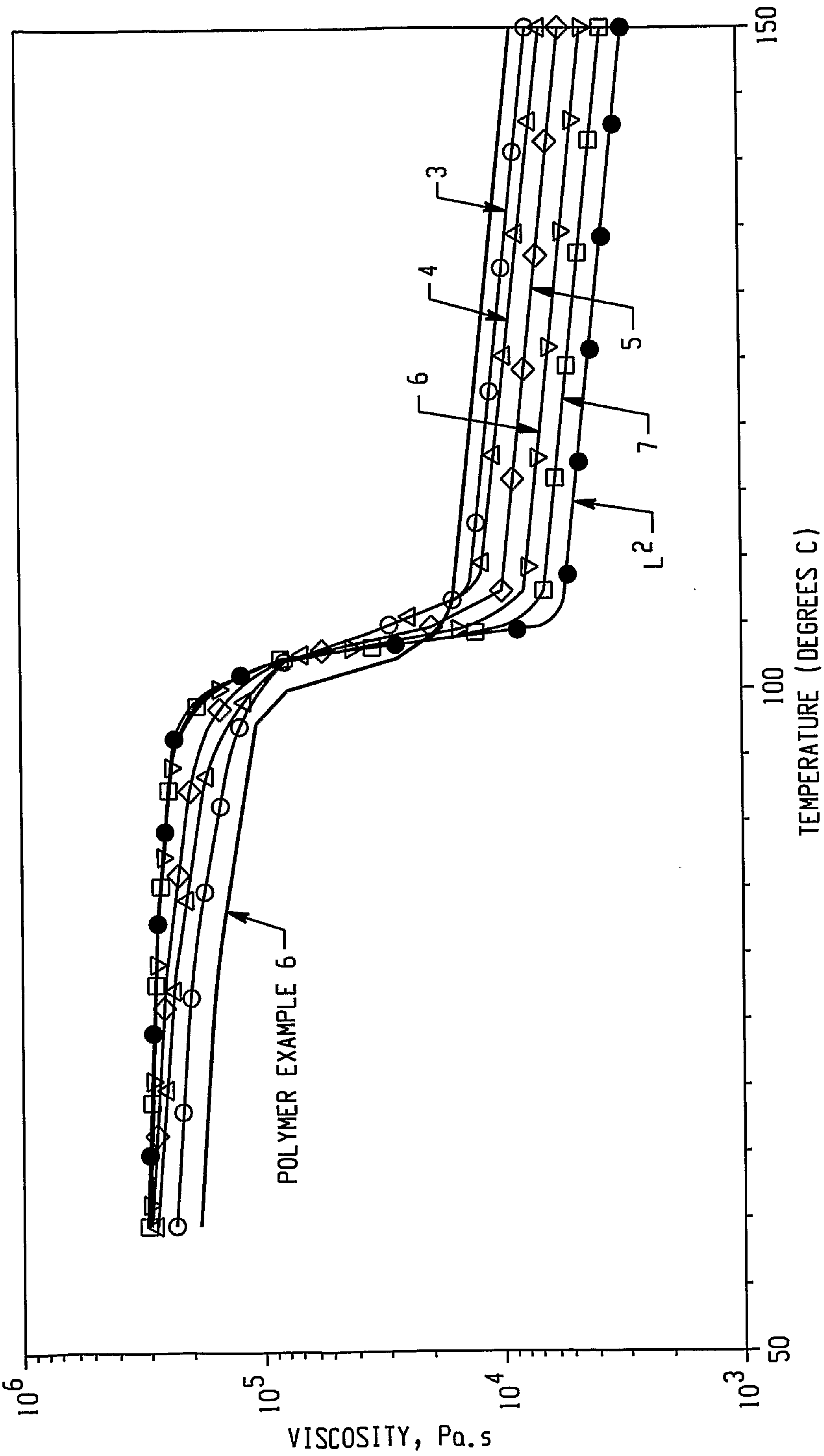
VISCOSITY, Pa.s
$10^6$
$10^5$
$10^4$
$10^3$
TEMPERATURE (DEGREES C)
50
100
150
POLYMER EXAMPLE 6
3
4
5
6
7
L2

Fig. 14

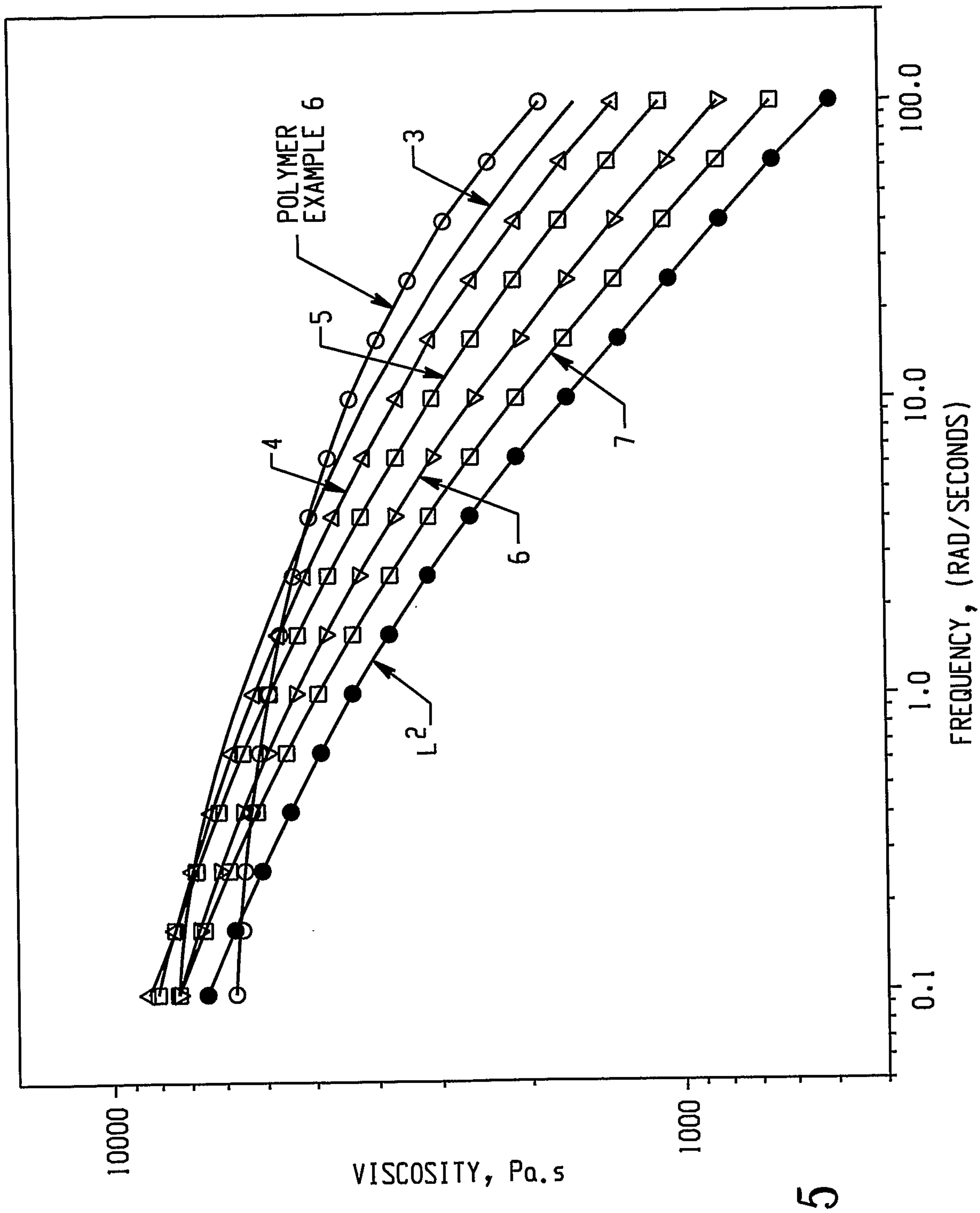
POLYMER
EXAMPLE 6
3
5
4
6
7
2
FREQUENCY, (RAD/SECONDS)
0.1
1.0
10.0
100.0
VISCOSITY, Pa.s
10000
1000

Fig. 15

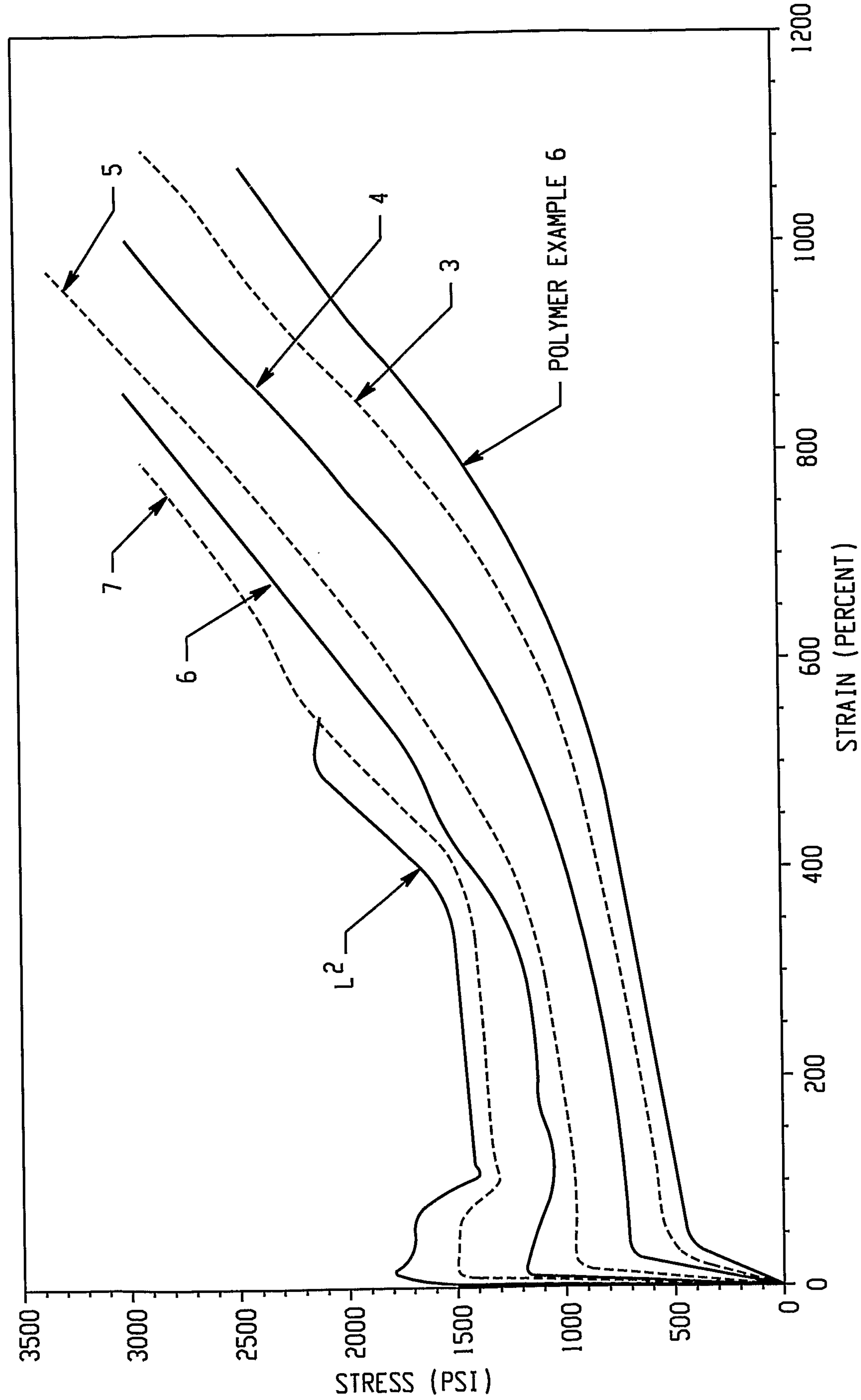
STRESS (PSI)
0
500
1000
1500
2000
2500
3000
3500
STRAIN (PERCENT)
0
200
400
600
800
1000
1200
5
4
3
POLYMER EXAMPLE 6
7
6
L2

Fig. 16

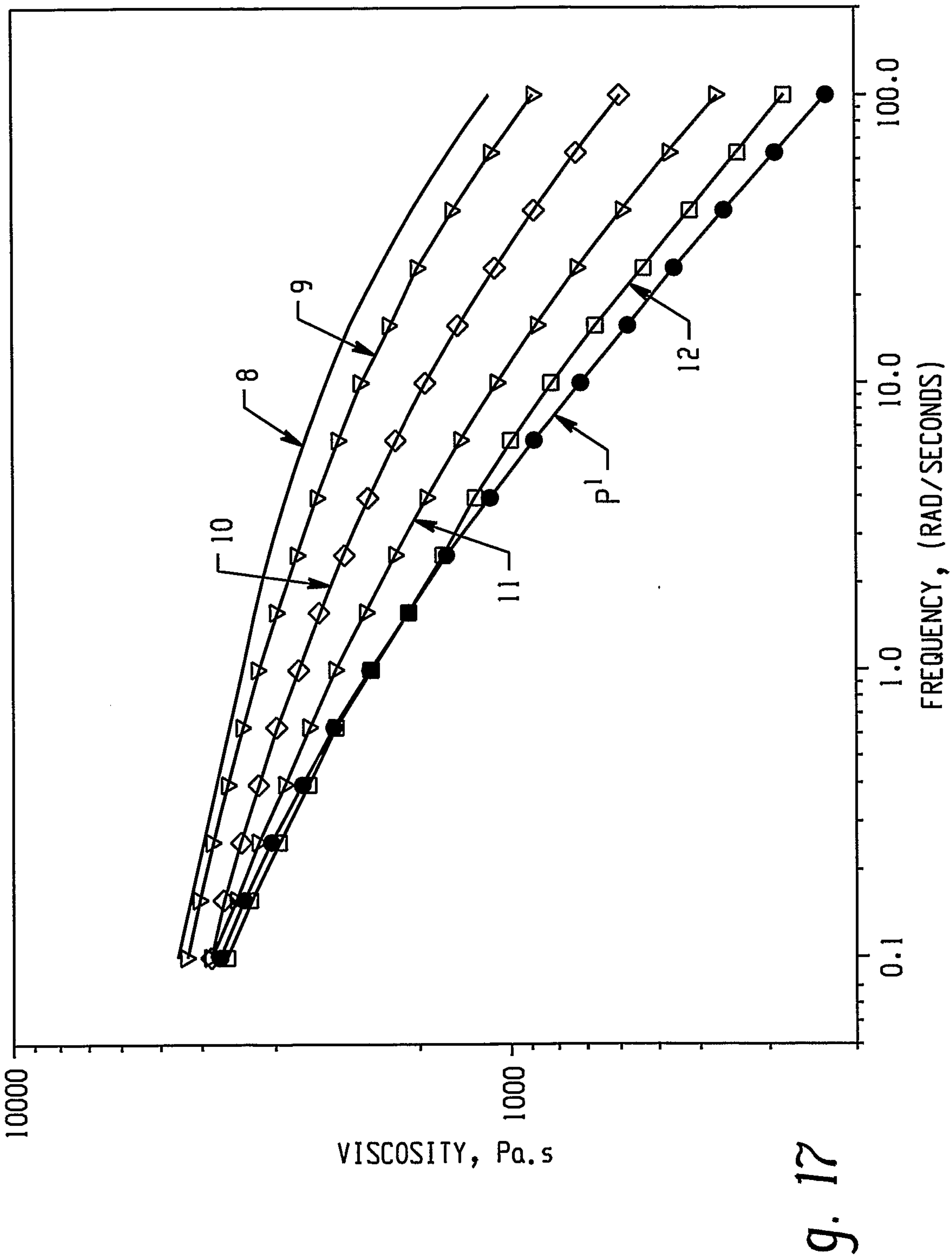
VISCOSITY, Pa.s
10000
1000
FREQUENCY, (RAD/SECONDS)
0.1
1.0
10.0
100.0
8
9
10
11
12
P1

Fig. 17

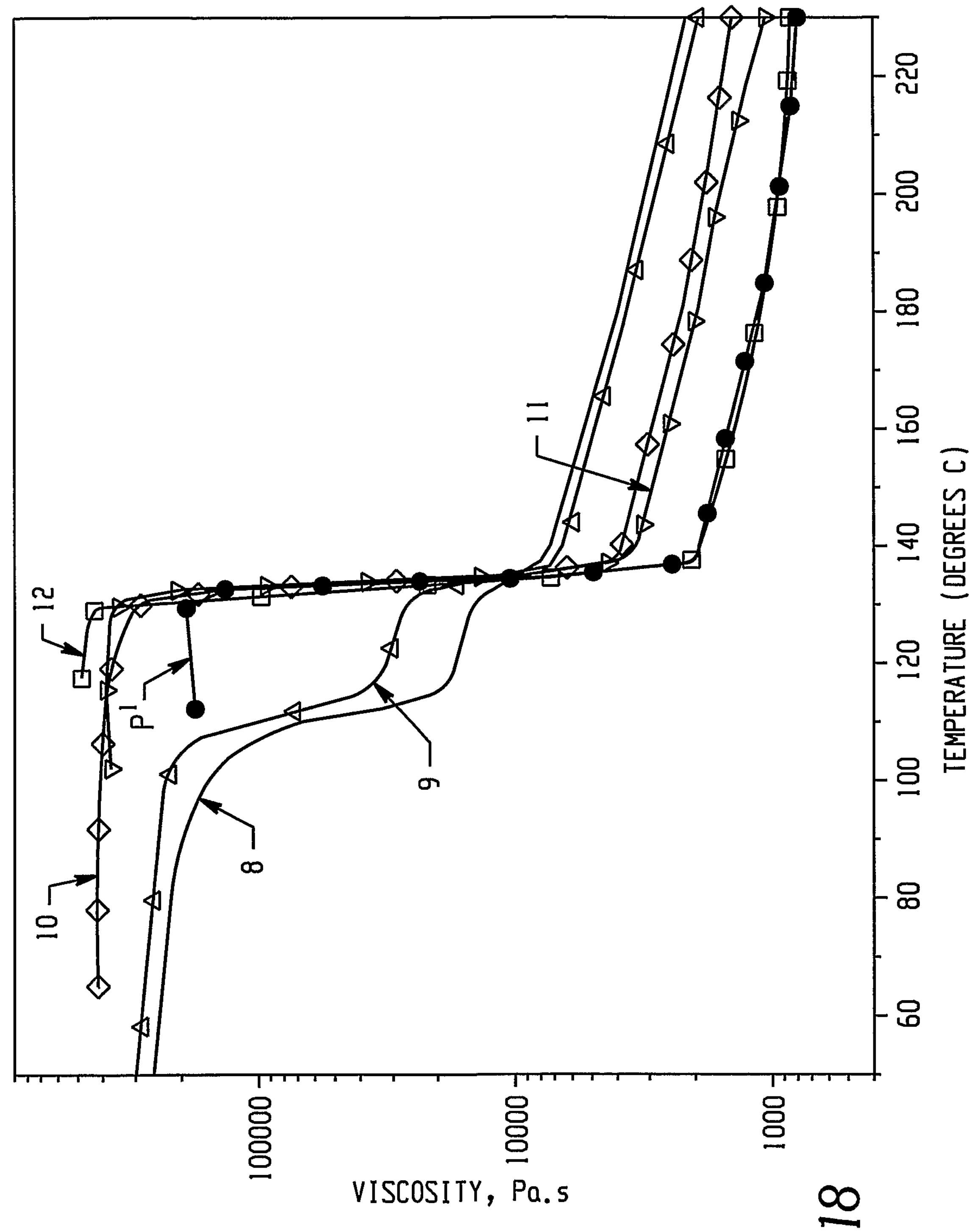
VISCOSITY, Pa.s
100000
10000
1000
TEMPERATURE (DEGREES C)
60
80
100
120
140
160
180
200
220
8
9
10
11
12
P1

Fig. 18

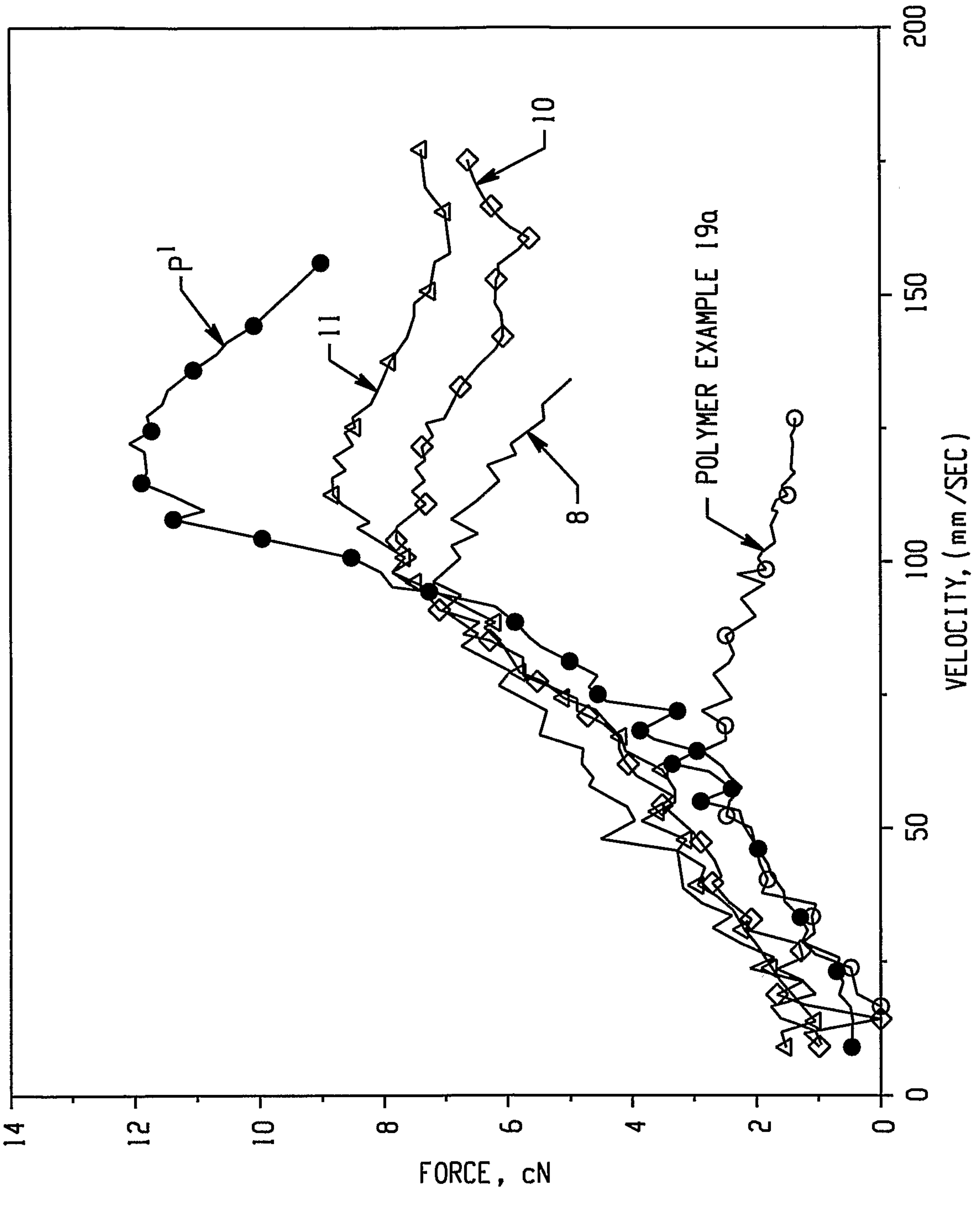
FORCE, cN
VELOCITY, (mm/SEC)
0
2
4
6
8
10
12
14
0
50
100
150
200
P1
11
10
8
POLYMER EXAMPLE 19a

Fig. 19

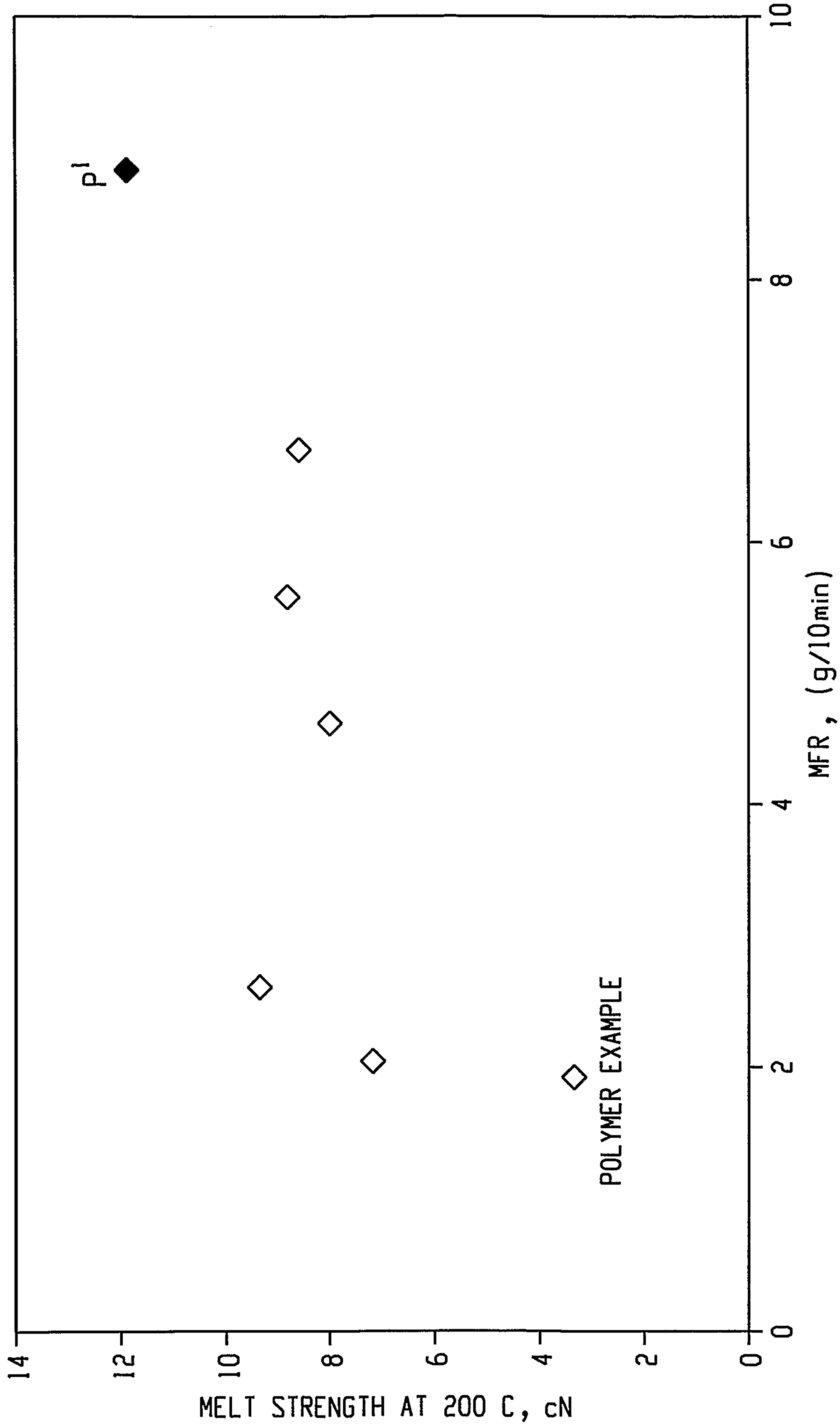
P1
POLYMER EXAMPLE
MELT STRENGTH AT 200 C, cN
MFR , (g/10min)
0
2
4
6
8
10
12
14

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 19993006 P
- US 2005008916 W
- US 2005008915 W
- US 2005008917 W
- WO 0340195 A
- WO 0424740 A
- US 20040010103 A
- US 6268444 B
- US 2003004286 A
- US 4762890 A
- US 4927888 A
- US 4950541 A
- US 6545094 B
- WO 2005023912 A
- US 2004029124 W
- US 4599392 A
- US 6359073 B
- US 01723000 A
- WO 0078858A2 A2
- US 13357698 A
- US 05771397 P
- US 3893989 A
- US 4113802 A
- US 4434264 A
- US 4459385 A
- US 4489195 A
- US 4493923 A
- US 4508872 A
- US 4535125 A
- US 4588775 A
- US 4843129 A
- US 4966944 A
- US 5011891 A
- US 5034449 A
- US 5066723 A
- US 5177147 A
- US 5314746 A
- US 5336721 A
- US 5367022 A
- US 6207754 B
- US 6268064 B
- WO 9910424 A
- US 4311628 A
- US 4521566 A
- US 4916198 A
- US 5047446 A
- US 5047485 A
- US 5414027 A
- US 5849409 A
- WO 0153078 A
- WO 9720888 PCT
- WO 9720889 PCT
- WO 9910423 PCT
- WO 9910424 PCT
- WO 9916797 PCT
- US 6103803 A
- US 20020132923 A1
- US 6803014 B
- US 4152189 A, Guerin
- US 6682811 B
- US 5783620 A
- US 5951930 A
- US 5382395 A
- US 4256685 A
- US 5468530 A
- US 4798081 A
- US 59199883 B
- US 6395671 B
- US 6248540 B
- US 6030917 A
- US 6362309 B
- US 6306658 B
- US 6316663 B
- WO 2006101966 A


### Non-patent literature cited in the description


- Radiation Effects in Materials. Pergamon Press, 1960
- **MARKOVICH, RONALD P. ; HAZLITT, LONNIE G. ; SMITH, LINLEY.** Development of gel-permeation chromatography-Fourier transform infrared spectroscopy for characterization of ethylene-based polyolefin copolymers. *Polymeric Materials Science and Engineering,* 1991, vol. 65, 98-100
- **DESLAURIERS, P.J. ; ROHLFING, D.C. ; SHIEH, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **ELLIOTT et al.** *J. App. Poly. Sci.,* 1970, vol. 14, 2947-2963

- **E.P. MOORE, JR.** Polypropylene Handbook. Hanser Publishers, 1996, 220-221
- **ZWEIFEL HANS et al.** Plastics Additives Handbook. Hanser Gardner Publications, 2001
- **ZWEIFEL HANS et al.** Plastics Additives Handbook. Hanser Gardner Publications, 2001, 601-608
- **ZWEIFEL HANS et al.** Plastics Additives Handbook. Hanser Gardner Publications, 2001, 585-600
- **GEORGE WYPYCH.** Handbook of Plasticizers. ChemTec Publishing, 2004
- **ZWEIFEL HANS et al.** Plastics Additives Handbook. Hanser Gardner Publications, 2001, 1-140
- **ZWEIFEL HANS et al.** Plastics Additives Handbook. Hanser Gardner Publications, 2001, 141-426
- **ZWEIFEL HANS et al.** Plastics Additives Handbook. Hanser Gardner Publications, 2001, 813-882
- **ZWEIFEL HANS et al.** Plastics Additives Handbook. Hanser Gardner Publications, 2001, 901-948
- **ZWEIFEL HANS et al.** Plastics Additives Handbook. Hanser Gardner Publications, 2001, 511-552
- **ZWEIFEL HANS et al.** Plastics Additives Handbook. Hanser Gardner Publications, 2001, 627-646
- **ZWEIFEL HANS et al.** Plastics Additives Handbook. Hanser Gardner Publications, 2001, 725-812
- **C. RAUWENDAAL.** Polymer Extrusion. Hanser Publishers, 1986, 322-334
- **C. RAUWENDAAL.** Polymer Extrusion. Hanser Publishers, 1986
- **M.J. STEVENS.** Extruder Principals and Operation. Ellsevier Applied Science Publishers, 1985
- **BEAUMONT et al.** Successful Injection Molding: Process, Design, and Simulation. Hanser Gardner Publications, 2002
- **HANS-GEORG ELIAS.** An Introduction to Plastics. Wiley-VCH, 2003, 161-165
- **GLENN BEALL.** Rotational Molding : Design, Materials & Processing. Hanser Gardner Publications, 1998
- **NORMAN C. LEE.** Understanding Blow Molding. Hanser Gardner Publications, 2000
- **WILLIAMS ; WARD.** *J. Polym. Sci., Polym. Let.,* 1968, vol. 6, 621
- **WILDE, L. ; RYLE, T.R. ; KNOBELOCH, D.C. ; PEAT, I.R.** Determination of Branching Distributions in Polyethylene and Ethylene Copolymers. *J. Polym. Sci.,* 1982, vol. 20, 441-455
- **RANDALL, J.C.** *JMS-Rev. Macromol. Chem. Phys.,* 1989, vol. C29, 201-317